# EUROPEAN PATENT APPLICATION

(11) **EP 4 491 085 A1**
(43) Date of publication of application: **15.01.2025**
(21) Application number: 23765810.9
(22) Date of filing: 24.02.2023
(51) Int. Cl.: A47L 11/40, H02J 7/00

(54) **METHOD FOR CHARGING AND DISCHARGING CLEANING DEVICE, AND CLEANING SYSTEM**

(30) Priority: 11.03.2022 CN 202210239635; 11.03.2022 CN 202210239641; 30.03.2022 CN 202210334684
(71) Applicant: Tineco Intelligent Technology Co., Ltd., Suzhou, Jiangsu 215168 (CN)
(72) Inventor: LV, Hao, Suzhou, Jiangsu 215168 (CN); SUN, Jian, Suzhou, Jiangsu 215168 (CN); JIANG, Hongbin, Suzhou, Jiangsu 215168 (CN); HUANG, Jian, Suzhou, Jiangsu 215168 (CN); WANG, Yuan, Suzhou, Jiangsu 215168 (CN); CHAO, Fu, Suzhou, Jiangsu 215168 (CN); ZHOU, Chunfeng, Suzhou, Jiangsu 215168 (CN); BEN, Fulai, Suzhou, Jiangsu 215168 (CN); LIANG, Zhiyong, Suzhou, Jiangsu 215168 (CN); XU, Xisheng, Suzhou, Jiangsu 215168 (CN)
(74) Representative: Renaudo, Adrien Hanouar
(86) International application number: PCT/CN2023/078149
(87) International publication number: WO 2023/169232

(57) **Abstract**

The disclosure provides a charging and discharging method for a cleaning device, and a cleaning system. The charging and discharging method for a cleaning device includes: operating in a self-cleaning mode to clean a self-cleaning object of the cleaning device; and supplying at least part of a current from a charging power supply to a workload in the self-cleaning mode. In the solution according to the disclosure, the at least part of the current from the charging power supply is supplied to the workload in the self-cleaning mode, thus reducing the power consumption of a battery in the self-cleaning mode and prolonging the overall battery life of the battery.

## Description

### CROSS-REFERENCE TO RELATED APPLICATIONS

This disclosure refers to the Chinese patent applications in the table below, which are hereby incorporated by reference in their entirety.

| Priority Date | Priority Number | Patent Title |
|---|---|---|
| 2022-03-11 | 202210239641.7 | Charging and Discharging Method for Cleaning Device, and Cleaning System |
| 2022-03-11 | 202210239635.1 | Self-cleaning Method for Cleaning Device, and Cleaning Device |
| 3/30/2022 | 202210334684.3 | Self-Cleaning Method for Cleaning Device, and Cleaning Device |

### TECHNICAL FIELD

The present disclosure relates to the field of household appliances, in particular to a charging and discharging method for a cleaning device, and a cleaning system.

### BACKGROUND ART

Currently, floor scrubbers available on the market are equipped with a self-cleaning function. Once a floor scrubber has been used, dirt tends to accumulate on a rolling brush and in the pipeline. A self-cleaning process of the floor scrubber can be initiated by pressing a button. A suction motor, a rolling brush motor, a water pump, and a disinfection module (e.g., a device with a disinfection function) work together to facilitate the self-cleaning function.

It is generally prohibited to charge the conventional floor scrubbers (charging circuits are in a non-enabled state) during the self-cleaning process, and the entire process is powered by batteries. Users typically engage in self-cleaning of the floor scrubbers after use. Since these floor scrubbers are battery-powered, the remaining charge level may be insufficient after being used for scrubbing. If the floor scrubbers are self-cleaned at this moment, the self-cleaning process will be terminated due to the battery running out midway.

### SUMMARY

In view of the above-mentioned problems, the present disclosure provides a charging and discharging method for a cleaning device, as well as a cleaning system, aimed at solving or at least partially addressing the above-mentioned problems.

In one embodiment of the present disclosure, a charging and discharging method for a cleaning device is provided, the method including:
- operating in a self-cleaning mode to clean a self-cleaning object of the cleaning device; and
- supplying at least part of a current from a charging power supply to a workload in the self-cleaning mode.

In another embodiment of the present disclosure, it is provided a charging and discharging method for a cleaning device. The method includes:
- operating in a self-cleaning mode to clean a self-cleaning object of the cleaning device, wherein the self-cleaning mode includes multiple phases; and
- charging a battery of the cleaning device with the current from a charging power supply in at least part of the phases among the multiple phases.

In still another embodiment of the present disclosure, it is also provided a charging and discharging method for a cleaning device. The charging and discharging method for a cleaning device includes:
- operating in a self-cleaning mode to clean a self-cleaning object of the cleaning device, wherein the self-cleaning mode includes multiple phases;
- determining, in at least part of the phases among the multiple phases, at least one load operating in the current phase of the cleaning device; and
- selecting a corresponding power supply for the at least one load from a plurality of power supplies;
- wherein, the plurality of power supplies include a power supply from the charging power supply and a battery of the cleaning device.

In yet another embodiment of the present disclosure, it is also provided a cleaning system. The cleaning system includes:
- a base equipped with a first electrical connection port, which is electrically connectable to a charging power supply via an electrical connector; and
- a cleaning device equipped with a controller and a second electrical connection port, the controller being electrically connected to the second electrical connection port, and the second electrical connection port being electrically connected to the first electrical connection port when the cleaning device is docked on the base;
- wherein, the controller is configured to perform the steps disclosed in the embodiments of the charging and discharging methods for a cleaning device.

In the technical solution provided by the embodiment of the present disclosure, when the cleaning device operates in the self-cleaning mode, at least part of the current from the charging power supply is supplied to the workload in the self-cleaning mode. This reduces the power consumption of the battery, and prolongs its life during the self-cleaning process. While ensuring that the cleaning device successfully completes the self-cleaning process, it can effectively prevent the cleaning device from failing in self-cleaning process due to the battery running out. This improvement enhances the user experience.

In the technical solution disclosed by another embodiment of the present disclosure, when the cleaning device operates in the self-cleaning mode, according to the current phase of the cleaning device, corresponding power supplies are selected from a plurality of power supplies in real-time for at least one load operating in the current phase of the cleaning device. Here, the plurality of power supplies may include a power supply from the charging power supply and the battery of the cleaning device. In the technical solution provided by this embodiment, corresponding power supplies can be flexibly allocated for loads operating in each phase, leading to a more rational deployment of power supplies and ensuring the successful completion of the self-cleaning process for the cleaning device.

An embodiment of the present disclosure provides a self-cleaning method for a cleaning device, applicable to a control apparatus for the cleaning device. The cleaning device also includes a liquid transportation apparatus, a main motor, and a self-cleaning object. And the method includes:
- controlling the liquid transportation apparatus to operate to output a cleaning liquid; and
- controlling the main motor to operate to generate a dynamically-changed suction force, thereby the cleaning liquid flows under the action of the dynamically-changed suction force to wash the self-cleaning object.

An embodiment of the present disclosure further provides another self-cleaning method for a cleaning device, applicable to a control apparatus for the cleaning device. The cleaning device also includes a liquid transportation apparatus, a driving apparatus, and a rolling brush. And the method includes:
- a rolling brush wetting phase: controlling the liquid transportation apparatus to output a cleaning liquid to the rolling brush to wet it;
- a liquid transportation stopping and rolling brush rotating phase: controlling the liquid transportation apparatus to stop operating, and controlling the driving apparatus to operate to drive the rotation of the rolling brush, thereby attachments and liquid on the rolling brush are scraped off to a liquid accumulation area by a scraping apparatus on the cleaning device; and
- cycling, in the presence of a cycle requirement, the rolling brush wetting phase and the liquid transportation stopping and rolling brush rotating phase according to the cycle requirement.

An embodiment of the present disclosure further provides a cleaning device. The cleaning device includes:
- a liquid transportation apparatus configured to output a cleaning liquid;
- a main motor configured to generate a suction force;
- a cleaning assembly configured to serve as a self-cleaning object when the cleaning device operates in a self-cleaning mode and as a cleaning executer when the cleaning device operates in an external cleaning mode; and
- a control apparatus electrically connected to the liquid transportation apparatus and the main motor, and configured to perform the self-cleaning method.

In the technical solution provided by the embodiment of the present disclosure, a cleaning procedure for the cleaning device is optimized, the cleaning liquid is output to form accumulated liquid, and a dynamically-changed suction force is then generated, thereby the accumulated liquid flows under the action of the dynamically-changed suction force to wash the self-cleaning object of the cleaning device, thus effectively improving the self-cleaning effect of the cleaning device.

An embodiment of the present disclosure provides a self-cleaning method for a cleaning device. The cleaning device includes a suction nozzle, a main motor, a recycling bucket, and a recycling pipeline. A first end of the recycling pipeline is communicated with the suction nozzle, and a second end of the recycling pipeline is communicated with the recycling bucket. Accordingly, the method includes washing the recycling pipeline.

Washing the recycling pipeline includes:
- turning on the main motor to operate at a first power for suctioning a cleaning liquid via the suction nozzle and suctioning at least part of the cleaning liquid from the first end to the second end, the first power being less than a recycling power, and the main motor operating at the recycling power to implement the suction of the cleaning liquid into the recycling bucket; and
- turning off the main motor, thereby the cleaning liquid in the recycling pipeline flows back from the second end to the first end to wash the recycling pipeline with reciprocating flowing cleaning liquid.

Another embodiment of the present disclosure further provides a cleaning device. The cleaning device includes:
- a floor brush with a suction nozzle;
- a recycling bucket communicated with the suction nozzle via a recycling pipeline, wherein a first end of the recycling pipeline is communicated with the suction nozzle, and a second end of the recycling pipeline is communicated with the recycling bucket;
- a main motor configured to generate a suction force; and
- a control apparatus electrically connected to the main motor, and configured to perform the steps of the self-cleaning method according to the above-mentioned embodiment.

The technical solutions provided by the embodiments of the present disclosure optimize the self-cleaning procedure of the cleaning device. The main motor is first turned on to operate at a first power, wherein the first power prevents most of the cleaning liquid from being suctioned into the recycling bucket and allows one or more parts of the cleaning liquid to be suctioned from the first end of the recycling pipeline to the second end via the suction nozzle. The main motor is then turned off, thereby the cleaning liquid in the recycling pipeline flows back from the second end to the first end, and the recycling pipeline is washed with the reciprocating flowing cleaning liquid. In this way, dirt attached to an inner wall of the recycling pipeline can be effectively washed away, the self-cleaning effect of the cleaning device can be improved, and the amount of the cleaning liquid used can also be reduced.

### BRIEF DESCRIPTION OF THE DRAWINGS

In order to more clearly explain the technical solutions in the embodiments of the present disclosure or the prior art, the following will briefly describe the drawings to be used in the description of the embodiments or the prior art. Obviously, the drawings in the following description are some embodiments of the present disclosure, and other drawings may be obtained from these drawings for those of ordinary skill in the art without paying any creative labors.
FIG. 1 is a first structural diagram of a charging and discharging apparatus according to an embodiment of the present disclosure;
FIG. 2 is a second structural diagram of a charging and discharging apparatus according to an embodiment of the present disclosure;
FIG. 3 is a third structural diagram of a charging and discharging apparatus according to an embodiment of the present disclosure;
FIG. 4 is a first flow diagram of a charging and discharging method according to an embodiment of the present disclosure;
FIG. 5 is a second flow diagram of a charging and discharging method according to an embodiment of the present disclosure;
FIG. 6 is a third flow diagram of a charging and discharging method according to an embodiment of the present disclosure;
FIG. 7 is a fourth flow diagram of a charging and discharging method according to an embodiment of the present disclosure;
FIG. 8 is a fifth flow diagram of a charging and discharging method according to an embodiment of the present disclosure;
FIG. 9 is a sixth flow diagram of a charging and discharging method according to an embodiment of the present disclosure;
FIG. 10 is a flow diagram of a charging and discharging method according to another embodiment of the present disclosure;
FIG. 11a is a schematic diagram depicting a simple structure of a cleaning device according to an embodiment of the present disclosure;
FIG. 11b is a schematic diagram of a cleaning system according to an embodiment of the present disclosure;
FIG. 12 is a first flow diagram of a self-cleaning method according to an embodiment of the present disclosure;
FIG. 13 is a second flow diagram of a self-cleaning method according to an embodiment of the present disclosure;
FIG. 14 is a third flow diagram of a self-cleaning method according to an embodiment of the present disclosure;
FIG. 15 is a fourth flow diagram of a self-cleaning method according to an embodiment of the present disclosure;
FIG. 16 is a fifth flow diagram of a self-cleaning method according to an embodiment of the present disclosure;
FIG. 17 is a sixth flow diagram of a self-cleaning method according to an embodiment of the present disclosure;
FIG. 18 is a seventh flow diagram of a self-cleaning method according to an embodiment of the present disclosure;
FIG. 19 is an eighth flow diagram of a self-cleaning method according to an embodiment of the present disclosure;
FIG. 20 is a ninth flow diagram of a self-cleaning method according to an embodiment of the present disclosure;
FIG. 21 is a tenth flow diagram of a self-cleaning method according to an embodiment of the present disclosure;
FIG. 22 is an eleventh flow diagram of a self-cleaning method according to an embodiment of the present disclosure;
FIG. 23 shows a structural schematic diagram of a bucket cover of a recycling bucket according to an embodiment of the present disclosure;
FIG. 24 is a flow diagram of a self-cleaning method according to an embodiment of the present disclosure; and
FIG. 25 is a flow diagram of a self-cleaning method according to an embodiment of the present disclosure.

### DETAILED DESCRIPTION OF THE EMBODIMENTS

In order that those skilled in the art may better understand the solutions of the present invention, a clear and complete description of the technical solutions in the embodiments of the present disclosure will be given below in conjunction with the accompanying drawings in the embodiments of the present disclosure.

Some of the procedures described in the description, the claims, and the above-mentioned drawings of the present disclosure include a plurality of operations appearing in a particular order, which may be performed without or in parallel with the order in which the operations appear herein. The serial numbers of the operations, such as 101 and 102, are only used for distinguishing between different operations, and the serial numbers do not represent any execution order. In addition, the processes may include more or fewer operations, and the operations may be performed sequentially or in parallel. It will be noted that the descriptions of "first", "second", and the like herein are used for distinguishing between different messages, devices, modules, and the like, and "first" and "second" do not represent a sequential order and are not limited to be of different types.

It will be appreciated that the term "and/or" used herein is only an association relationship describing associated objects and represents that three relationships may be present. For example, A and/or B may represent: only A, both A and B, and only B. In addition, the character "/" herein typically represents an "or" relationship between the associated objects.

A clear and complete description of the technical solutions in the embodiments of the present disclosure will be given below in conjunction with the accompanying drawings in the embodiments of the present disclosure. Obviously, the embodiments described are only part of the embodiments of the present disclosure and not all embodiments. Based on the embodiments of the present disclosure, all other embodiments obtained by those skilled in the art without paying any creative labors shall fall within the scope of protection of the present disclosure.

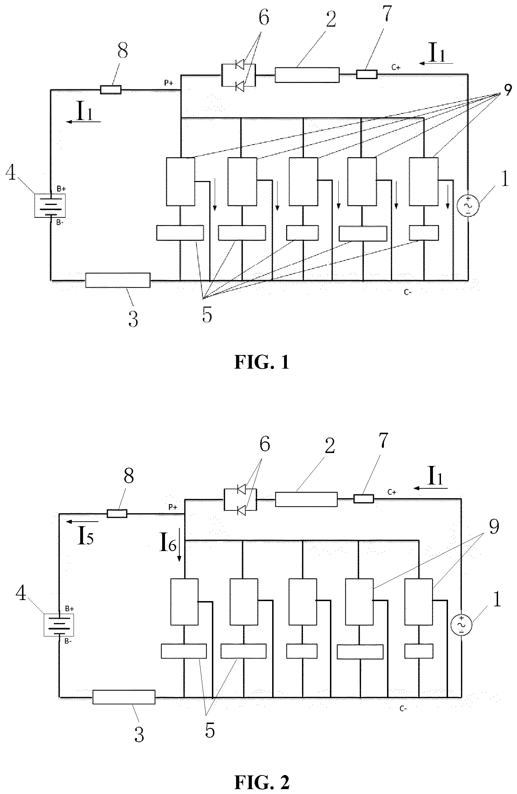

FIG. 1 is a first structural diagram of a charging and discharging apparatus according to an embodiment of the present disclosure. Referring to FIG. 1, C+ represents a charging positive electrode of a second electrical connection port 1, C- represents a charging negative electrode of the second electrical connection port 1 or a negative terminal of a workload 5, P+ represents a positive terminal of the workload 5, B+ represents a positive electrode of a battery 4, B- represents a negative electrode of the battery 4, and the direction of arrows in the figure indicates the direction of current.

In one embodiment of the present disclosure, it is provided a charging and discharging apparatus for a cleaning device. The apparatus includes: a second electrical connection port 1, a charging control circuit 2, a battery unit, and a controller (not shown in FIG. 1). The controller may be an electrical element independent of the battery unit, or may be embedded in the battery unit as part of the battery unit. The second electrical connection port 1 is configured to be connected to a first electrical connection port (not shown). When the first electrical connection port and the second electrical connection port 1 are electrically connected, the first electrical connection port is configured to electrically connect a charging power supply to transmit current output from the charging power supply to the second electrical connection port 1. Generally, the first electrical connection port is provided on a charging tray or base used in conjunction with the cleaning device. The first electrical connection port is generally an output port of a charger (not shown), which has the ability to output current. A first end of the charging control circuit 2 is electrically connected to a first end of the second electrical connection port 1. A first end of the battery unit is electrically connected to a second end of the charging control circuit 2, and a second end of the battery unit is electrically connected to a second end of the second electrical connection port 1. The first end and the second end of the battery unit are further configured to electrically connect a operating assembly of the cleaning device. When the second electrical connection port 1 is electrically connected to the first electrical connection port and the current from the charging power supply charges a battery in the battery unit, the battery unit and the second electrical connection port 1 form a closed circuit loop. The battery unit may include a battery system capable of cycled charging and discharging.

Further, as shown in FIG. 2, the controller is electrically connected to the charging control circuit 2 for controlling, when the cleaning device operates in a self-cleaning mode, the charging control circuit 2 to supply at least part of the current I6 from the charging power supply to a workload 5 in the self-cleaning mode. The operating assembly includes a plurality of components. The workload 5 includes at least part of the plurality of components. In one embodiment provided by the present disclosure, the controller may be integrated, different components of the workload 5 are electrically connected to the controller, and the controller can individually control the different components of the workload 5. Alternatively, the controller includes a plurality of independent control modules, different modules are electrically connected to the different components of the workload 5, and different control modules can be independently controlled.

Further, in one embodiment provided by the present disclosure, the components included in the operating assembly may include specific components and corresponding control circuits 9. For example, the plurality of components may be: a main motor module, a rolling brush motor module, a liquid transportation apparatus (such as a water pump) module, a sterilizing liquid production apparatus, a maintenance apparatus, and the like. For example, the main motor module includes a main motor and a corresponding main motor control circuit. The rolling brush motor module includes a rolling brush motor and a corresponding rolling brush motor control circuit. The liquid transportation apparatus module includes, for example, a water pump and a corresponding water pump control circuit. The sterilizing liquid production apparatus includes a sterilizing liquid production component and a corresponding sterilizing liquid production component control circuit, and the like. The main motor is configured to provide a suction force for the cleaning device. The rolling brush motor is configured to drive the rotation of a floor brush. The water pump is configured to transport a cleaning liquid. The sterilizing liquid production apparatus is configured to supply a sterilizing liquid for the cleaning device. The maintenance apparatus is configured to maintain the cleaning device, for example, a heating apparatus, an air drying apparatus, a cleaning liquid filtering apparatus, and the like.

In practical application, the charging and discharging apparatus provided by the present disclosure may be arranged on various types of functional electrical appliances. For example, the electrical appliances may be a sweeping robot, a mopping robot, a self-moving cleaning robot, or a handheld machine such as a handheld vacuum cleaner and a handheld floor scrubber. This embodiment is not specifically limited thereto.

In the technical solution provided by the embodiment of the present disclosure, when the cleaning device operates in the self-cleaning mode, the charging control circuit 2 is configured to supply at least part of the current I6 from the charging power supply to the workload 5 in the self-cleaning mode, thus reducing the power consumption of the battery unit, and prolonging its life during the self-cleaning process. While ensuring that the cleaning device successfully completes the self-cleaning process, it can effectively prevent the battery unit from running out of the electrical energy, thereby improving the user experience.

The technical solutions provided in the embodiments of the present disclosure will be further described in detail below.

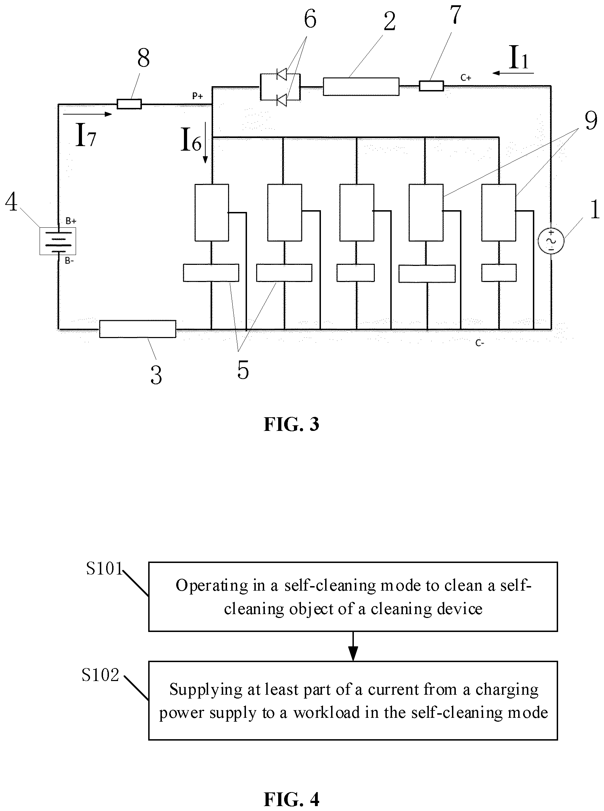

Referring to FIG. 1 to FIG. 3, in one embodiment provided by the present disclosure, the battery unit includes a battery 4, a discharging control circuit 3, and a controller (not shown). The battery 4 may be a separate battery or a battery pack. A first end of the battery 4 is electrically connected to a second end of the charging control circuit 2. A first end of the discharging control circuit 3 is electrically connected to a second end of the battery 4, and a second end of the discharging control circuit 3 is electrically connected to a second end of the second electrical connection port 1. The controller is also electrically connected to the discharging control circuit 3 for obtaining state information of the cleaning device. When the state information meets a first preset condition, an enable signal is sent to the discharging control circuit 3 to control the discharge of the battery 4 through the discharging control circuit 3 to supply electrical energy to the workload 5. The first preset condition may be that a operating current required by the workload 5 is greater than a total current from the charging power supply. For example, when a operating current I required to be consumed by the workload 5 is greater than a total current I1 that can be supplied by the second electrical connection port 1, electrical energy supplied from the charging power supply cannot meet the requirements of the workload 5. At this moment, the discharging control circuit 3 is controlled to cause the battery 4 to output power (as shown in FIG. 3), so as to output a certain output current I7 to the workload 5.

Further, in one embodiment provided by the present disclosure, the charging and discharging apparatus also includes a plurality of diodes 6. The diodes 6 have unidirectional conductivity. In other words, when positive voltages are applied to anodes and cathodes of the diodes 6, the diodes 6 are turned on. When reverse voltages are applied to the anodes and the cathodes, the diodes 6 are turned off. The plurality of diodes 6 are connected in parallel, and anode ends of the diodes 6 are electrically connected to the second end of the charging control circuit 2. The plurality of diodes 6 connected in parallel are electrically connected in series between the charging control circuit 2 and the battery 4. Current output from the charging control circuit 2 can only be output to the battery 4 or part of the operating assembly via the plurality of diodes 6 connected in parallel. In one embodiment provided by the present disclosure, the plurality of diodes 6 can be arranged either externally to the charging control circuit 2 and connected to the charging control circuit 2 via a line, or internally to the charging control circuit 2. The arrangement of the diodes 6 can effectively prevent the battery 4 from reversely transporting the current to the second electrical connection port 1, and ensure the safety of the cleaning device.

Further, in one embodiment provided by the present disclosure, the charging and discharging apparatus also includes a discharging safety element 8 which is connected in series between the charging control circuit 2 and the battery 4. The discharging safety element 8 has the ability to detect hazardous currents to protect the battery 4, and can effectively prevent the battery 4 from being damaged by the instantaneous hazardous currents during charging and discharging, or prevent the battery 4 from being damaged by the hazardous currents output by the battery 4 when the apparatus is short-circuited. A hazardous current is a current having a magnitude greater than that of a rated current. In addition, in another embodiment provided by the present disclosure, the charging and discharging apparatus also includes a charging safety element 7 which is connected in series between the charging control circuit 2 and the second electrical connection port 1. The charging safety element 7 also has the ability to detect hazardous currents for protecting the charging control circuit 2. When the second electrical connection port 1 outputs a hazardous current to the charging control circuit 2, the charging safety element 7 can detect the hazardous current and cut off the circuit in time, thus playing a role in protecting the charging control circuit 2. Specifically, the discharging safety element 8 and the charging safety element 7 include, but are not limited to, blown fuses, resettable fuses, surface mount fuses, temperature fuses, tubular fuses, mechanical safety apparatuses, and the like.

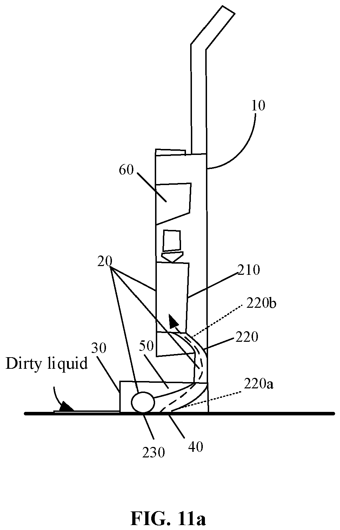

In one embodiment of the present disclosure, it is also provided a cleaning device. As shown in FIG. 11a and FIG. 1, the cleaning device 10 includes a cleaning assembly, a second electrical connection port 1, a charging control circuit 2, a battery unit, a operating assembly, and a controller. The cleaning assembly is configured to serve as a self-cleaning object when the cleaning device operates in a self-cleaning mode and as a cleaning executer when the cleaning device operates in an external cleaning mode. If the "external cleaning mode" is understood as a mode of cleaning the floor, desktop, wall, or window outside the cleaning device, the "self-cleaning mode" is a mode of cleaning internal components of the cleaning device. For example, as shown in FIG. 11a, the cleaning assembly 20 may include, but is not limited to, a rag, a rolling brush 230, a recycling pipeline 220, a recycling bucket 210, and the like. The second electrical connection port 1 is configured to electrically connect a charging power supply and can output current I1 from the charging power supply. A first end of the charging control circuit 2 is electrically connected to a first end of the second electrical connection port 1. A first end of the battery unit is electrically connected to a second end of the charging control circuit 2, and a second end of the battery unit is electrically connected to a second end of the second electrical connection port 1. Both ends of the operating assembly are connected to the first end of the battery unit and the second end of the battery unit for serving as a self-cleaning workload 5 to clean the self-cleaning object when the cleaning device operates in the self-cleaning mode, and as an external cleaning workload 5 together with the cleaning executer to clean a surface to be cleaned when the cleaning device operates in the external cleaning mode. The controller is configured to implement a charging and discharging method, which will be described in detail below.

Further, the operating assembly includes a plurality of components. The workload 5 may include at least part of the plurality of components. The operating assembly may include, but is not limited to, a rolling brush driving apparatus, a main motor that generates a suction force, a liquid transportation apparatus that outputs a cleaning liquid, a sterilizing liquid production apparatus, and the like. In addition, the cleaning device also includes the above-mentioned charging and discharging apparatus. The charging and discharging apparatus is arranged in the cleaning device. When the cleaning device operates in the external cleaning mode, the charging and discharging apparatus can supply the cleaning device with required power (operating current), which includes not only the operating current required by the workload 5, but also the operating current required by other accessories of the cleaning device, for example, a controller, a display, a sound prompter, a lighting apparatus, and the like. When the cleaning device operates in the self-cleaning mode, the charging and discharging apparatus can supply the operating current to the workload 5 of the cleaning device while supplying current I1 to the battery unit. In the technical solution provided by the present disclosure, when the cleaning device operates in the self-cleaning mode, the controller controls the charging control circuit 2 to supply at least part of the current I1 from the charging power supply to the workload 5 in the self-cleaning mode, thus reducing the power consumption of the battery unit of the cleaning device, and prolonging its life during the self-cleaning process. While ensuring that the cleaning device successfully completes the self-cleaning process, it can effectively prevent the battery unit of the cleaning device from running out of the electrical energy during the self-cleaning process, thereby improving the user experience.

Referring to FIG. 1 to FIG. 3, in one embodiment provided by the present disclosure, when the cleaning device completes the cleaning work and is connected to a charger, and the self-cleaning process is not started, current from the charging power supply flowing into the second electrical connection port 1 may be fully supplied to the battery for charging after passing through the charging control circuit 2, as shown in FIG. 1. As shown in FIG. 2, when the cleaning device enters the self-cleaning mode, if the operating current required by the workload 5 is less than the total current from the charging power supply, the current from the charging power supply flowing into the second electrical connection port 1 may be divided into two parts: a second current I5 charging the battery, and a operating current I6 required by the workload 5. As shown in FIG. 3, when the operating current required by the workload 5 is greater than the total current from the charging power supply, the operating current I6 required by the workload 5 consists of two parts: current I1 from the charging power supply flowing into the second electrical connection port 1, and an output current I7 output by the battery. Alternatively, when the operating current required by the workload 5 is greater than the current I1 from the charging power supply flowing into the second electrical connection port 1, the operating current I6 required by the workload 5 is independently supplied by the battery of the cleaning device.

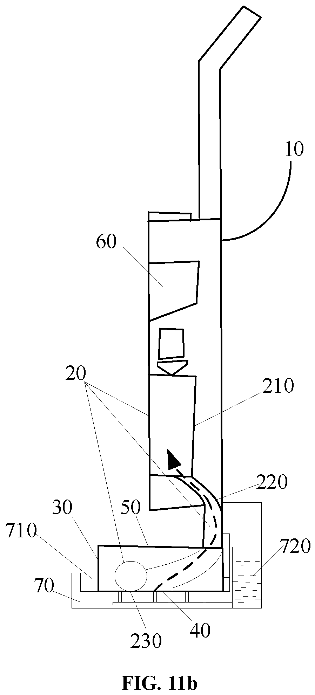

In one embodiment of the present disclosure, it is also provided a cleaning system. As shown in FIG. 11a, FIG. 11b, and FIG. 1, the cleaning system includes a base 70 and the above-mentioned cleaning device 10. The base is provided with a first electrical connection port (not shown in the figures), and a charging power supply is electrically connectable to the first electrical connection port via an electrical connector. Alternatively, a charger is electrically connected to the first electrical connection port via the electrical connector. In addition, the cleaning device 10 is provided with a controller and a second electrical connection port 1. The controller is electrically connected to the second electrical connection port 1. When the cleaning device 10 is docked on the base 70, the second electrical connection port 1 and the first electrical connection port can contact each other and be electrically connected. When the cleaning device is removed from the base 70, the second electrical connection port 1 is disconnected from the first electrical connection port, and the electrical connection therebetween is cut off. The controller is further configured to implement a charging and discharging method for a cleaning device. The charging and discharging method will be described in detail below. Embodiments provided by the present disclosure will be described in detail below by specific scenarios. After a user completes the cleaning work using the cleaning device or the cleaning device completes the cleaning work autonomously, the cleaning device 10 is docked on the base 70, as shown in FIG. 11b. After the cleaning device is docked on the base 70, the second electrical connection port 1 of the cleaning device is electrically connected to the first electrical connection port of the base to connect the charging power supply via the first electrical connection port. At this moment, the current from the charging power supply flowing into the second electrical connection port 1 charges the battery 4 in the battery unit. At this moment, the user touches a self-cleaning control via an interactive apparatus on the cleaning device. Then, the cleaning device enters the self-cleaning mode, and the operating assembly on the cleaning device starts to operate according to a control instruction of the controller. In the self-cleaning mode, when the operating current consumed by the self-cleaning workload is less than or equal to the total current from the charging power supply flowing into the second electrical connection port 1, the current from the charging power supply is supplied to the self-cleaning workload. If there is a residual current, the residual current is supplied to the battery 4 for charging. When the current consumed by the self-cleaning workload exceeds the total current from the charging power supply flowing into the second electrical connection port 1, the battery 4 is switched to a discharging state, and supplies the operating current to the self-cleaning workload 5 together with the charging power supply electrically connected to the second electrical connection port 1, so as to ensure that the self-cleaning process of the cleaning device can be successfully completed.

If the user has used the cleaning device some time ago (for example, three days or a week) and needs to use it again, the cleaning device needs to undergo a self-cleaning process. Since the battery 4 is in a fully charged state after the last use, when the user places the cleaning device on the self-cleaning base 70, the battery 4 will enable the charging protection. When the operating current required by the workload 5 exceeds the total current from the charging power supply flowing into the second electrical connection port, the battery 4 will be switched to a discharging state, and supply the operating current I6 to parts of the workload 5 together with the current from the charging power supply flowing into the second electrical connection port 1. Therefore, the operating current required by the workload 5 is equal to the input operating current, and the battery life of the cleaning device can be prolonged while ensuring the normal operation of the workload 5.

The above content pertains to determining the current distribution based on the actual current demand of the workload when the cleaning device operates in the self-cleaning mode. In addition, the charging control circuit may be controlled to intermittently charge the battery during a phase when the cleaning device is in the self-cleaning mode. For example, the self-cleaning mode includes a plurality of self-cleaning phases, such as a preparation phase and a washing phase. The preparation phase may include: producing a sterilizing liquid, accumulating the sterilizing liquid, and soaking the self-cleaning object in the sterilizing liquid. During the preparation phase, the charging control circuit may be controlled to charge the battery. During the washing phase, the charging control circuit may be controlled to stop charging the battery, and the battery output power to the self-cleaning workload to implement the washing phase. Relevant content will be explained in the embodiments below.

In an embodiment of the present disclosure, it is also provided a charging and discharging method for a cleaning device. FIG. 4 is a first flow diagram of a charging and discharging method according to an embodiment of the present disclosure. Referring to FIG. 4, the charging and discharging method for a cleaning device provided by the embodiment of the present disclosure includes:
S101: operating in a self-cleaning mode to clean a self-cleaning object of the cleaning device; and
S102: supplying at least part of the current from a charging power supply to a workload in the self-cleaning mode.

In one embodiment provided by the present disclosure, the executing body of the charging and discharging method is the above-mentioned cleaning device, in particular, a controller of the cleaning device. In step S101, the cleaning device may be switched to the self-cleaning mode from other operating modes, and can also enter the self-cleaning mode after being triggered by a user in a shutdown state. The workload 5 may act as the main executor for cleaning the self-cleaning object. For example, in the self-cleaning mode, a rolling brush is the self-cleaning object. The rolling brush is driven by a rolling brush motor to rotate during self-cleaning, allowing the rolling brush to complete the self-cleaning operation.

In step S102, the magnitude of current supplied to the workload among currents from the charging power supply may be determined by the rated power of the workload 5. In addition, a operating assembly includes a plurality of components. The workload 5 includes at least part of the plurality of components. The operating assembly may include, but is not limited to, a rolling brush driving apparatus, a main motor that generates a suction force, a liquid transportation apparatus that outputs a cleaning liquid, a sterilizing liquid production apparatus, and the like.

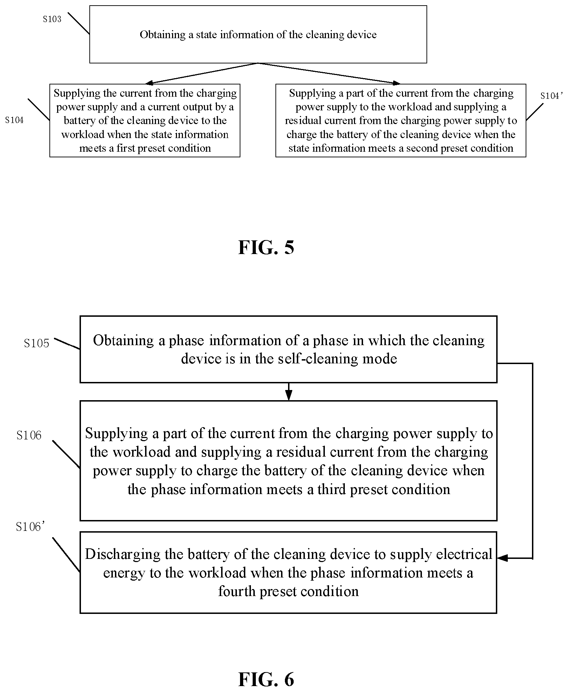

In one embodiment provided by the present disclosure, referring to FIG. 5, the supplying at least part of the current from a charging power supply to a workload in the self-cleaning mode includes the following steps:
S103: obtaining a state information of the cleaning device;
S104: supplying the current from the charging power supply and the current output by a battery of the cleaning device to the workload when the state information meets a first preset condition; or
S104': supplying a part of the current from the charging power supply to the workload and supplying a residual current from the charging power supply to charge the battery of the cleaning device when the state information meets a second preset condition.

In S103, the state information of the cleaning device may include a first current corresponding to the workload in the self-cleaning mode. Accordingly, the method provided by this embodiment may also include the following steps:
- obtaining a total current from the charging power supply;
- determining that the first preset condition is met if the first current exceeds the total current; or
- determining that the second preset condition is met if the first current is less than or equal to the total current.

Further, when the cleaning device performs step S104 or step S104', step S103 can also be performed simultaneously. When the controller controls corresponding components to regulate currents, the state information of the cleaning device is also obtained simultaneously. The process of obtaining the state information of the cleaning device may be a continuous process, or an intermittent process, or a process of obtaining the state of the apparatus started before a specific step according to the user's setting.

Further, the cleaning device can alternately perform step S104 or step S104' repeatedly during the self-cleaning process. For example, when the cleaning device performs the first step of the self-cleaning process, the sterilizing liquid production apparatus is producing a sterilizing liquid, and current required to be consumed by the sterilizing liquid production apparatus is less than a maximum current that is available from the charging power supply and flows into the second electrical connection port 1. Therefore, the cleaning device performs step S104' at this moment. When the cleaning device performs the second step of the self-cleaning process, a water pump supplies water to the rolling brush, the rolling brush motor drives the rolling brush to rotate, and the main motor operates to generate a suction force. At this moment, the operating current required to be consumed by the operating workload 5 exceeds the maximum current that is available from the charging power supply and flows into the second electrical connection port 1, and the cleaning device proceeds from step S104' to step S104 while performing the second step of the self-cleaning process. Then, when the cleaning device performs the third step of the self-cleaning process, only the water pump supplies the sterilizing liquid to the rolling brush, and the post-cleaning maintenance work is completed. At this moment, other workloads 5 are not operating. Since the operating current required to be consumed by the operating workload 5 is less than the maximum current that is available from the charging power supply and flows into the second electrical connection port 1, the cleaning device proceeds from step S104 to step S104' while performing the second step of the self-cleaning process. In the technical solutions provided by the present disclosure, different steps can be performed under different preset conditions according to the actual state information of the cleaning device, thereby the battery life of the cleaning device can be prolonged while meeting the stable operation of the workload 5.

In another embodiment provided by the present disclosure, referring to FIG. 6, step S102 of supplying at least part of the current from a charging power supply to a workload in the self-cleaning mode may include:
S105: obtaining a phase information of a phase in which the cleaning device is in the self-cleaning mode.
S106: supplying a part of the current from the charging power supply to the workload and supplying a residual current from the charging power supply to charge the battery of the cleaning device when the phase information meets a third preset condition; or
S106': discharging the battery of the cleaning device to supply electrical energy to the workload when the phase information meets a fourth preset condition.

Further, when the cleaning device has lain idle for a long time (over one or more years), the battery 4 of the cleaning device has little power left and is insufficient to supply power to the workload 5 with the second electrical connection port 1 during the self-cleaning process. When the cleaning device performs self-cleaning, the self-cleaning process is first suspended, and the current from the charging power supply flowing into the second electrical connection port 1 is output to the battery 4 for charging. When the charge level of the battery 4 reaches a certain range, the self-cleaning operation is resumed. For example, the self-cleaning mode is then started when the charge level of the battery reaches 20%, 30%, or 50%.

In one embodiment provided by the present disclosure, the self-cleaning mode includes multiple phases, including, for example, a preparation phase and a washing phase. The preparation phase may include, but is not limited to, producing a sterilizing liquid, accumulating the sterilizing liquid, and soaking the self-cleaning object in the sterilizing liquid. The washing phase may include, but is not limited to, washing the rolling brush, washing the recycling pipeline, and dewatering the cleaning parts.

Accordingly, the method provided by this embodiment may also include the following steps:
S107: determining that the third preset condition is met if the phase information relates to the preparation phase; or
S108: determining that the fourth preset condition is met if the phase information relates to the washing phase.

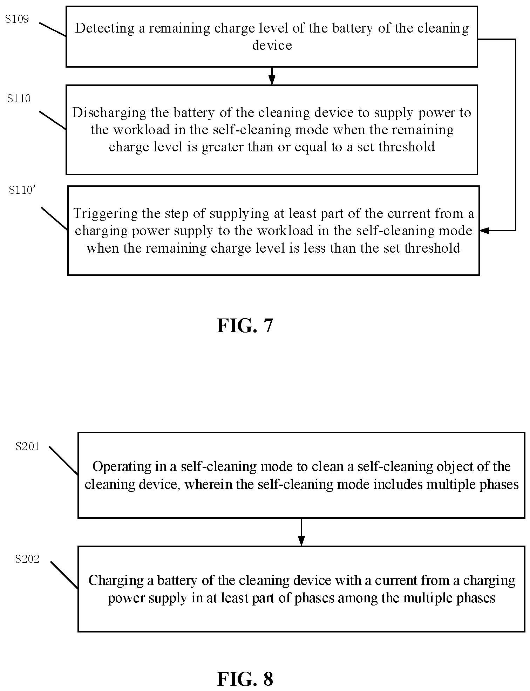

Further, referring to FIG. 7, in the embodiment of the present disclosure, the charging and discharging method for a cleaning device also includes the following steps:
S109: detecting a remaining charge level of the battery of the cleaning device;
S110: discharging the battery of the cleaning device to supply power to the workload in the self-cleaning mode when the remaining charge level is greater than or equal to a set threshold;
S110': triggering the step of supplying at least part of the current from a charging power supply to a workload in the self-cleaning mode when the remaining charge level is less than the set threshold.

In the above-mentioned steps, the executing body for detecting the remaining charge level of the battery 4 may be a detection apparatus arranged on the battery 4 or a discharging control circuit 3. The step of detecting the remaining charge level of the battery 4 can be performed during the entire self-cleaning process, or can be set in different phases.

In step S110, the battery of the cleaning device may be discharged by cutting off the input of the current. The "cutting off" may be: cutting off the electrical connection with the second electrical connection port 1 by controlling the charging control circuit 2, or turning off the charger on the base 70 or turning off the first electrical connection port by controlling the charging control circuit 2.

In one embodiment of the present disclosure, it is also provided another charging and discharging method for a cleaning device. Referring to FIG. 8, the charging and discharging method includes:
S201: operating in a self-cleaning mode to clean a self-cleaning object of the cleaning device, wherein the self-cleaning mode includes multiple phases; and
S202: charging a battery of the cleaning device with a current from a charging power supply in at least part of the phases among the multiple phases.

In one embodiment provided by the present disclosure, the executing body of the charging and discharging method is the above-mentioned cleaning device, in particular, a controller of the cleaning device. In step S101, the cleaning device may be switched to the self-cleaning mode from other operating modes, and can also enter the self-cleaning mode after being triggered by a user in a shutdown state. The workload 5 may act as the main executor for cleaning the self-cleaning object. For example, in the self-cleaning mode, a rolling brush is the self-cleaning object. The rolling brush is driven by a rolling brush motor to rotate during self-cleaning, allowing the rolling brush to complete the self-cleaning operation.

In step S201, the multiple phases of the self-cleaning mode include, but are not limited to, a preparation phase, a washing phase, and a maintenance phase. The preparation phase includes, but is not limited to, producing a sterilizing liquid, accumulating the sterilizing liquid, soaking the self-cleaning object in the sterilizing liquid, and the like. The washing phase includes, but is not limited to, washing the rolling brush, washing the recycling pipeline, dewatering the cleaning parts, and the like. The maintenance phase includes, but is not limited to, antibacterial treatment, drying treatment, and the like. In addition, in step S202, at least part of the phases may include a preparation phase and a maintenance phase. Since the current consumed by the workload of the cleaning device is less than the maximum current available from the first electrical connection port in these phases, the current charges the rechargeable battery of the cleaning device in these phases.

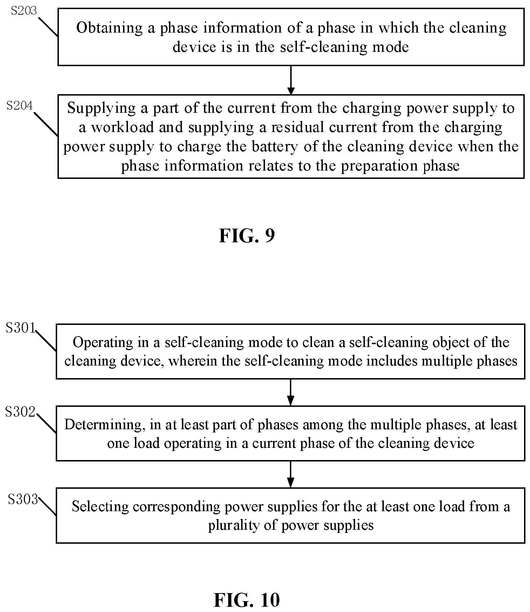

Further, referring to FIG. 9, in one embodiment provided by the present disclosure, the multiple phases of the self-cleaning mode include a preparation phase and a washing phase, wherein charging a battery of the cleaning device with the current in at least part of phases among the multiple phases also includes the following steps:
S203: obtaining a phase information of a phase in which the cleaning device is in the self-cleaning mode.
S204: supplying a part of the current from the charging power supply to a workload and supplying a residual current from the charging power supply to charge the battery of the cleaning device when the phase information relates to the preparation phase.

In the above-mentioned steps, by determining a phase in which the apparatus operates, a charging and discharging mode of the cleaning device in the phase is determined. In one embodiment provided by the present disclosure, when the controller determines that the phase in which the cleaning device operates is a preparation phase which may include, but is not limited to, producing a sterilizing liquid, accumulating the sterilizing liquid, soaking the self-cleaning object in the sterilizing liquid, and the like, the controller controls a charging circuit to supply a part of the current from the charging power supply to the workload, and to supply the residual current from the charging power supply to charge the battery of the cleaning device. Certain phases corresponding to different steps in the self-cleaning process of the cleaning device may be set in advance. The corresponding phase of each step should be set prior to the delivery of the cleaning device, for example, producing the sterilizing liquid should be part of the preparation phase, and washing the rolling brush and washing the recycling pipeline may be part of the washing phase. Alternatively, the phases may be determined according to the magnitude of an average operating current applied to the operation of the workload. For example, when the cleaning device is in the phase of producing the sterilizing liquid and current required by the sterilizing liquid production apparatus is less than or equal to the maximum current that is available from the charging power supply and flows into the second electrical connection port, it is determined that the step falls within the preparation phase. When the cleaning device is in the step of washing the recycling pipeline and the total operating current required by the main motor is greater than the maximum current that is available from the charging power supply and flows into the second electrical connection port, it is determined that the step does not fall within the preparation phase, but within the washing phase.

The charging and discharging method for a cleaning device provided in the embodiment of the present disclosure also includes the following steps:
S205: supplying the current from the charging power supply and a current output by the battery of the cleaning device to the workload when the phase information relates to the washing phase; or
S205': discharging the battery of the cleaning device to supply power to the workload in the self-cleaning mode when the phase information relates to the washing phase.

In the above-mentioned step, the washing phase of the cleaning device may be a phase in which the operating current required by the workload of the cleaning device is greater than the maximum current that is available from the charging power supply and flows into the second electrical connection port 1. In the cleaning phase, the battery in the discharged state, together with the current supplied by the charging power supply, supplies electrical energy to the workload, so as to ensure the stable operation of the workload.

In another embodiment provided by the present disclosure, when the cleaning device is in the washing phase, the current is cut off, and only the battery of the cleaning device supplies power to the workload in the self-cleaning mode. Cutting off the current may be: cutting off the electrical connection with the second electrical connection port 1 by controlling the charging control circuit 2, or turning off the charger on the base 70 or turning off the first electrical connection port by controlling the charging control circuit 2. In one embodiment provided by the present disclosure, the self-cleaning process is roughly divided into four phases: producing the sterilizing liquid, soaking the rolling brush, washing the recycling pipeline, and dewatering the rolling brush. The specific cleaning process may be referred to Table 1 below.

| Phase | | Main motor | Rolling brush motor | Liquid transportation apparatus | Sterilizing liquid production apparatus | Charging circuit | Notes |
|---|---|---|---|---|---|---|---|
| Producing the sterilizing liquid | | OFF | OFF | OFF | ON | ON | |
| Soaking the rolling brush | A1 | OFF | OFF | ON | ON/OFF | ON | Electrolyzed water is optionally on or off |
| | A2 | OFF | ON | OFF | ON/OFF | ON/OFF | |
| Washing the recycling pipeline | | ON | ON | OFF | ON/OFF | ON/OFF | Electrolyzed water is optionally on or off |
| Soaking the rolling brush | A1 | OFF | OFF | ON | ON/OFF | ON | Electrolyzed water is optionally on or off |
| | A2 | OFF | ON | OFF | ON/OFF | ON/OFF | Electrolyzed water is optionally on or off |
| Washing the recycling pipeline | | ON | ON | OFF | ON/OFF | ON/OFF | Electrolyzed water is optionally on or off |
| Charging phase | | OFF | OFF | OFF | OFF | ON | |

In the above table, the rolling brush is soaked in two steps, which can be repeated until the rolling brush is cleaned. In addition, "Producing the sterilizing liquid" in the table means that the sterilizing liquid production apparatus produces a sterilizing liquid. In a specific embodiment, the sterilizing liquid can be obtained by electrolyzing the cleaning liquid. The cleaning liquid may be ordinary clear water or clear water containing sodium chloride. After the self-cleaning procedure is started, the sterilizing liquid is first produced: the main motor in the cleaning device is turned off, the rolling brush motor is turned off, the liquid transportation apparatus is turned off, the sterilizing liquid production apparatus is turned on, and the charging circuit operates (the charging control circuit 2 outputs current). The current from the charging power supply charges the battery 4 and supplies power to the sterilizing liquid production apparatus.

Then, soaking the rolling brush includes two phases: a rolling brush wetting phase (A1) and a liquid transportation stopping and rolling brush rotating phase (A2). The main motor in the cleaning device is turned off in the rolling brush wetting phase, and sewage cannot be suctioned. The liquid transportation apparatus transports the sterilizing liquid to the rolling brush, and the rolling brush motor stops operating. At this moment, the sterilizing liquid production apparatus is turned on or off, and the charging circuit operates. The current from the charging power supply charges the battery 4 and supplies power to the liquid transportation apparatus. When the sterilizing liquid production apparatus is turned on, the current from the charging power supply supplies power to the sterilizing liquid production apparatus. In the liquid transportation stopping and rolling brush rotating phase, the main rotor stops operating, the rolling brush motor rotates and drives the rolling brush to rotate together, the liquid transportation apparatus stops transporting the sterilizing liquid to the rolling brush, the sterilizing liquid production apparatus is turned on or off, the charging circuit stops charging the battery, and the rolling brush motor and the sterilizing liquid production apparatus (when turned on) are powered by the battery, or by the battery and the charging power supply together.

Subsequently, the recycling pipeline is washed: the main motor is turned on, and the suction force of the main motor is in a dynamically changed state. Therefore, the accumulated liquid washes back and forth the recycling pipeline. The rolling brush motor is turned on to scrape off the liquid accumulated on the rolling brush thoroughly. In addition, the liquid transportation apparatus is turned off, the sterilizing liquid production apparatus is turned on or off, the charging circuit stops charging the battery, and the main motor, the rolling brush motor, and the sterilizing liquid production apparatus (when turned on) are powered by the battery, or by the battery and the charging power supply together.

Finally, in the charging phase, after the cleaning device completes all the cleaning works, the workload 5 stops operating, and the charging circuit operates. At this moment, the current from the charging power supply, which is output from the second electrical connection port 1, is transported to the battery 4 for charging.

By reason of the foregoing, in the technical solution provided by the embodiment of the present disclosure, when the cleaning device operates in the self-cleaning mode, the charging control circuit 2 is controlled to supply at least part of the current from the charging power supply to the workload in the self-cleaning mode, thus reducing the power consumption of the battery unit, and prolonging its life during the self-cleaning process. While ensuring that the cleaning device successfully completes the self-cleaning process, it can effectively prevent the battery unit from running out of the electrical energy, thereby improving the user experience.

FIG. 10 shows a flow diagram of a charging and discharging method for a cleaning device according to yet another embodiment of the present disclosure. As shown in FIG. 10, the method includes:
S301: operating in a self-cleaning mode to clean a self-cleaning object of the cleaning device, wherein the self-cleaning mode includes multiple phases;
S302: determining, in at least part of phases among the multiple phases, at least one load operating in a current phase of the cleaning device; and
S303: selecting corresponding power supplies for the at least one load from a plurality of power supplies.

The plurality of power supplies include: a power supply from the charging power supply and a battery of the cleaning device.

The contents related to steps S301 and S302 may be referred to the contents of the above-mentioned embodiment. For example, in S302, specifically, in the phase of soaking the rolling brush among the multiple phases, the steps in this embodiment are adopted (i.e., steps S302 and S303 are performed). Alternatively, in the phases of soaking the rolling brush and washing the recycling pipeline among the multiple phases, the steps in this embodiment are adopted (i.e., steps S302 and S303 are performed).

In S302, if the cleaning device is currently in the phase of soaking the rolling brush, it may be determined by referring to the above table that the operating loads of the cleaning device in this phase include the main motor and the rolling brush motor.

If the cleaning device is currently in the phase of soaking the rolling brush, it may be determined by referring to the above table that the operating loads of the cleaning device in this phase include the liquid transportation apparatus and the rolling brush motor.

Further, the phases in this embodiment may be divided into a plurality of sub-phases. For example, the phase of soaking the rolling brush may include a drainage wetting phase A1 and a rolling brush rotating self-cleaning phase A2. In the drainage wetting phase A1, the workload is the liquid transportation apparatus. In the rolling brush rotating self-cleaning phase A2, the workload is the rolling brush motor.

In S303, a configuration table may be preset. The configuration table includes phase information and an associated power supply allocation plan. The configuration table is Table 2 below:

| Phase | | Main motor | Rolling brush motor | Liquid transportation apparatus | Sterilizing liquid production apparatus |
|---|---|---|---|---|---|
| Producting the sterilizing liquid | | OFF | OFF | OFF | Battery |
| Soaking the rolling brush | A1 | OFF | OFF | Battery | ON/OFF; ON: Charging power supply |
| | A2 | OFF | Charging power supply | OFF | ON/OFF ON: Battery |
| Washing the recycling pipeline | | Charging power supply | Battery | OFF | ON/OFF ON: Battery |
| Soaking the rolling brush | A1 | OFF | OFF | Battery | ON/OFF ON: Charging power supply |
| | A2 | OFF | Charging power supply | OFF | ON/OFF ON: Battery |
| Washing the recycling pipeline | | Charging power supply | Battery | OFF | ON/OFF ON: Battery |
| Charging phase | | OFF | OFF | OFF | OFF |

It will be noted here that the above table schematically shows one possibility, which is not limited by the embodiment of the present disclosure. The configuration information of the power supplies selected for loads may be determined according to the actual design, product characteristics, and the like.

In another implementable technical solution, step S303 of selecting corresponding power supplies for the at least one load from a plurality of power supplies in this embodiment may include:
S3031: obtaining energy consumption attributes of the at least one load; and
S3032: selecting power supplies adapted to the respective energy consumption attributes for the at least one load from the plurality of power supplies.

The energy consumption attributes in S3031 may include, but is not limited to, current consumed by loads, voltage, load power, and the like. This embodiment is not limited thereto. Therefore, when step S3032 is performed, an appropriate power supply may be selected for each load according to the energy consumption attribute thereof.

In this embodiment, step S3032 may be performed according to a preset selection rule. The selection rule is not limited by this embodiment.

Further, loads operating in the same phase include at least a first load and a second load. Accordingly, step S303 of selecting corresponding power supplies for the at least one load from a plurality of power supplies in this embodiment may specifically be:
- selecting different power supplies for the first load and the second load from the plurality of power supplies.

For example, in the recycling pipeline washing phase mentioned above, the power supply corresponding to the main motor is the charging power supply, and the power supply corresponding to the rolling brush motor is the battery.

Alternatively, the multiple phases include at least a first phase and a second phase. A power supply corresponding to the first phase is different from a power supply corresponding to the second phase. Accordingly, step S303 of selecting corresponding power supplies for the at least one load from a plurality of power supplies in this embodiment may specifically be:
- determining, from the plurality of power supplies, a power supply corresponding to a current phase of the cleaning device; and
- selecting the power supply corresponding to the current phase of the cleaning device for the at least one load.

In a specific implementation, a relationship table between the phases and the power supplies may be pre-configured. In this way, a power supply corresponding to the current phase of the cleaning device may be determined according to the relationship table. For example, the power supply corresponding to the preparation phase may be the battery. The power supply corresponding to the washing phase (due to high energy consumption) may be the charging power supply.

In the solution provided by the embodiment of the present disclosure, different power supplies are allocated for two different loads, or different power supplies are used in different phases, thereby electrical energy supplied by the power supplies may be rationally allocated, thus reducing the energy consumption of the battery and shortening the charging time of the battery. For example, different power supplies are allocated for two different loads. The power supplies may be rationally allocated according to the actual energy consumption of each load, thereby the situation that the cleaning device cannot operate due to irrational selection of the power supplies can be avoided, and the energy consumption can be reduced. For different phases, different power supplies are used. For example, the charging power supply, in the first phase, serves as the power supply to supply electrical energy to all loads operating in this phase, and in the next phase (i.e., the second phase), the battery supplies electrical energy to all loads operating in this phase. When the charging power supply supplies power to the load in the first phase, if there is still a residual current, the battery can still be charged. In other words, the cleaning device charges the battery in phases during the self-cleaning process, thus reducing the energy consumption of the battery, and effectively ensuring that the cleaning device completes the self-cleaning task. Charging the battery in some phases of the multiple phases also shortens the charging time.

FIG. 11a shows a schematic diagram of a cleaning device according to an embodiment of the present disclosure. FIG. 11b shows a schematic diagram of a cleaning system according to an embodiment of the present disclosure. FIG. 11b shows a schematic diagram of a cleaning device docked on a base. The cleaning system shown in FIG. 11b includes: a base 70 and a cleaning device 10. The base 70 is provided with a first electrical connection port (not shown in this figure), and a charging power supply or a charger is electrically connectable to the first electrical connection port via an electrical connector. The cleaning device 10 may be of the structure provided in the above-mentioned embodiments, as described above. When the cleaning device 10 is docked on the base 70, the second electrical connection port 1 of the cleaning device 10 is electrically connected to the first electrical connection port. The controller in the cleaning device may perform the steps in the above-mentioned method embodiments. The details may be referred to the above, and will not be described again herein.

Further, the cleaning system provided by this embodiment may also include a sterilizing liquid production apparatus. As mentioned in the above embodiment, the sterilizing liquid production apparatus may be arranged on the cleaning device 10. The sterilizing liquid production apparatus may be an electrolyte production apparatus. For example, the electrolyte production apparatus includes: a power supply circuit and an electrolytic electrode. The power supply circuit is electrically connected to the controller for being turned on or off under the control of the controller. The electrolytic electrode is electrically connected to the power supply circuit, is arranged in a clear water tank 60 of the cleaning device, and is configured to electrolyze liquid in the clear water tank with a set voltage when the power supply circuit is turned on, so as to generate a sterilizing liquid. Alternatively, the sterilizing liquid production apparatus is arranged on the base 70. For example, a washing tank 710 is provided on the base 70, the floor brush of the cleaning device is placed in the washing tank 710, and the self-cleaning process may be completed in the washing tank. The base 70 is further provided with a clear water bucket 720. The electrolytic electrode may be arranged in the clear water bucket 720 to produce the sterilizing liquid. The sterilizing liquid produced by the sterilizing liquid production apparatus can be used as a cleaning liquid during self-cleaning of the cleaning device, or sprayed onto the self-cleaning object as a spraying liquid after the cleaning device is self-cleaned.

In order to facilitate the understanding of the technical solutions of the present disclosure, specific application scenarios are provided below to describe in detail a self-cleaning control method for a cleaning device according to the present disclosure.

### Application Scenario 1:

After the cleaning device has been operating for a period of time, the user finds that the cleaning device is dirty, and the user manually triggers a self-cleaning control on the cleaning device according to the degree of dirtiness of the cleaning device. After the cleaning device is connected to the second electrical connection port, the first end of the charging control circuit is electrically connected to the first end of the second electrical connection port, the first end of the battery unit is electrically connected to the second end of the charging control circuit, the second end of the battery unit is electrically connected to the second end of the second electrical connection port, and the operating assembly of the cleaning device is connected to the first end and the second end of the battery unit. Therefore, the current output from the second electrical connection port can be output to the battery unit under the control of the charging control circuit, and the battery in the battery unit can be charged. When the cleaning device enters the self-cleaning mode, the self-cleaning workload operates step by step. When a operating current required by the self-cleaning workload is less than or equal to a maximum current output by the second electrical connection port, the second electrical connection port supplies the operating current to the workload, and a residual current is supplied to the battery for charging. When the operating current required by the self-cleaning workload is increased and the operating current required by the workload is greater than the maximum output current available from the second electrical connection port, the battery is switched to an output state, and supplies, together with the second electrical connection port, the operating current to a part of the workload, thereby the workload can operate normally, and the self-cleaning process of the cleaning device can be successfully completed.

### Application Scenario 2

During the self-cleaning process of the cleaning device, the controller selectively enables the charging control circuit according to a current phase in which the cleaning device operates to output a current. For example, when the cleaning device is in a preparation phase, the charging control circuit is enabled, thereby a part of the current is supplied to the workload in the self-cleaning mode, and the residual current is supplied to charge the battery of the cleaning device. When the cleaning device is in a washing phase, the charging control circuit is in a disabled state. In other words, the charging control circuit is controlled to cut off the input of the current, and an enable signal is sent to a discharging control circuit which then controls the battery of the cleaning device to be discharged to supply electrical energy to the workload. In the self-cleaning process, the controller can freely adjust and switch a charging and discharging mode of a discharging apparatus according to the phase information of the cleaning device, and the self-cleaning process of the cleaning device can be successfully completed.

### Application Scenario 3

During the self-cleaning process of the cleaning device, a power detection element or the controller can also detect a remaining charge level of the battery of the cleaning device. When the remaining charge level of the battery is greater than or equal to a set threshold or less than the set threshold, a charging and discharging apparatus of the cleaning device can also be triggered to operate in different charging and discharging modes.

Under the human intervention, an autonomous cleaning process can be completed according to procedures set in advance. In the embodiment provided by the present disclosure, the cleaning device includes, but is not limited to, a handheld floor scrubber, an intelligent dragging and suction integrated robot, an intelligent floor scrubbing system with a base station, and the like. Cleaning parts of various cleaning devices have different specific structures. For example, in some embodiments of the present disclosure, when the cleaning device is a handheld floor scrubber (as shown in FIG. 11a), the cleaning part is a cleaning rolling brush, and when the cleaning device is an intelligent dragging and suction integrated robot, the cleaning part is a cleaning rag.

FIG. 11a shows a structural schematic diagram of a cleaning device according to an embodiment of the present disclosure. As shown in FIG. 11a, the cleaning device 10 may include: a cleaning assembly 20, a operating assembly (not shown), and a control apparatus (not shown). The cleaning assembly 20 is configured to serve as a self-cleaning object when the cleaning device operates in a self-cleaning mode and as a cleaning executer when the cleaning device operates in an external cleaning mode. If the "external cleaning mode" is understood as a mode of cleaning the floor, desktop, wall, or window outside the cleaning device, the "self-cleaning mode" is a mode of cleaning internal components of the cleaning device. For example, the cleaning assembly may include, but is not limited to, a rag, a rolling brush, a recycling pipeline, a recycling bucket, and the like. The operating assembly may include, but is not limited to, a rolling brush driving apparatus, a main motor that generates a suction force, a liquid transportation apparatus that outputs a cleaning liquid, and the like. The operating assembly is configured to serve as a self-cleaning workload to clean the self-cleaning object when the cleaning device operates in the self-cleaning mode, and as an external cleaning workload, together with the cleaning executer, cleans a surface to be cleaned when the cleaning device operates in the external cleaning mode. The control apparatus is connected to the operating assembly and is configured to control at least components in the operating assembly to make the cleaning device to operate in a self-cleaning mode or an external cleaning mode.

The cleaning device of the structure shown in FIG. 11a includes a floor brush 30 and a body. The floor brush 30 is arranged on the body. The body may include, but is not limited to, a clear water tank 60, a recycling bucket 210, a recycling pipeline 220, and the like. One end of the recycling pipeline 220 is communicated with a suction nozzle 40 on the floor brush 30, and the other end is communicated with the recycling bucket 210. The floor brush 30 is provided with a suction nozzle 40. The suction nozzle 40 may suction dirt or dirty liquid on a surface to be cleaned (such as a floor, a desktop, a carpet, and the like), which enters the recycling bucket 210 via the recycling pipeline 220. The rolling brush 230 on the floor brush 30 is rotatable to clean the surface to be cleaned. Therefore, in the embodiment of the cleaning device shown in FIG. 11a, the cleaning assembly may include: a rolling brush 230, a recycling pipeline 220, a recycling bucket 210, and the like. Accordingly, the operating assembly may include a driving apparatus for driving the rolling brush to roll, a main motor for generating a suction force, a liquid transportation apparatus for transporting a cleaning liquid from the clear water tank 60 to the rolling brush 230 and the surface to be cleaned, and the like, which are not shown in the figures.

Specifically, when the cleaning device is in the self-cleaning mode, the cleaning liquid is output to form accumulated liquid, and a dynamically-changed suction force is generated, thereby the accumulated liquid flows under the action of the dynamically-changed suction force to wash the self-cleaning object of the cleaning device.

Further, when the cleaning device operates in the self-cleaning mode, the control apparatus for the cleaning device controls the liquid transportation apparatus to output the cleaning liquid to form accumulated liquid, and controls the main motor to generate a dynamically-changed suction force, thereby the accumulated liquid flows under the action of the dynamically-changed suction force to wash the self-cleaning object of the cleaning device.

How to control the main motor to generate a dynamically-changed suction force will be described in detail below by referring to the corresponding content below.

Further, the cleaning device provided by this embodiment may also include a production apparatus. Not shown in FIG. 11a, the production apparatus is configured to produce a sterilizing liquid. The produced sterilizing liquid may be contained in the clear water tank 60. For example, the production apparatus may be an electrolyte production apparatus.

Specifically, the electrolyte production apparatus includes: a power supply circuit and an electrolytic electrode. The power supply circuit is electrically connected to the control apparatus for being turned on or off under the control of the control apparatus. The electrolytic electrode is electrically connected to the power supply circuit, and is arranged in a clear water tank of the cleaning device, and is configured to electrolyze liquid in the clear water tank with a set voltage when the power supply circuit is turned on, so as to generate a sterilizing liquid.

For example, if the electrolytic electrode with a certain voltage is put into tap water, a certain amount of hypochlorous acid will be produced under the action of the electrolytic electrode since the tap water contains a certain amount of chlorine. In a specific embodiment, the electrolytic electrode is often arranged in a clear water bucket containing a cleaning liquid (generally tap water or clear water having a certain salt content), and then a certain amount of sterilizing liquid can be generated by electrolyzing the cleaning liquid. For the process of producing the sterilizing liquid in the self-cleaning method, the process can be prepared in advance before the self-cleaning process of the cleaning device starts, and the sterilizing liquid can also be produced throughout the self-cleaning process or the sterilizing liquid can be produced in certain self-cleaning steps of the cleaning device.

Also, referring to FIG. 11a, the rolling brush 230 is accommodated in a rolling brush chamber. When the rolling brush cleans the surface to be cleaned, sewage and impurities will be stained. Because of the rotation of the rolling brush, sewage stains or small impurities may splash onto a chamber wall of the rolling brush chamber. In the self-cleaning mode of the cleaning device, the cleaning liquid output to form the accumulated liquid may have a certain depth, namely a large amount. In this way, a large amount of accumulated liquid will produce a relatively violent fluid flow effect under the action of the dynamically-changed suction force. While cleaning the rolling brush and the recycling channel, the chamber wall of the rolling brush chamber will also be cleaned by the way.

In addition, the sterilizing liquid produced by the production apparatus in this embodiment may be used for self-cleaning the cleaning device, or may only be used on the self-cleaning object (such as the rolling brush and the recycling channel) that has been self-cleaned. In other words, clear water in the clear water bucket is used for cleaning during the self-cleaning process, and the sterilizing liquid is sprayed onto the self-cleaning object for disinfection after having been cleaned.

Specifically, the liquid transportation apparatus may be configured to transport the cleaning liquid (such as the clear water and the sterilizing liquid). For example, the cleaning liquid is transport by the liquid transportation apparatus to the self-cleaning object. The cleaning liquid output by the liquid transportation apparatus may be clear water, a cleaning liquid mixed with a sterilizing agent, a sterilizing liquid obtained by electrolysis, and the like, this embodiment is not limited thereto. The amount of the accumulated liquid formed may be controlled by the control apparatus. Generally, the cleaning device will be placed on a base during the self-cleaning process. The base is used together with the cleaning device. In addition to being used when the cleaning device is self-cleaning, the base may also have functions such as charging the cleaning device. Assuming that the self-cleaning object includes a rolling brush, the accumulated liquid may be partially absorbed by the rolling brush, and partially remain on the base matching the cleaning device, and there may even be accumulated liquid in the rolling brush chamber.

Further, the control apparatus can also control the main motor to operate to generate a dynamically-changed suction force, thereby the accumulated liquid flows under the action of the dynamically-changed suction force to wash the self-cleaning object. Specifically, the operating power of the main motor may be adjusted by the control apparatus to change the suction force, and the effect of continuously flushing of the recycling pipeline by water flow may be simulated.

FIG. 11b shows a structural schematic diagram of a cleaning system according to another embodiment of the present disclosure. As shown in FIG. 11b, the cleaning system includes: a cleaning device 10, a production apparatus (not shown), and a base 70. The cleaning device 10 can be placed on the base 70, and the production apparatus is configured to produce a sterilizing liquid. The cleaning device includes: a cleaning assembly, a operating assembly, and a control apparatus. The cleaning assembly is configured to serve as a self-cleaning object when the cleaning device operates in a self-cleaning mode and as a cleaning executer when the cleaning device operates in an external cleaning mode. The operating assembly is configured to serve as a self-cleaning workload to clean the self-cleaning object when the cleaning device operates in the self-cleaning mode, and as an external cleaning workload together with the cleaning executer to clean a surface to be cleaned when the cleaning device operates in the external cleaning mode. The control apparatus is configured to control the operation of the operating assembly. The operating assembly includes a liquid transportation apparatus. The liquid transportation apparatus is configured to output the sterilizing liquid to form accumulated liquid under the control of the control apparatus, thereby the cleaning device completes the self-cleaning task using the accumulated liquid.

Further, the production apparatus may be arranged on the cleaning device, or arranged on the base.

Specifically, the production apparatus includes: a power supply circuit and an electrolytic electrode. The power supply circuit is electrically connected to the control apparatus for being turned on or off under the control of the control apparatus. The electrolytic electrode is electrically connected to the power supply circuit, is arranged in a clear water tank 60 of the cleaning device 10 or a clear water bucket 720 on the base 70, and is configured to electrolyze liquid in the clear water tank with a set voltage when the power supply circuit is turned on, so as to generate a sterilizing liquid.

In a specific implementation, after the cleaning device 10 has been placed on the base 70, the cleaning device 10 may be communicatively connected with the base in a wired or wireless manner. In this way, the control apparatus on the cleaning device may send a control instruction to the power supply circuit arranged on the base 70.

Further, the base 70 is provided with a liquid accumulation area (washing tank) 710. The liquid accumulation area (cleaning tank) 710 can accumulate the sterilizing liquid to soak and wash the self-cleaning object.

A self-cleaning method for a cleaning device will be described below by means of a method embodiment.

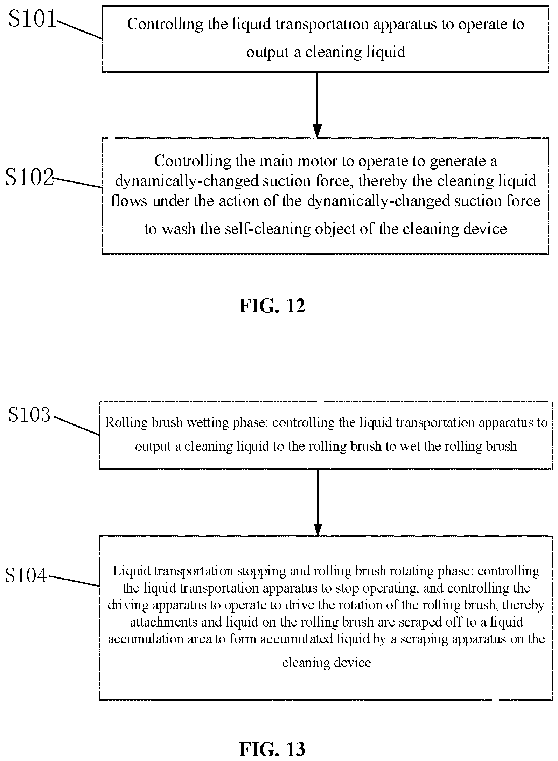

FIG. 12 is a first flow diagram of a self-cleaning method according to an embodiment of the present disclosure. Referring to FIG. 12, an embodiment of the present disclosure provides a self-cleaning method for a cleaning device. The self-cleaning method is applicable to a control apparatus for the cleaning device. The cleaning device also includes: a liquid transportation apparatus, a main motor, and at least one self-cleaning object. The self-cleaning method includes:
S101: controlling the liquid transportation apparatus to operate to output a cleaning liquid; and
S102: controlling the main motor to operate to generate a dynamically-changed suction force, thereby the cleaning liquid flows under the action of the dynamically-changed suction force to wash the self-cleaning object of the cleaning device.

In step S101, the cleaning liquid may be, but is not limited to, clear water, an aqueous solution with a cleaning agent, or a sterilizing liquid generated by electrolysis or other means. The cleaning liquid may be output from a pump on the cleaning device, or by turning on a valve in a liquid transportation line of the cleaning device.

In step S102, liquid suctioned by the main motor may be a cleaning liquid output by the liquid transportation apparatus, or a cleaning liquid which is output to a rolling brush by the liquid transportation apparatus and then spills from the rolling brush to a base, or a cleaning liquid which is scraped off from the rolling brush and then accumulated on a liquid accumulation area when the rolling brush is washed after being wet by the liquid transportation apparatus. The liquid accumulation area may be located on a self-cleaning base matching a self-cleaning device, or in a cavity of the self-cleaning device. The executing body that generates a dynamically-changed suction force may be the main motor in the cleaning device. The main motor can generate a suction force when operating. The main motor may have at least two powers, such as a low-level power and a high-level power. By controlling the main motor to switch between the at least two powers, a suction force with a changed magnitude is generated. Alternatively, by controlling the main motor to intermittently turn on and off, an intermittent suction force is generated. Alternatively, by controlling a fan in the main motor to switch between forward rotation and reverse rotation, a changed force is generated by the action of the suction and reverse blow.

For example, in a specific implementation, the main motor is controlled to operate at a low-level power for A seconds, then at a high-level power for B seconds, and then at the low-level power for A seconds and at the high-level power for B seconds, and so on until a set time or a set number of cycles is reached. Here, A may be greater than, equal to, or less than B. This embodiment is not limited thereto. Similarly, according to the solution of the main motor being intermittently turned on and off, the main motor may be controlled to operate for C seconds and stop for D seconds, then operate for C seconds and stop for D seconds, and so on until the set time or the set number of cycles is reached. Here, C may be greater than, equal to, or less than D, this embodiment is not limited thereto. Also, according to the solution of forward rotation and reverse rotation, the fan in the main motor may be controlled to rotate forwardly for E seconds and reversely for F seconds, then rotate forwardly for E seconds and reversely for F seconds, and so on until the set time or the set number of cycles is reached. Similarly, E may be greater than, equal to, or less than F, this embodiment is not limited thereto.

The main motor is controlled to operate in this way, thereby a dynamic suction force may be generated. Under the action of the dynamic suction force, the cleaning liquid from the liquid accumulation area to the recycling pipeline and in the recycling pipeline may simulate the effect of continuously flushing of water flow, thus effectively improving the self-cleaning effect.

For example, according to the solution of forward rotation and reverse rotation of the fan of the main motor, there is a reverse blowing force between two adjacent dynamic suction forces. For example, the time at which the suction force is generated can be so set, that the cleaning liquid flows from the suction nozzle of the cleaning device to an inlet of the recycling bucket or is close to the inlet and yet does not enter the recycling bucket, then under the action of the reverse blowing force, the cleaning liquid reversely flows from the inlet of the recycling bucket or the position close to the inlet to the suction nozzle, and so on. The cleaning liquid flushes back and forth in the recycling pipeline to wash the recycling pipeline. At the same time, this back and forth flushing force will also act on the rolling brush at the suction nozzle, and also wash the rolling brush. When there is more cleaning liquid, the cleaning liquid stirred by the rotating rolling brush can also wash a chamber wall of a rolling brush chamber.

In addition, in one embodiment provided by the present disclosure, step S101 can be performed simultaneously when step S102 is performed by the cleaning device, or step S 102 can be performed after step S101 ends, or step S 102 can be performed after step S101 has ended for a period of time. In the embodiment of the present disclosure, by optimizing a cleaning procedure for the cleaning device, the self-cleaning object is washed by the cleaning liquid under the action of the dynamically-changed suction force, thus effectively improving the self-cleaning effect on the cleaning device.

The self-cleaning object in the embodiments of the present disclosure may include but is not limited to a rolling brush, a rag, a recycling pipeline on the cleaning device, a recycling bucket, and the like. In an achievable technical solution, a rotary output apparatus, such as a motor + rotary output component (such as a pulsator structure in a washing machine), may be arranged in the recycling bucket. The rotary output component is arranged in the recycling bucket. When the cleaning device operates in the self-cleaning mode, the control apparatus for the cleaning device may send a control instruction to the motor. After receiving the control instruction, the motor drives the rotation of the rotary output component in the recycling bucket, so as to agitate the sewage in the recycling bucket to flow at a high speed, thus washing a bucket wall of the recycling bucket.

In one embodiment provided by the present disclosure, the self-cleaning object includes a rolling brush. Referring to FIG. 13, controlling the liquid transportation apparatus to operate to output a cleaning liquid includes the following phases:
S 103 : rolling brush wetting phase: controlling the liquid transportation apparatus to output the cleaning liquid to the rolling brush to wet the rolling brush; and
S104: liquid transportation stopping and rolling brush rotating phase: controlling the liquid transportation apparatus to stop operating, and controlling the driving apparatus to operate to drive the rotation of the rolling brush, thereby attachments and liquid on the rolling brush are scraped off to a liquid accumulation area to form accumulated liquid by a scraping apparatus on the cleaning device.

For the above-mentioned steps, in the presence of a cycle requirement, the rolling brush wetting phase and the liquid transportation stopping and rolling brush rotating phase are cycled according to the cycle requirement, i.e., step S103 and step S104 are cycled. The cycle requirement may be pre-configured, for example, cycling once, twice or more. This embodiment is not specifically limited thereto. In order to clean the rolling brush more completely and thoroughly, the cleaning device may perform steps S103 and S104 repeatedly. With the increase of repetitions, the amount of accumulated liquid will also increase, thereby it is more conducive to cleaning other self-cleaning objects. By repeating the above-mentioned steps, more liquid can be accumulated, and the dirt concentration of the accumulated liquid can be reduced, thereby facilitating the washing of other self-cleaning objects by the accumulated liquid.

In step S103, the rolling brush may absorb the cleaning liquid, a part of the cleaning liquid can stay on the rolling brush after the rolling brush absorbs the cleaning liquid, and the rolling brush is wet in the cleaning liquid. Attachments on the rolling brush can be wet in the process of wetting the rolling brush, thus improving the cleaning effect on the attachments on the rolling brush.

Further, in step S104, after sufficient cleaning liquid has been accumulated on the rolling brush, the cleaning device stops outputting the cleaning liquid to the rolling brush, the rolling brush rotates under the drive of the rolling brush motor, and then a scraping apparatus acting on the surface of the rolling brush can scrape off most of the cleaning liquid accumulated on the rolling brush. In the process of scraping off the cleaning liquid, the dirt on the rolling brush is also scraped off with the cleaning liquid, and the scraped attachments (dirt) and liquid are contained in the liquid accumulation area and enter the accumulated liquid. Specifically, the liquid accumulation area may be an area on the base of the cleaning device, such as a groove. In one embodiment provided by the present disclosure, in addition to being scraped off by the scraping apparatus, the attachments on the rolling brush and the cleaning liquid may be separated from the rolling brush more quickly under the centrifugal force of the rotation of the rolling brush, and the rolling brush may be cleaned more completely.

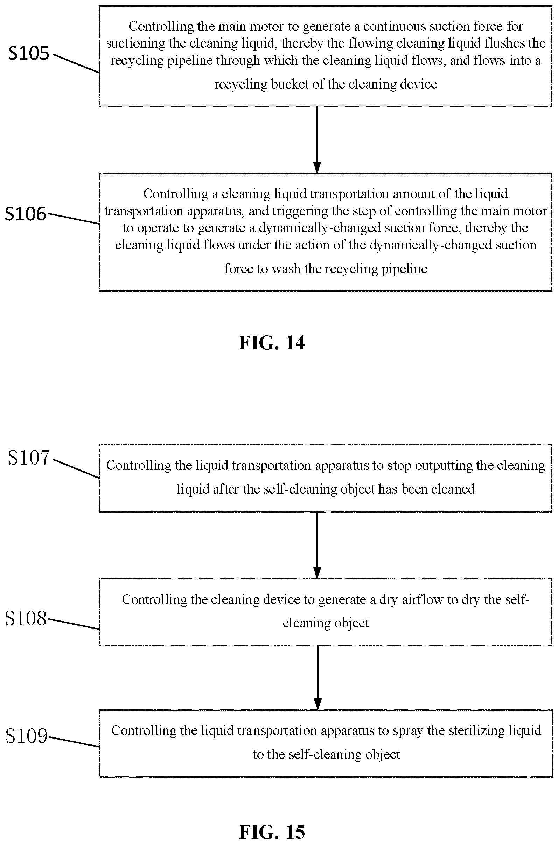

In one embodiment provided by the present disclosure, the self-cleaning object may also include a recycling pipeline. Referring to FIG. 14, the self-cleaning method for a cleaning device also includes the following steps:
S105: controlling the main motor to generate a continuous suction force for suctioning the cleaning liquid, thereby the flowing cleaning liquid flushes the recycling pipeline through which the cleaning liquid flows, and flows into a recycling bucket of the cleaning device.
S106: controlling a cleaning liquid transportation amount of the liquid transportation apparatus, and triggering the step of controlling the main motor to operate to generate a dynamically-changed suction force, thereby the cleaning liquid flows under the action of the dynamically-changed suction force to wash the recycling pipeline.

In step S105, after the main motor generates the suction force, the cleaning liquid flows along the recycling pipeline into the recycling bucket of the cleaning device under the action of the suction force. Specifically, the recycling bucket is a container on the cleaning device for storing wastewater generated after washing. When the cleaning device is a handheld floor scrubber, the recycling bucket is mounted on the cleaning device. And when the cleaning device is an intelligent scrubbing system with a base station, the recycling bucket may be a recycling bucket mounted on the base station. In addition, the recycling pipeline is a recycling pipeline connected between a suction port of the cleaning device and the recycling bucket.

In one embodiment provided by the present disclosure, it may be an intermittent process or a continuous process to generate a continuous suction force for suctioning the cleaning liquid, thereby the flowing cleaning liquid flushes the recycling pipeline through which the cleaning liquid flows, and flows into a recycling bucket of the cleaning device. For example, after sufficient cleaning liquid is accumulated on the self-cleaning base, the main motor supplies the maximum suction force to continuously suction the cleaning liquid into the recycling bucket via the recycling pipeline. During the process of suctioning the cleaning liquid into the recycling bucket, a large amount of cleaning liquid flows into the recycling bucket at a high speed, and a large flushing force may be generated to flush off the dirt in the recycling pipeline. In addition, the main motor may also operate intermittently. For example, after sufficient cleaning liquid is accumulated in a cleaning liquid area, the main motor supplies a suction force to suction a part of the cleaning liquid into the recycling bucket via the recycling pipeline, and then stops operating for a period of time. After a sufficient amount of cleaning liquid is accumulated in the cleaning liquid area, the main motor supplies a suction force again, and suctions the cleaning liquid into the recycling bucket via the recycling pipeline.

In step S106, the output amount of the cleaning liquid may be reduced by controlling, for example, the power of a pump, a operating mode of the pump, or a operating time of the liquid transportation apparatus. Alternatively, when the liquid transportation apparatus is a valve in the liquid transportation line, the output amount may be controlled by controlling an opening degree of the valve. By reducing the output amount of the cleaning liquid, excessive water accumulated in the liquid accumulation area (a cleaning liquid containing area on a self-cleaning device or a self-cleaning base) can be prevented from spilling from the liquid accumulation area. In the flow process of the cleaning liquid under the action of the dynamically-changed suction force, only a small part of the cleaning liquid is suctioned into a sewage tank, while most of the cleaning liquid is in the recycling pipeline and the liquid accumulation area. If the output amount of the cleaning liquid is not reduced, with the prolongation of the washing time, the accumulation of the cleaning liquid in the liquid accumulation area will increase, and the cleaning liquid is prone to spill from the liquid accumulation area. In step S105, a large amount of cleaning liquid is also suctioned into the recycling bucket. In step S106, the main motor is controlled to generate a dynamic suction force in order to simulate the continuously flushing of water flow. If the output amount of the cleaning liquid is large, the flowing cleaning liquid is prone to splash and pollute the surrounding environment. In one embodiment provided by the present disclosure, in the process of washing the recycling pipeline with the cleaning liquid flowing, the rolling brush or rag can also be cleaned indirectly with the flowing cleaning liquid. Since the cleaning liquid is initially accumulated in the liquid accumulation area, when the cleaning liquid in the liquid accumulation area is suctioned to the recycling pipeline, the cleaning liquid will flow back to the liquid accumulation area during the back-and-forth washing, and the cleaning liquid flowing back during the period can wash the rolling brush or rag.

In the embodiment provided by the present disclosure, generating a dynamically-changed suction force includes a variety of implementations. By controlling the power of the main motor, the power may be switched between at least two different powers, thereby the main motor can generate different suction forces. For example, when the cleaning liquid needs to flow from the bottom of the recycling pipeline to the top of the recycling pipeline, the power of the main motor may be maximized and the maximum suction force may be generated. At this moment, the suction force of the main motor on the cleaning liquid is greater than the gravity of the cleaning liquid. When the cleaning liquid needs to flow from the top of the recycling pipeline to the bottom of the recycling pipeline, the power of the main motor may be reduced, thereby the suction force generated cannot overcome the gravity of the cleaning liquid, and the cleaning liquid can flow from the top of the recycling pipeline to the bottom of the recycling pipeline. Then, by cyclically changing the power value of the main motor, the cleaning liquid can flush back and forth in the recycling pipeline. Similarly, the rolling brush or rag may be washed in this way. The cleaning liquid is first suctioned up to the topmost of the recycling pipeline, then flushed down from the top of the recycling pipeline, and impacted on the rolling brush or rag. The rolling brush or rag can be effectively cleaned by cycling this process.

In addition, in one embodiment provided by the present disclosure, it is also possible to generate an intermittent suction force by controlling the main motor to be intermittently turned on and off, thus generating a dynamically-changed suction force. Alternatively, by controlling a fan in the main motor to switch between forward rotation and reverse rotation, a changed force is generated by the action of the suction and reverse blow, thus making the suction force to be dynamically-changed. In addition, there is also a feasible solution. In other words, the main motor is controlled to generate a dynamically-changed suction force through the valve. For example, an electronically controlled valve is mounted at one end of the suction port of the main motor. The air volume suctioned by the main motor can be controlled by controlling the opening degree of the valve, thereby the suction force of the main motor can be effectively controlled, thus generating a dynamically-changed suction force.

In one embodiment provided by the present disclosure, the cleaning device also includes a sterilizing liquid production apparatus. The self-cleaning method also includes:
- controlling the sterilizing liquid production apparatus to operate to produce a sterilizing liquid, and using the sterilizing liquid as a cleaning liquid or spraying the sterilizing liquid to the self-cleaning object after the self-cleaning object has been cleaned.

In the process of producing the sterilizing liquid, an electrode with a certain voltage may be put into tap water, and a certain amount of hypochlorous acid will be produced under the action of the electrode since the tap water contains a certain amount of chlorine. In a specific embodiment, the electrolytic electrode is often arranged in a water tank containing a cleaning liquid (generally tap water or clear water having a certain salt content), and then a certain amount of sterilizing liquid can be generated by electrolyzing the cleaning liquid. For the process of producing the sterilizing liquid in the self-cleaning method, the process can be prepared in advance before the self-cleaning process of the cleaning device starts, and the sterilizing liquid can also be produced throughout the self-cleaning process or the sterilizing liquid can be produced in certain self-cleaning steps of the cleaning device.

Further, referring to FIG. 15, the self-cleaning method provided by the embodiment of the present disclosure also includes the following steps:
S107: controlling the liquid transportation apparatus to stop outputting the cleaning liquid after the self-cleaning object has been cleaned;
S108: controlling the cleaning device to generate a dry airflow to dry the self-cleaning object; and
S109: controlling the liquid transportation apparatus to spray the sterilizing liquid to the self-cleaning object.

In step S107, when the liquid transportation apparatus on the cleaning device stops outputting the cleaning liquid, the production of the sterilizing liquid in the cleaning device may be stopped or continued. After the self-cleaning device has been washed, in order to facilitate the subsequent maintenance of the self-cleaning object, the cleaning device will generate a dry airflow for drying the cleaning object. Specifically, there are different drying methods for different self-cleaning objects. For example, for a rolling brush, the self-cleaning object may be dried together by the airflow disturbed by the rotation of the rolling brush and the suction airflow generated by the main motor. The recycling pipeline may be dried by the suction airflow generated by the main motor.

Further, in order to keep the self-cleaning object in a clean and sterile environment for a long time, in step S109, the self-cleaning device is sprayed with a sterilizing liquid, and the sterilizing liquid is retained on the self-cleaning device for a certain period of time, thus achieving a purpose of anti-bacteria. In addition, specifically, in order to make the sterilizing liquid have better sterilizing effect and sterilizing time, the sterilizing liquid sprayed at this moment has a higher concentration. The concentration of the sterilizing liquid can be increased by prolonging the production time of the sterilizing liquid. Alternatively, the concentration of the sterilizing liquid is increased by adding an agent with a certain sterilizing function to the sterilizing liquid by a user.

In one embodiment provided by the present disclosure, the self-cleaning method also includes the following steps:
S110: detecting the cleanliness of the self-cleaning object, and determining that the self-cleaning object has been cleaned if the cleanliness meets a set requirement; or
S110': determining that the self-cleaning object has been cleaned when the cleaning time reaches a preset self-cleaning time.

Specifically, a detection component may be arranged on the self-cleaning object of the cleaning device, and the detection component can accurately detect the cleanliness of a self-cleaning part. For example, at least one detection component is arranged in the rolling brush, the rolling brush chamber, the recycling pipeline, and the recycling bucket respectively.

In addition, step S110 can optimize the procedure of the self-cleaning process of the cleaning device. For example, in the process of performing each of the above-mentioned steps, such as steps S101 to S106, step S110 may be performed. In other words, the cleanliness of the self-cleaning object may be detected at any time in the self-cleaning process. When the detection component detects that the cleanliness of the self-cleaning object meets a set requirement, the self-cleaning object has been cleaned, and the process proceeds to the next step. In this way, the self-cleaning time can be shortened, thus making the self-cleaning process of the self-cleaning part more efficient, and reducing unnecessary waste.

Alternatively, for example, in step S110', if the self-cleaning time reaches a preset self-cleaning time, it is determined that the self-cleaning object has been cleaned. At this moment, there are two situations: one in which the self-cleaning object has been cleaned to meet the cleanliness requirement, and another in which the self-cleaning object has not been cleaned. According to this solution, the preset self-cleaning time is set to avoid the situation where the cleaning device is always in the self-cleaning mode due to some stubborn stains.

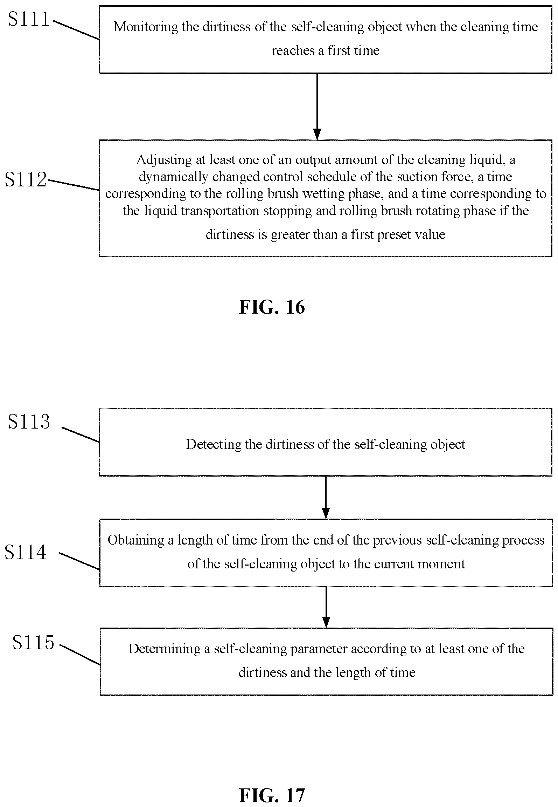

Further, referring to FIG. 16, in one embodiment provided by the present disclosure, the self-cleaning method also includes the following steps:
S111: monitoring the dirtiness of the self-cleaning object when the cleaning time reaches a first time; and
S112: adjusting at least one of an output amount of the cleaning liquid, a dynamically changed control schedule of the suction force, a time corresponding to the rolling brush wetting phase, and a time corresponding to the liquid transportation stopping and rolling brush rotating phase if the dirtiness is greater than a first preset value.

The first time is less than the preset self-cleaning time. In steps S111 and S112, by detecting the dirtiness of the self-cleaning object, and adjusting at least one of the output amount of the cleaning liquid, the dynamically changed control schedule of the suction force, the time corresponding to the rolling brush wetting phase, and the time corresponding to the liquid transportation stopping and rolling brush rotating phase according to actual situations, the cleaning efficiency of the self-cleaning object can be effectively improved, and the cleaning time of the self-cleaning object and resources consumed during cleaning can be reduced. Specifically, in the process of performing steps S101 to S106, the cleaning device may perform steps S111 and S112 before any step or simultaneously, and rationally adjust the amount of the cleaning liquid transported to the rolling brush by the liquid transportation apparatus, the dynamically changed control schedule of the suction force, the time corresponding to the rolling brush wetting phase, or the time corresponding to the liquid transportation stopping and rolling brush rotating phase according to the dirtiness of the rolling brush.

Further, referring to FIG. 17, in one embodiment provided by the present disclosure, the self-cleaning method also includes the following steps:
S113: detecting the dirtiness of the self-cleaning object;
S114: obtaining a length of time from the end of the previous self-cleaning process of the self-cleaning object to the current moment; and
S115: determining a self-cleaning parameter according to at least one of the dirtiness and the length of time.

Steps S113 to S115 may be operations prior to S101 in this embodiment. In step S115, the self-cleaning parameter includes at least one of a production amount of the sterilizing liquid, an output amount of the sterilizing liquid to be output, a self-cleaning time, and a dynamically changed control schedule of the suction force. Specifically, for example, in the process of producing the sterilizing liquid, the production amount of the sterilizing liquid may be determined according to the dirtiness of the self-cleaning object and the length of time from the end of the previous self-cleaning process of the self-cleaning object to the current moment, thereby the self-cleaning object can have enough sterilizing liquid in the self-cleaning process, and the produced sterilizing liquid can also be used in time to reduce unnecessary waste. For example, in step S103, the amount of the cleaning liquid (containing the sterilizing agent) output to the rolling brush by the liquid transportation apparatus may be determined according to at least one of the dirtiness of the rolling brush and the time, thereby the rolling brush can be washed using the minimum amount of cleaning liquid. In step S104, the rotation speed of the rolling brush may also be determined according to at least one of the dirtiness of the rolling brush and the time, thus saving the power of the self-cleaning device and prolonging its life. In addition, in step S106, when the main motor of the cleaning device outputs a dynamically-changed suction force to wash the recycling pipeline, the control schedule for dynamically changing the suction force may also be determined according to at least one of the dirtiness of the rolling brush and the time. When the dirtiness of the recycling pipeline is severe, the suction force generated by the main motor may be controlled by a strong dynamic changed control schedule. When the dirtiness of the recycling pipeline is light or the time is short, the suction force generated by the main motor may be controlled by a common dynamically changed control schedule.

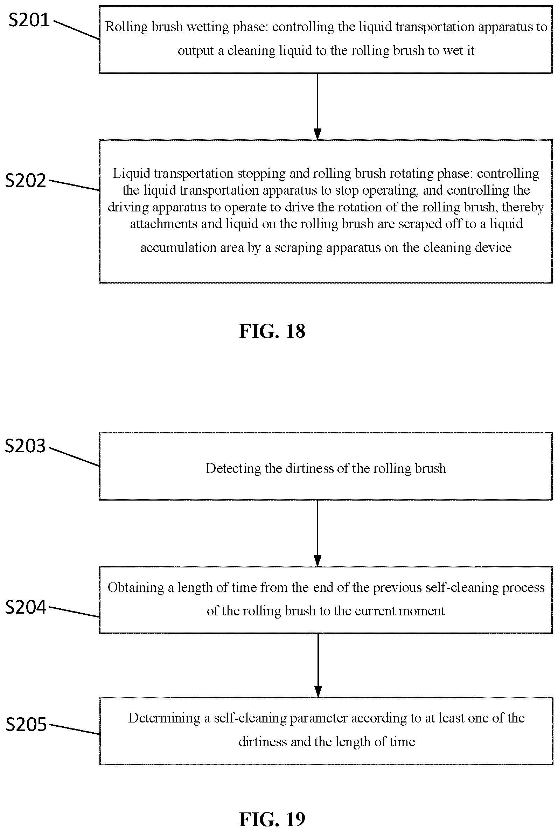

In one embodiment provided by the present disclosure, referring to FIG. 18, it is also provided another self-cleaning method for a cleaning device, applicable to a control apparatus for the cleaning device. The cleaning device also includes: a liquid transportation apparatus, a driving apparatus, and a rolling brush. The self-cleaning method includes the following phases:
S201: rolling brush wetting phase: controlling the liquid transportation apparatus to output a cleaning liquid to the rolling brush to wet it; and
S202: liquid transportation stopping and rolling brush rotating phase: controlling the liquid transportation apparatus to stop operating, and controlling the driving apparatus to operate to drive the rotation of the rolling brush, thereby attachments and liquid on the rolling brush are scraped off to a liquid accumulation area by a scraping apparatus on the cleaning device.

For the above-mentioned steps, in the presence of a cycle requirement, the rolling brush wetting phase and the liquid transportation stopping and rolling brush rotating phase are cycled according to the cycle requirement, i.e., step S201 and step S202 are cycled. The cycle requirement may be pre-configured, for example, cycling once, twice or more. This embodiment is not specifically limited thereto. In order to clean the rolling brush more completely and thoroughly, the cleaning device may perform steps S201 and S202 repeatedly. With the increase of repetitions, the amount of the cleaning liquid accumulated in the liquid accumulation area will also increase, thereby it is more conducive to cleaning other self-cleaning objects. By repeating the above-mentioned steps, more cleaning liquid can be accumulated, and the dirt concentration of the cleaning liquid can be reduced, thereby facilitating the washing of other self-cleaning objects by the cleaning liquid.

In step S201, the rolling brush may absorb the cleaning liquid, a part of the cleaning liquid can stay on the rolling brush after the rolling brush absorbs the cleaning liquid, and the rolling brush is wet in the cleaning liquid. Attachments on the rolling brush can be wet in the process of wetting the rolling brush, thus improving the cleaning effect on the attachments on the rolling brush.

Further, in step S202, after sufficient cleaning liquid has been accumulated on the rolling brush, the cleaning device stops outputting the cleaning liquid to the rolling brush, the rolling brush rotates under the drive of the rolling brush motor, and then a scraping apparatus acting on the surface of the rolling brush can scrape off most of the cleaning liquid accumulated on the rolling brush. In the process of scraping off the cleaning liquid, the dirt on the rolling brush is also scraped off with the cleaning liquid, and the scraped attachments (dirt) and liquid are contained in the liquid accumulation area. Specifically, the liquid accumulation area may be an area on the self-cleaning base of the cleaning device, such as a groove. In one embodiment provided by the present disclosure, in addition to being scraped off by the scraping apparatus, the attachments on the rolling brush and the cleaning liquid may be separated from the rolling brush more quickly under the centrifugal force of the rotation of the rolling brush, and the rolling brush may be cleaned more completely.

In one embodiment provided by the present disclosure, referring to FIG. 19, the self-cleaning method also includes:
S203: detecting the dirtiness of the rolling brush;
S204: obtaining a length of time from the end of the previous self-cleaning process of the rolling brush to the current moment; and
S205: determining a self-cleaning parameter according to at least one of the dirtiness and the length of time.

Steps S203 to S205 may be operations prior to S201 in this embodiment. In step S205, the self-cleaning parameter includes: at least one of a production amount of the sterilizing liquid, an output amount of the sterilizing liquid to be output, a self-cleaning time, and a dynamically changed control schedule of the suction force. Specifically, for example, in the process of producing the sterilizing liquid, the production amount of the sterilizing liquid may be determined according to the dirtiness of the self-cleaning object and the length of time from the end of the previous self-cleaning process of the self-cleaning object to the current moment, thereby the self-cleaning object can have enough sterilizing liquid in the self-cleaning process, and the produced sterilizing liquid can also be used in time to reduce unnecessary waste. For example, the amount of the cleaning liquid (containing the sterilizing agent) output to the rolling brush by the liquid transportation apparatus may be determined according to at least one of the dirtiness of the rolling brush and the time, thereby the rolling brush can be washed using the minimum amount of cleaning liquid. In step S202, the rotation speed of the rolling brush may also be determined according to at least one of the dirtiness of the rolling brush and the time, thus saving the power of the self-cleaning device and prolonging its life. In addition, when the main motor of the cleaning device outputs a dynamically-changed suction force to wash the recycling pipeline, the control schedule for dynamically changing the suction force may also be determined according to at least one of the dirtiness of the rolling brush and the time. When the dirtiness of the recycling pipeline is severe, the suction force generated by the main motor may be controlled by a strong dynamically changed control schedule. When the dirtiness of the recycling pipeline is light or the time is short, the suction force generated by the main motor may be controlled by a common dynamically changed control schedule.

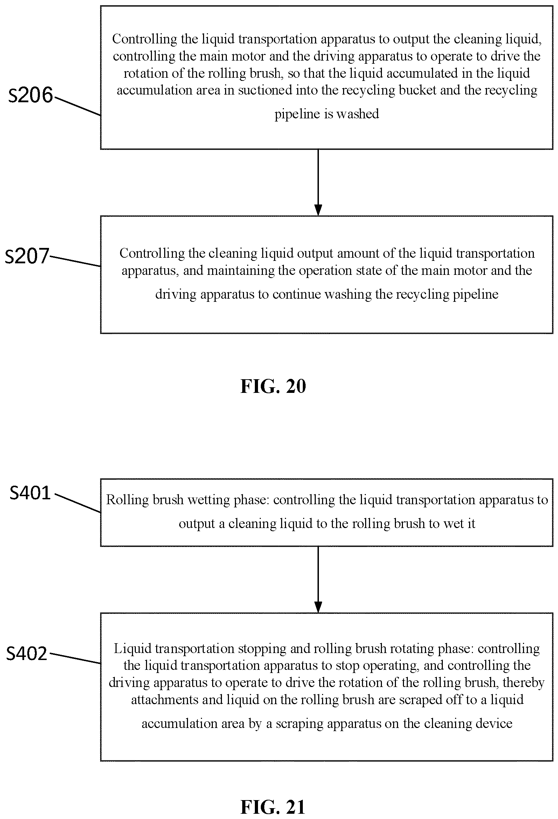

In one embodiment provided by the present disclosure, the cleaning device also includes a main motor, a recycling bucket, and a recycling pipeline. Referring to FIG. 20, the self-cleaning method also includes the following steps:
S206: controlling the liquid transportation apparatus to output the cleaning liquid, controlling the main motor and the driving apparatus to operate to drive the rotation of the rolling brush, so that the liquid accumulated in the liquid accumulation area is suctioned into the recycling bucket and the recycling pipeline is washed; and
S207: controlling the cleaning liquid output amount of the liquid transportation apparatus, and maintaining the operating state of the main motor and the driving apparatus to continue washing the recycling pipeline.

In step S206, the driving apparatus operates and drives the rolling brush to rotate, thereby the rolling brush continues to complete self-cleaning. In the self-cleaning process, the rolling brush generates accumulated liquid, which is contained in the liquid accumulation area. When the liquid transportation apparatus continuously outputs the cleaning liquid, the amount of liquid accumulation will also increase. Under the action of the suction force generated by the main motor, the accumulated liquid will be suctioned into the recycling bucket. When the accumulated liquid flows from the liquid accumulation area to the recycling bucket, the flowing accumulated liquid can flush the pipeline. In step 207, by controlling the cleaning liquid output amount of the liquid transportation apparatus, the utilization rate of the cleaning liquid can be improved. Specifically, the specific output amount of the cleaning liquid can be adjusted according to the dirtiness of the rolling brush by performing steps S203 to S205. In addition, by adjusting the output amount of the cleaning liquid, the amount of the cleaning liquid can also be reduced. For example, after the rolling brush is cleaned, the recycling pipeline is also initially cleaned. Since the cleaning liquid that cleaned the recycling pipeline before is sewage scraped from the rolling brush, a certain amount of sewage will remain on the recycling pipeline when flushing the recycling pipeline. At this moment, a lot of water is not required to clear the sewage. Therefore, by controlling the output amount of the cleaning liquid, the recycling pipeline is cleaned with a small amount of cleaning liquid.

Further, the self-cleaning method also includes:
- controlling the main motor to generate a dynamically-changed suction force, thereby the cleaning liquid flows under the action of the dynamically-changed suction force, and cleans the recycling pipeline by serving as a simulated water flow.

In order to make the flushing effect on the recycling pipeline better, the cleaning liquid flows through the dynamic suction force, and flushes the recycling pipeline. Specifically, when washing the recycling pipeline, the main motor first supplies the maximum suction force to suction the cleaning liquid to the end of the recycling pipeline (an end close to the recycling bucket). Then, the main motor reduces the suction force, and the cleaning liquid will flow back from the end of the recycling pipeline to the bottom end of the recycling pipeline. After repeated cycles, the suction force generated by the main motor can be dynamically changed, thereby the cleaning liquid can wash the recycling pipeline back and forth.

The executing body of each step in the above-mentioned embodiment is the cleaning device. The executing body of the self-cleaning method for a cleaning device provided by the following embodiment is a control apparatus for a cleaning device. In addition, the cleaning device also includes: a liquid transportation apparatus, a main motor, and a self-cleaning object. The self-cleaning method for a cleaning device includes the following steps:
S301: controlling the liquid transportation apparatus to operate to output a sterilizing liquid; and
S302: controlling the main motor to operate to generate a dynamically-changed suction force, thereby the cleaning liquid flows under the action of the dynamically-changed suction force to wash the self-cleaning object.

When the cleaning device is located on the self-cleaning base, the cleaning liquid output first will wet a cleaning part (rag or rolling brush). When the rolling brush performs the self-cleaning process, the cleaning liquid on the rolling brush will be scraped off to form accumulated liquid. Alternatively, the output cleaning liquid will wet the cleaning part. After the cleaning part absorbs the maximum amount of water, excessive water will be accumulated in a cavity of the self-cleaning base or a containing cavity of the cleaning device. At this moment, the cleaning liquid scraped off from the rolling brush and the cleaning liquid accumulated on the cleaning part, in the cavity of the self-cleaning base or in the containing cavity of the cleaning device are equivalent to the accumulated liquid. Then, by changing the suction force of the main motor, the suction force will be dynamically changed. The accumulated liquid will flow under the action of the dynamically-changed suction force, and the direction of flow will be continuously changed with the dynamically-changed suction force. In the process of flow, the self-cleaning object can be washed.

Further, when the self-cleaning object includes a rolling brush, the cleaning device also includes a driving apparatus. Accordingly, step S301 of controlling the liquid transportation apparatus to operate to output a sterilizing liquid includes the following phases:
S303: rolling brush wetting phase: controlling the liquid transportation apparatus to output a sterilizing liquid to the rolling brush to wet it; and
S304: liquid transportation stopping and rolling brush rotating phase: controlling the liquid transportation apparatus to stop operating, and controlling the driving apparatus to operate to drive the rotation of the rolling brush, thereby attachments and liquid on the rolling brush are scraped off to a liquid accumulation area to form accumulated liquid by a scraping apparatus on the cleaning device.

In the above-mentioned steps, in the presence of a cycle requirement, the rolling brush wetting phase and the liquid transportation stopping and rolling brush rotating phase are cycled according to the cycle requirement.

In specific use, the cleaning device first enters the self-cleaning mode. In response to a control signal of the self-cleaning mode, the control apparatus controls the liquid transportation apparatus to operate and to transport the sterilizing liquid to the rolling brush. At this moment, the rolling brush is wet. After the rolling brush is wet, the control apparatus controls the liquid transportation apparatus to stop operating, and controls the driving apparatus to operate to drive the rotation of the rolling brush, thereby attachments and liquid on the rolling brush are scraped off to a liquid accumulation area to form accumulated liquid by a scraping apparatus on the cleaning device. Then, the control apparatus controls the main motor to operate to generate a dynamically-changed suction force, thereby the accumulated liquid flows under the action of the dynamically-changed suction force to wash the self-cleaning object. Specifically, the accumulated liquid may be formed in the liquid accumulation area by the scraping apparatus scraping off the sterilizing liquid on the rolling brush after the rolling brush is wet, or may be formed jointly by the sterilizing liquid flowing out from the rolling brush and the sterilizing liquid scraped off from the rolling brush by the scraping apparatus when the rolling brush is wet. When the accumulated liquid flows under the action of the dynamically-changed suction force to wash the self-cleaning object, the self-cleaning object may be one object or a plurality of objects. For example, when the self-cleaning object is one object, the self-cleaning object may be a recycling pipeline. When the self-cleaning objects are a plurality of objects, the self-cleaning objects may be a rolling brush and a recycling pipeline.

Further, in one embodiment provided by the present disclosure, the self-cleaning object also includes a recycling pipeline. Accordingly, the method provided by this embodiment may also include the following steps:
S305: controlling the main motor to generate a continuous suction force for suctioning the accumulated liquid, thereby the flowing accumulated liquid flushes the recycling pipeline through which the accumulated liquid flows, and flows into a recycling bucket of the cleaning device; and
S306: controlling a liquid amount of the liquid transportation apparatus, and triggering the step of controlling the main motor to operate to generate a dynamically-changed suction force, thereby the accumulated liquid flows under the action of the dynamically-changed suction force to wash the recycling pipeline.

In the above-mentioned steps, controlling the main motor to operate to generate a dynamically-changed suction force can be based on: 1. controlling the main motor to switch between at least two powers to generate a suction force with a changed magnitude; 2. controlling the main motor to intermittently turn on and off to generate an intermittent suction force; and, 3. controlling a fan in the main motor to switch between forward rotation and reverse rotation to generate a changed force by means of the action of the suction and reverse blow.

Further, the cleaning device also includes a sterilizing liquid production apparatus. The self-cleaning method for a cleaning device also includes: controlling, by the controller, the sterilizing liquid production apparatus to operate to produce a sterilizing liquid. The sterilizing liquid production apparatus may produce the sterilizing liquid in a variety of ways. In one specific embodiment, the sterilizing liquid may be generated by arranging an electrode in the cleaning liquid and then electrolyzing the cleaning liquid. Alternatively, a sterilizing liquid production agent is contained in the sterilizing liquid production apparatus, and the sterilizing liquid production agent is continuously released into the cleaning liquid by the sterilizing liquid production apparatus, thereby the cleaning device produces a sterilizing agent.

Referring to FIG. 21, in one embodiment provided by the present disclosure, there is provided another self-cleaning method for a cleaning device, applicable to a control apparatus for the cleaning device. The cleaning device also includes: a liquid transportation apparatus, a driving apparatus, and a rolling brush. The self-cleaning method includes the following phases:
S401: rolling brush wetting phase: controlling the liquid transportation apparatus to output a cleaning liquid to the rolling brush to wet it; and
S402: liquid transportation stopping and rolling brush rotating phase: controlling the liquid transportation apparatus to stop operating, and controlling the driving apparatus to operate to drive the rotation of the rolling brush, thereby attachments and liquid on the rolling brush are scraped off to a liquid accumulation area by a scraping apparatus on the cleaning device.

For the above-mentioned steps, in the presence of a cycle requirement, the rolling brush wetting phase and the liquid transportation stopping and rolling brush rotating phase are cycled according to the cycle requirement, and step S401 and step S402 are cycled. The cycle requirement may be pre-configured, for example, cycling once, twice or more. This embodiment is not specifically limited thereto. In order to clean the rolling brush more completely and thoroughly, the cleaning device may perform steps S401 and S402 repeatedly. With the increase of repetitions, the amount of the cleaning liquid accumulated in the liquid accumulation area will also increase, thereby it is more conducive to cleaning other self-cleaning objects. By repeating the above-mentioned steps, more cleaning liquid can be accumulated, and the dirt concentration of the cleaning liquid can be reduced, thereby facilitating the washing of other self-cleaning objects by the cleaning liquid.

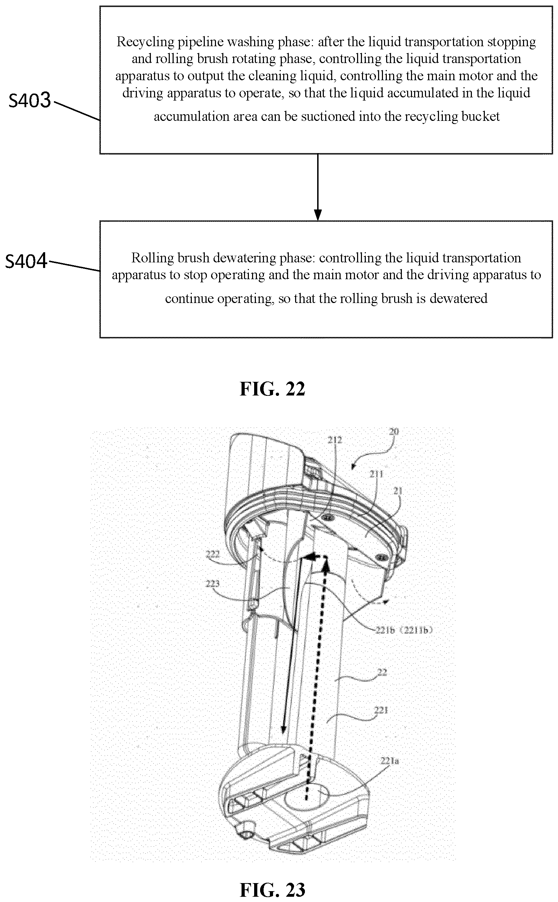

Further, referring to FIG. 22, in one embodiment provided by the present disclosure, the cleaning device also includes a main motor, a recycling bucket, and a recycling pipeline. The self-cleaning method also includes the following steps:
S403: recycling pipeline washing phase: after the liquid transportation stopping and rolling brush rotating phase, controlling the liquid transportation apparatus to output the cleaning liquid, controlling the main motor and the driving apparatus to operate, so that the liquid accumulated in the liquid accumulation area can be suctioned into the recycling bucket; and
S404: rolling brush dewatering phase: controlling the liquid transportation apparatus to stop operating and the main motor and the driving apparatus to continue operating, so that the rolling brush is dewatered.

In step S403, the liquid transportation apparatus outputs a cleaning liquid for wetting the rolling brush or forming accumulated liquid. The accumulated liquid is liquid contained in the liquid accumulation area. The main motor operates to generate a suction force, and the driving apparatus drives the rolling brush to rotate to clean the rolling brush. The suction force generated by the main motor suctions the liquid accumulated in the liquid accumulation area into the recycling bucket, and the accumulated liquid cleans the recycling pipeline when being suctioned to the recycling bucket.

In step S404, the driving apparatus drives the rolling brush to rotate to dewater the rolling brush, and at this time the main motor operates to generate a suction force to suction the liquid accumulated in the liquid accumulation area or the cleaning liquid scraped off from the rolling brush to the recycling bucket.

Further, in one embodiment provided by the present disclosure, the cleaning device also includes a main motor, a recycling bucket, and a recycling pipeline. The self-cleaning method also includes the following phase:
- rolling brush dewatering and recycling phase: after the liquid transportation stopping and rolling brush rotating phase, controlling the main motor and the driving apparatus to operate, so that the rolling brush is dewatered and the accumulated liquid is recycled to the recycling bucket via the recycling pipeline.

In the rolling brush dewatering phase, the liquid transportation apparatus may be in a operating state or a non-operating state. The driving apparatus operates to drive the rotation of the rolling brush. During the rotation, the rolling brush may rotate at different speeds according to the actual situation. The rolling brush can scrape off or centrifuge the cleaning liquid on the rolling brush to the liquid accumulation area. At the same time, the main motor operates and generates a suction force to suction the liquid in the liquid accumulation area or on the rolling brush to the recycling bucket. In the process of suctioning to the recycling bucket, the accumulated liquid flows from the recycling pipeline to the recycling bucket. Therefore, in this process, the recycling pipeline can be washed.

Further, in one embodiment provided by the present disclosure, prior to the rolling brush wetting phase, the self-cleaning method also includes the following phase:
- sterilizing liquid production phase: controlling the sterilizing liquid production apparatus to operate to generate a sterilizing liquid.

The sterilizing liquid production apparatus keeps operating in at least one phase after the sterilizing liquid production phase. After the sterilizing liquid production phase, the sterilizing liquid production apparatus may produce the sterilizing liquid at a stable rate in the entire self-cleaning process of the cleaning device, and may produce the sterilizing liquid at different rates in different phases or processes. For example, in the rolling brush soaking phase, the sterilizing liquid production apparatus operates at full power and produces the sterilizing liquid at a maximum speed. In the recycling pipeline washing phase, the sterilizing liquid production apparatus operates at typical power and produces the sterilizing liquid at a medium speed.

Further, in one embodiment provided by the present disclosure, the self-cleaning method also includes the following steps:
S405: detecting the dirtiness of the rolling brush; and
S406: determining at least one self-cleaning parameter according to the dirtiness.

The self-cleaning parameter includes at least one of an output amount of the cleaning liquid, a operating time of the liquid transportation apparatus, a rotation speed of the rolling brush, and the number of cycles of the rolling brush wetting phase and the liquid transportation stopping and rolling brush rotating phase. Specifically, for example, in the process of producing the sterilizing liquid, the production amount of the sterilizing liquid may be determined according to the dirtiness of the self-cleaning object and the length of time from the end of the previous self-cleaning of the self-cleaning object to the current moment, thereby the self-cleaning object can have enough sterilizing liquid in the self-cleaning process, and the produced sterilizing liquid can also be used in time to reduce unnecessary waste. In one embodiment provided by the present disclosure, the self-cleaning process is roughly divided into four phases: producing a sterilizing liquid, soaking the rolling brush, washing the recycling pipeline, and dewatering the rolling brush. The specific cleaning process may be referred to Table 3 below.

| Phase | | Main motor | Rolling brush motor | Liquid transportation apparatus | Production of sterilizing liquid | Notes |
|---|---|---|---|---|---|---|
| Producing the sterilizing liquid | | OFF | OFF | OFF | ON/OFF | 30S |
| Soaking the rolling brush | A1 | OFF | OFF | ON | ON/OFF | The liquid transportation apparatus is turned on to accumulate water, and the rolling brush is soaked with the sterilizing liquid |
| | A2 | OFF | ON | OFF | ON/OFF | The rolling brush rotates to ensure the soaking effect |
| Washing the recycling pipeline | | ON | ON | ON | ON/OFF | The main motor, the rolling brush, and the liquid transportation apparatus are turned on simultaneously, the rolling brush and the recycling pipeline are washed, and dirty water is suctioned away. Optionally, the suction force of the main motor is adjustable, the simulated water flow continuously flushes to clean the recycling pipeline, and the water volume of the liquid transportation apparatus and time are adjustable and are intelligently adjusted according to the degree of dirtiness |
| Dewatering the rolling brush | | ON | ON | OFF | ON/OFF | After cleaning, residual water in the self-cleaning base and the rolling brush is suctioned up, and sufficient sterilizing liquid is produced |

In the above table, the phase of soaking the rolling brush can be divided in two steps, which may be repeated until the rolling brush is cleaned. In addition, "Producing the sterilizing liquid" in the table represents that the sterilizing liquid production apparatus produces a sterilizing liquid. In one specific embodiment, the sterilizing liquid may be obtained by electrolyzing the cleaning liquid. The cleaning liquid may be ordinary clear water or clear water containing sodium chloride. In the production process of the sterilizing liquid, there are a variety of technical solutions in the embodiment provided by the present disclosure for determining whether the sterilizing liquid production apparatus is turned on or not. The first technical solution is that, after the cleaning device starts the self-cleaning procedure, the sterilizing liquid production apparatus first starts to produce the sterilizing liquid, and other self-cleaning steps will be started after the sterilizing liquid reaches a certain amount, and the sterilizing production apparatus is always turned on in the subsequent self-cleaning steps. The second technical solution is that, after the cleaning device starts the self-cleaning procedure, the sterilizing liquid production apparatus first starts to produce the sterilizing liquid, and when the sterilizing liquid reaches a certain amount, the sterilizing liquid production apparatus is turned off, and then other self-cleaning steps are started. The third technical solution is that, the demand for the sterilizing liquid is determined by detecting the dirtiness of the rolling brush, and then it is determined whether the sterilizing liquid production apparatus is turned on according to the demand for the sterilizing liquid in combination with the preset cleaning time in the self-cleaning process. For example, in the self-cleaning process, a self-cleaning device determines the demand for the sterilizing liquid in advance by detecting the dirtiness of the rolling brush, thus also determining the time for producing the sterilizing liquid. Then, the sterilizing liquid production apparatus is turned on in the sterilizing liquid production phase and the rolling brush soaking phase, and the sterilizing liquid production apparatus is turned off in the recycling pipeline cleaning phase and the rolling brush dewatering phase.

After the self-cleaning procedure is started, the sterilizing liquid is first produced: the main motor in the cleaning device is turned off, the rolling brush motor is turned off, the liquid transportation apparatus is turned off, the sterilizing liquid production apparatus is turned on, and this phase lasts for 30 seconds to make the amount of the sterilizing liquid meet the usage requirements.

Then, the phase of soaking the rolling brush includes two phases: a rolling brush wetting phase (A1) and a liquid transportation stopping and rolling brush rotating phase (A2). The main motor in the cleaning device is turned off in the rolling brush wetting phase, and sewage cannot be suctioned. The liquid transportation apparatus transports the sterilizing liquid to the rolling brush, and the rolling brush motor stops rotating. At this moment, the sterilizing liquid production apparatus is turned on. Since the rolling brush has a certain water absorption, the sterilizing liquid can be retained on the rolling brush and wet the rolling brush. In the liquid transportation stopping and rolling brush rotating phase, the main motor stops rotating, the rolling brush motor rotates and drives the rolling brush to rotate together, and the liquid transportation apparatus is turned off, thereby the cleaning liquid on the rolling brush is scraped off.

Subsequently, the recycling pipeline is washed: the main motor is turned on, and the suction force of the main motor is in a dynamically changed state. Therefore, the accumulated liquid washes back and forth in the recycling pipeline. The rolling brush motor is turned on to scrape off the liquid accumulated on the rolling brush. In addition, the liquid transportation apparatus and the sterilizing liquid production apparatus are also turned on, and the output amount and output time of the liquid transportation apparatus may be adjusted according to the dirtiness of the rolling brush detected by the detection component.

Finally, the rolling brush is dewatered: the main motor is turned on to suction away all accumulated liquid, the rolling brush motor is turned on to remove the liquid accumulated on the rolling brush, the liquid transportation apparatus stops operating, and the sterilizing liquid production apparatus is still turned on to produce sufficient sterilizing liquid.

The differences in various self-cleaning operating modes of the cleaning device may include at least one of the following: a cleaning time of the self-cleaning object, a dewatering time of the self-cleaning object, a flow rate of the liquid transportation apparatus of the cleaning device, a power of the main motor of the cleaning device, and a rotation speed of the rolling brush of the cleaning device.

When the self-cleaning object is a rolling brush and a suction channel, the cleaning time of the rolling brush and/or the suction channel of different self-cleaning modes may be different, and the dewatering time of the rolling brush and/or the suction channel may be different.

With reference to the above self-cleaning process of the self-cleaning device, in another embodiment provided by the present disclosure, the self-cleaning process of the self-cleaning device also includes a sterilizing maintenance phase. The specific process may be referred to Table 4 below.

| Phase | | Main motor | Rolling brush motor | Liquid transportation apparatus | Production of sterilizing liquid | Notes |
|---|---|---|---|---|---|---|
| Producing the sterilizing liquid | | OFF | OFF | OFF | ON/OFF | 30S |
| Soaking the rolling brush | A1 | OFF | OFF | ON | ON/OFF | The liquid transportation apparatus is turned on to accumulate water, and the rolling brush is soaked with the sterilizing liquid |
| | A2 | OFF | ON | OFF | ON/OFF | The rolling brush rotates to ensure the soaking effect |
| Washing the recycling pipeline | | ON | ON | ON/OFF | ON/OFF | The water volume is intelligently adjusted by the liquid transportation apparatus according to the degree of dirtiness |
| Dewatering the rolling brush | | ON | ON | OFF | ON/OFF | After cleaning, residual water in the self-cleaning base and the rolling brush is suctioned up, and sufficient sterilizing liquid is produced |
| Sterilizing maintenance | OFF | OFF | ON | ON/OFF | | An appropriate amount of sterilizing liquid is sprayed onto the rolling brush for the final antibacterial treatment, and this phase only lasts for a short period of time |

In the above table, in phase of washing the recycling pipeline, the liquid transportation apparatus may be turned on or off, which may be set according to the specific actual situation. When the dirtiness of the recycling pipeline is severe, the liquid transportation apparatus may be turned on to supply sufficient sterilizing liquid to wash the recycling pipeline. When the dirtiness of the recycling pipeline is light, the liquid transportation apparatus may be turned off at this time to save the sterilizing liquid.

In the final sterilizing maintenance phase, the main motor is turned off, the rolling brush motor is turned off, the liquid transportation apparatus is turned on to transport the sterilizing liquid to the rolling brush, and the sterilizing liquid production apparatus is turned on. This phase only lasts for a short period of time, for example, 3 seconds, 5 seconds, and the like, thus effectively preventing the liquid transportation apparatus from outputting more sterilizing liquid, resulting in liquid accumulation on the self-cleaning base.

By reason of the foregoing, in the technical solution provided by the embodiment of the present disclosure, a cleaning procedure for the cleaning device is optimized, the cleaning liquid is output to form accumulated liquid, and a dynamically-changed suction force is then generated, thereby the accumulated liquid flows under the action of the dynamically-changed suction force to wash the self-cleaning object of the cleaning device, thus effectively improving the self-cleaning effect on the cleaning device.

In order to facilitate the understanding of the technical solutions of the present disclosure, specific application scenarios are provided below to describe in detail a self-cleaning method for a cleaning device according to the present disclosure.

### Application Scenario 1:

After the cleaning device has been operating for a period of time, the user finds that the cleaning device is dirty, and the user manually triggers a self-cleaning control on the cleaning device according to the degree of dirtiness of the cleaning device. When the cleaning device is turned on, a sterilizing liquid is produced first, and after the production amount of the sterilizing liquid meets the demand, the process proceeds to the next phase or the sterilizing liquid is used while being produced. After the process proceeds to the next phase, the liquid transportation apparatus outputs the sterilizing liquid to wet the rolling brush, and liquid is accumulated at the rolling brush. Then, the output of the sterilizing liquid is stopped, the rolling brush motor is turned on, the rolling brush rotates, and the scraping apparatus on the rolling brush quickly scrapes off the dirt on the rolling brush. The sterilizing liquid output phase and the output stopping and rolling brush rotating phase may be cycled repeatedly. After meeting the cycle requirement, the main motor of the cleaning device is turned on, the rolling brush motor is turned on, and the liquid transportation apparatus is turned on (outputting the sterilizing liquid). A large amount of accumulated liquid is quickly suctioned into the recycling bucket, quickly passes through the recycling pipeline, and may thoroughly remove dirt in the recycling pipeline. After that, the output amount of the sterilizing liquid is reduced, the main motor maintains the current operating state to suction the accumulated liquid, and the recycling pipeline is continuously flushed with a small amount of water. A control apparatus may indeed control the main motor to generate a dynamically-changed suction force to simulate a water flow continuously flushing and cleaning the pipeline.

### Application Scenario 2

In the self-cleaning process of the cleaning device, the dirtiness inside the cleaning device is continuously detected. When the self-cleaning process has been carried out for a period of time (i.e., a first preset time), the detected dirtiness does not meet the requirements, which means that the cleaning effect is not good. Then the cleaning device adjusts relevant operation parameters of the self-cleaning process, and the cleaning device continues to self-clean according to the adjusted relevant operation parameters.

### Application Scenario 3

In the process of washing a surface to be cleaned by the cleaning device, the dirtiness of the cleaning device is continuously detected. When the dirtiness reaches a preset level and lasts for a preset time, a self-cleaning mode is automatically started, thereby the cleaning device is self-cleaned in the self-cleaning mode.

After the cleaning device is used (to be specific, the surface to be cleaned is cleaned), dirt will remain on the cleaning assembly (such as the rolling brush and the recycling pipeline). For user's convenience, many cleaning devices currently have a self-cleaning mode to realize self-cleaning of the cleaning device according to a program set in advance without human interference. In the prior art, the cleaning device has a self-cleaning mode: on the basis of producing the sterilizing liquid, the rolling brush and the recycling pipeline in the cleaning device can be automatically washed and the rolling brush can be dried by sequentially performing the operations of soaking the rolling brush, washing the rolling brush, washing the suction pipeline (hereinafter referred to as the recycling pipeline), dewatering and drying the rolling brush, and the like, thus freeing human hands and avoiding the trouble of manual washing of the cleaning device. The specific procedure of self-cleaning work corresponding to the self-cleaning mode configured by the existing cleaning device described above is shown in the table below:

| Phase | Sterilizing liquid production apparatus | Liquid transportation apparatus | Rolling brush motor | Main motor | | Notes |
|---|---|---|---|---|---|---|
| Production the sterilizing liquid | ON | OFF | OFF | OFF | | Electrolytic production of sterilizing liquid |
| Primary phase | Soaking the rolling brush (0-20s) | OFF | ON | OFF | OFF | The liquid transportation apparatus is turned on to accumulate water, and the rolling brush is soaked with the sterilizing liquid |
| | Washing the rolling brush (20-35s) | OFF | OFF | ON | OFF | The rolling brush motor is turned on, the rolling brush rotates, and the rolling brush is washed |
| | Washing the pipeline (35-40s) | OFF | OFF | ON | ON | The main motor and the rolling brush motor are turned on simultaneously, the rolling brush and the recycling pipeline are washed, and dirty water is suctioned away. |
| Secondary phase | Soaking the rolling brush (40-60s) | OFF | ON | OFF | OFF | The liquid transportation apparatus is turned on again to accumulate water, and the rolling brush is wet |
| | Washing the rolling brush (60-75s) | OFF | OFF | ON | OFF | The rolling brush motor is turned on again, the rolling brush rotates, and the rolling brush is washed |
| | Drying the rolling brush (75-120s) | OFF | OFF | ON | ON | The main motor and the rolling brush motor are simultaneously turned on again, dirty water is suctioned away, and the rolling brush is dried |
| Washing is completed | | OFF | OFF | OFF | OFF | |

In the self-cleaning procedure corresponding to the self-cleaning mode configured in the existing cleaning device shown in the above table, although there is a process of washing the recycling pipeline, after simply washing the rolling brush, the cleaning liquid is suctioned by the main motor, flushes the recycling pipeline through which the cleaning liquid flows, and then flows into the recycling bucket of the cleaning device, so as to achieve the purpose of taking away the dirt in the recycling pipeline. If there is dirt with a high stickiness in the recycling pipeline, it is difficult to remove the dirt in the recycling pipeline thoroughly. If it is intended to improve the cleaning effect of the recycling pipeline by increasing the suction amount of the cleaning liquid, a larger capacity of recycling bucket is needed. In the case of limited capacity, it is not feasible to increase the suction amount of the cleaning liquid.

In order to solve the problems existing in the existing solutions, the embodiments of the present disclosure provide a self-cleaning method for a cleaning device, so as to improve the cleaning effect on the recycling pipeline. In order that those skilled in the art may better understand the solutions of the present invention, the following will be a clear and complete description of the technical solutions in the embodiments of the present disclosure in conjunction with the accompanying drawings in the embodiments of the present disclosure.

In some procedures described in the description of the present disclosure, the claims, and the above-mentioned drawings, a plurality of operations appearing in a particular order are provided, these operations may be performed in a different order from the operations appear herein or may be performed in parallel. The serial numbers of the operations, such as 101 and 102, are only used for distinguishing between different operations, and the serial numbers do not represent any execution order. In addition, the processes may include more or fewer operations, and the operations may be performed sequentially or in parallel. It will be noted that the descriptions of "first", "second", and the like herein are used for distinguishing between different messages, devices, modules, and the like, and "first" and "second" do not represent a sequential order and are not limited to be of different types. In the present disclosure, the term "or/and" is only an association relationship describing associated objects and represents that three relationships may be present. For example, A or/and B may represent: only A, both A and B, and only B. In the present disclosure, the character "/" typically represents an "or" relationship between the associated objects. It will also be noted that the term "include", "comprise", or any other variations thereof are intended to cover a non-exclusive inclusion, thereby an article or system that includes a range of elements includes not only those elements, but also other elements that are not expressly listed, or that are inherent in such an article or system. Without further limitation, an element defined by the phrase "including a..." does not preclude the existence of another identical element in the article or system that includes the element. Furthermore, the embodiments described below are only part of the embodiments of the present disclosure and not all embodiments. Based on the embodiments of the present disclosure, all other embodiments obtained by those skilled in the art without paying any creative labor fall within the scope of protection of the present disclosure.

Before introducing the method embodiment provided by the present disclosure, a hardware apparatus that needs to be combined to implement the method provided by the present disclosure is briefly described.

The hardware apparatus that needs to be combined to implement the method provided by the present disclosure is a hardware apparatus specially arranged to serve a specific field, such as a cleaning device described under the subtitle of "Background Art". The cleaning device may be, but is not limited to, a handheld floor scrubber, an intelligent mop and suction integrated robot, an intelligent floor scrubbing system with a base station, and the like. Cleaning parts in different cleaning devices have different structures. For example, in some embodiments of the present disclosure, when the cleaning device is a handheld floor scrubber (as shown in FIG. 11a), the cleaning part is a cleaning rolling brush, and when the cleaning device is an intelligent mop and suction integrated robot, the cleaning part is a cleaning rag.

FIG. 11a shows a structural schematic diagram of a cleaning device according to an embodiment of the present disclosure. As shown in FIG. 11a, the cleaning device 10 may include: a cleaning assembly 20, a operating assembly (not shown), and a control apparatus (not shown). The cleaning assembly 20 is configured to serve as a self-cleaning object when the cleaning device operates in a self-cleaning mode and as a cleaning executer when the cleaning device operates in an external cleaning mode. If the "external cleaning mode" is understood as a mode of cleaning the floor, desktop, wall, or window outside the cleaning device, the "self-cleaning mode" is a mode of cleaning internal components of the cleaning device. For example, the cleaning assembly may include, but is not limited to, a rag, a rolling brush, a recycling pipeline, a recycling bucket, and the like. The operating assembly may include, but is not limited to, a rolling brush driving apparatus (also referred to as a rolling brush motor), a main motor that generates a suction force, a liquid transportation apparatus that outputs a cleaning liquid, and the like. The operating assembly is configured to serve as a self-cleaning workload to clean the self-cleaning object when the cleaning device operates in the self-cleaning mode, and as an external cleaning workload together with the cleaning executer to clean a surface to be cleaned when the cleaning device operates in the external cleaning mode. The control apparatus is connected to the operating assembly and is configured to control at least components in the operating assembly to make the cleaning device operate in a self-cleaning mode or in an external cleaning mode.

The cleaning device of the structure shown in FIG. 11a includes a floor brush 30 and a body. The floor brush 30 is arranged on the body. The body may include, but is not limited to, a clear water tank 60, a recycling bucket 210, a recycling pipeline 220, and the like. A first end 220a of the recycling pipeline 220 is communicated with a suction nozzle 40 on the floor brush 30, and a second end 220b is communicated with the recycling bucket 210. The floor brush 30 is provided with a suction nozzle 40. The suction nozzle 40 may suction dirt or dirty liquid on a surface to be cleaned (such as a floor, a desktop, or a carpet), which enters the recycling bucket 210 via the recycling pipeline 220. The recycling pipeline 220 may be a cylindrical pipe, and the cross section of the recycling pipeline 220 may be in any shape such as a circle, a semicircle, an oval, a square, or a polygon, without limitation herein. The rolling brush 230 on the floor brush 30 is rotatable to clean the surface to be cleaned. In view of the foregoing, in the embodiment of the cleaning device shown in FIG. 11a, the cleaning assembly may include: a rolling brush 230, a recycling pipeline 220, a recycling bucket 210, and the like. Accordingly, the operating assembly may include a driving apparatus for driving the rolling brush to roll, a main motor for generating a suction force, a liquid transportation apparatus for transporting a cleaning liquid from the clear water tank 60 to the rolling brush 230 and the surface to be cleaned, and the like, not shown in the figures.

During the actual use of the cleaning device, the rolling brush 230 and the recycling pipeline 220 inevitably have residual dirt, especially the dirt with a high stickiness in the recycling pipeline. In order to ensure the self-cleaning effect on the cleaning device, and more specifically to further improve the self-cleaning effect on the recycling pipeline of the cleaning device, in the technical solution provided by this embodiment, the cleaning device controls the main motor to be turned on and off when the cleaning device is in the self-cleaning mode, thereby the cleaning liquid flows back and forth in the recycling pipeline without entering the recycling bucket or most of the cleaning liquid does not enter the recycling bucket.

How to control the main motor to operate in such a way that the cleaning liquid flows back and forth in the recycling pipeline, with no or only a small amount (or a very small amount) of the cleaning liquid entering the recycling bucket, is described in detail below by referring to the corresponding content below.

Further, the cleaning device provided by this embodiment may also include a production apparatus (not shown in FIG. 11a). The production apparatus is configured to produce a sterilizing liquid. The produced sterilizing liquid may be contained in a clear water tank 60. In a specific implementation, the production apparatus may produce the sterilizing liquid in various ways. In one specific embodiment, a sterilizing liquid production agent is contained in the production apparatus, and the sterilizing liquid production agent is continuously released into the cleaning liquid by the sterilizing liquid production apparatus, thereby the cleaning device produces a sterilizing agent. Alternatively, the production apparatus may be an electrolyte production apparatus, and the sterilizing liquid may be generated by arranging an electrode in the cleaning liquid and then electrolyzing the cleaning liquid.

For example, an electrolyte production apparatus serves as the production apparatus. Specifically, the electrolyte production apparatus includes: a power supply circuit and an electrolytic electrode. The power supply circuit is electrically connected to the control apparatus for being turned on or off under the control of the control apparatus. The electrolytic electrode is electrically connected to the power supply circuit, is arranged in a clear water tank of the cleaning device, and is configured to electrolyze liquid in the clear water tank with a set voltage when the power supply circuit is turned on, so as to generate a sterilizing liquid.

For example, if the electrolytic electrode with a certain voltage is put into tap water, a certain amount of hypochlorous acid will be produced under the action of the electrolytic electrode since the tap water contains a certain amount of chlorine. The hypochlorous acid is mainly used as a disinfectant. In a specific embodiment, the electrolytic electrode is arranged in a clear water bucket containing a cleaning liquid (generally tap water or clear water having a certain salt content), and then a certain amount of sterilizing liquid can be generated by electrolyzing the cleaning liquid. The sterilizing liquid may be produced in advance before the start of the self-cleaning process of the cleaning device, or may be produced in certain phases of the entire self-cleaning process, without limitation herein.

Further, referring to FIG. 11a, the rolling brush 230 may be accommodated in a rolling brush chamber. When the rolling brush 230 cleans the surface to be cleaned, sewage and impurities will be stained. Because of the rotation of the rolling brush, sewage stains or small impurities may splash onto a chamber wall of the rolling brush chamber. In the self-cleaning mode of the cleaning device, when the cleaning liquid output by the liquid transportation apparatus reaches a certain amount, accumulated liquid is formed, and a large amount of accumulated liquid will produce a relatively violent fluid flow effect under the action of the dynamically-changed suction force generated by the main motor. While cleaning the rolling brush and the recycling pipeline, the chamber wall of the rolling brush chamber will also be cleaned by the way.

In addition, the sterilizing liquid produced by the production apparatus in this embodiment may be used for self-cleaning the cleaning device, or may only be used on the self-cleaning object (such as the rolling brush and the recycling pipeline) that has been self-cleaned. In other words, the clear water in the clear water bucket is used for cleaning during the self-cleaning process, and the sterilizing liquid is sprayed onto the self-cleaning object for disinfection after it has been cleaned.

Specifically, the liquid transportation apparatus may be configured to transport the cleaning liquid (such as the clear water and the sterilizing liquid). For example, the liquid is transported to the self-cleaning object. The cleaning liquid output by the liquid transportation apparatus may be clear water, a cleaning liquid mixed with a sterilizing agent, a sterilizing liquid obtained by electrolysis, and the like. This embodiment is not limited thereto. The amount of the accumulated liquid formed may be controlled by the control apparatus. Generally, the cleaning device will be placed on a base during self-cleaning. The base is used together with the self-cleaning device. In addition to being used when the cleaning device is self-cleaning, the base may also have functions such as charging the cleaning device. Assuming that the self-cleaning object includes a rolling brush, the accumulated liquid may be partially absorbed by the rolling brush, and partially remain on the base matching the cleaning device, and there may even be accumulated liquid in the rolling brush chamber.

Further, the control apparatus can also control the main motor to operate, for example, controlling the main motor to intermittently turn on, controlling the main motor to switch between at least two powers to generate a suction force with a changed magnitude, or controlling a fan in the main motor to switch between forward rotation and reverse rotation, and the like.

For example, in one specific embodiment, the control apparatus controls the main motor to turn on to suction the cleaning liquid via the suction nozzle and suction at least part of the cleaning liquid from the first end to the second end, and then controls the main motor to turn off, thereby the cleaning liquid in the recycling pipeline flows back from the second end to the first end to wash the recycling pipeline by the reciprocating flowing cleaning liquid.

FIG. 11b shows a structural schematic diagram of a cleaning system according to another embodiment of the present disclosure. As shown in FIG. 11b, the cleaning system includes: a cleaning device 10, a production apparatus (not shown), and a base 70. The cleaning device 10 can be placed on the base 70, and the production apparatus is configured to produce a sterilizing liquid. A detailed description of the cleaning device 10 may be referred to the related contents above.

Further, the production apparatus may be arranged on the cleaning device 10, or arranged on the base 70. Specifically, the production apparatus includes: a power supply circuit and an electrolytic electrode. The power supply circuit is electrically connected to the control apparatus for being turned on or off under the control of the control apparatus. The electrolytic electrode is electrically connected to the power supply circuit, is arranged in a clear water tank 60 of the cleaning device 10 or a clear water bucket 720 on the base 70, and is configured to electrolyze liquid in the clear water tank with a set voltage when the power supply circuit is turned on, so as to generate a sterilizing liquid.

In a specific implementation, after the cleaning device 10 has been placed on the base 70, the cleaning device 10 may be communicatively connected with the base 70 in a wired or wireless manner. The control apparatus on the cleaning device may send a control instruction to the power supply circuit arranged on the base 70, thereby the power supply circuit is turned on or off according to the control instruction.

Further, the base 70 is provided with a liquid accumulation area (washing tank) 710. The liquid accumulation area (cleaning tank) 710 can accumulate the sterilizing liquid to soak and wash the self-cleaning object.

It will be further clarified herein that the recycling pipeline 220 described above, in a narrow sense, does not include the pipeline in the recycling bucket indicated by reference sign 23 (namely, the pipeline shown with dotted lines in the figure). In a broad sense, the recycling pipeline 220 may include a pipeline in the recycling bucket. If dirty liquid enters the pipeline in the recycling bucket but does not pass through an upper opening of the pipeline in the recycling bucket, the dirty liquid will not enter the recycling bucket by using the self-cleaning method provided by this embodiment as described below, because the recycling bucket also has a section of upward extending pipeline, and sewage will pass through this section of the pipeline and enter the cavity of the recycling bucket through the upper opening of the pipeline for storage. The dotted lines in FIG. 23 represent the pipeline in the recycling bucket.

A self-cleaning method for a cleaning device will be specifically described below according to a method embodiment.

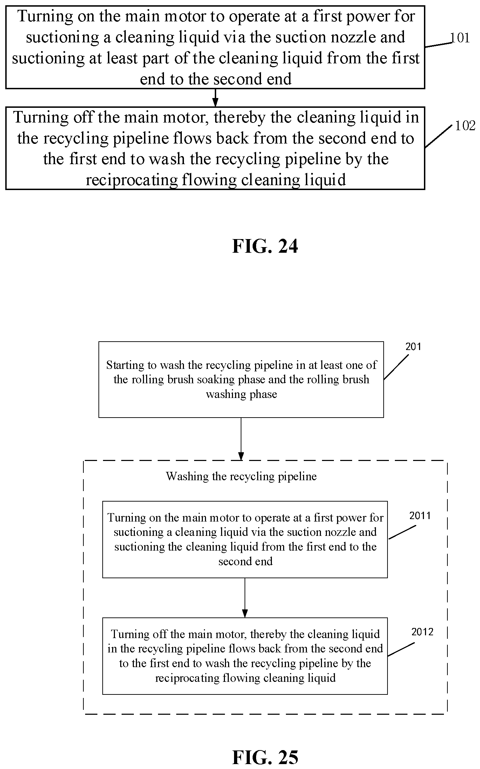

FIG. 24 shows a flow diagram of a self-cleaning method according to an embodiment of the present disclosure. Referring to FIG. 24, the self-cleaning method includes: washing the recycling pipeline. Here, washing the recycling pipeline includes:
101: turning on the main motor to operate at a first power for suctioning a cleaning liquid via the suction nozzle and suctioning at least part of the cleaning liquid from the first end to the second end, wherein the first power is less than a recycling power, and the main motor operates at the recycling power to implement the suction of the cleaning liquid into the recycling bucket; and
102: turning off the main motor, thereby the cleaning liquid in the recycling pipeline flows back from the second end to the first end to wash the recycling pipeline by the reciprocating flowing cleaning liquid.

In the step 101 above, the cleaning liquid may be, but is not limited to, clear water, an aqueous solution with a cleaning agent, or a sterilizing liquid generated by electrolysis or other means. The cleaning liquid may be output from a pump in the cleaning device, or by turning on a valve in a liquid transportation line of the cleaning device, without limitation herein. The main motor operates at a first power for a first time, a small amount of cleaning liquid may be suctioned into the recycling bucket, and most of the cleaning liquid is retained in the recycling pipeline. In addition to limiting that the first power is less than a recycling power, it is also necessary to limit the operating time of the main motor, so that at least part of the cleaning liquid from the first end can reach the second end.

Here, the liquid suctioned by the main motor may be the cleaning liquid output by the liquid transportation apparatus, or the cleaning liquid which is output to a rolling brush by the liquid transportation apparatus and then spills from the rolling brush to a base, or the cleaning liquid which is scraped off from the rolling brush and then accumulated on a liquid accumulation area when the rolling brush is washed after being wet by the liquid transportation apparatus. The accumulated liquid may be the cleaning liquid accumulated on the self-cleaning base, or may be liquid accumulated in a cavity of the cleaning device (such as a rolling brush chamber). In order to ensure a better washing effect on the self-cleaning object, the main motor is controlled to operate to suction the cleaning liquid, however, no cleaning liquid will be suctioned into the recycling bucket or most of the cleaning liquid will not be suctioned into the recycling bucket in this embodiment. In this way, a water flow that continuously flushes the self-cleaning object using a small amount of cleaning liquid can be simulated.

There are at least two powers corresponding to the operations of the main motor. By changing the power of the main motor, the main motor may switch back and forth between the two powers with different levels, thereby the main motor can generate two suction forces with different magnitudes, and the maximum suction force in the two suction forces with different magnitudes does not cause the cleaning liquid to flow into the recycling bucket. Alternatively, by controlling the main motor to intermittently turn on and off, an intermittent suction force is generated at a magnitude that does not cause the cleaning liquid to flow into the recycling bucket. Alternatively, by controlling a fan in the main motor to switch between forward rotation and reverse rotation, a changed suction force is generated by the action of the suction and reverse blow, wherein the magnitude of the generated force for suctioning will not cause the cleaning liquid to flow into the recycling bucket.

According to the solution provided in the embodiment of the present disclosure, the cleaning liquid flows back and forth between the first end and the second end of the recycling pipeline by intermittently turning on and off the motor. For example, the main motor may be controlled to operate for A seconds and stop for B seconds, then operate for A seconds and stop for B seconds, and so on until a set time or a set number of cycles is reached. Here, A may be greater than, equal to, or less than B. This embodiment is not limited thereto. A may be flexibly set in combination with the operation power of the main motor. For example, it is assumed that the main motor is operating at a power of 20W and the continuous operation time A of the main motor is set to be 350 ms, in order to ensure that the cleaning liquid does not flow into the recycling bucket under the continuous suction force generated during the operation of the main motor, or that the suctioned cleaning liquid is capable of at least partially falling back. In some embodiments, in this step, the main motor operates at a minimum achievable power.

Further, the method provided by this embodiment may also include the following step:
103: cyclically turning on and off, in the presence of a cycle requirement, the main motor according to the cycle requirement, thereby the cleaning liquid reciprocates in the recycling pipeline repeatedly.

For example, in one cycle, the cleaning liquid flows from the first end to the second end and then flows back from the second end to the first end. If the cycle is required to be performed twice, the main motor is turned on to operate, thereby the cleaning liquid flows from the first end to the second end; then the main motor is turned off, thereby the cleaning liquid flows back from the second end to the first end; subsequently, after entering the second cycle, the main motor is turned on again, thereby the cleaning liquid flows from the first end to the second end; and then, the main motor is turned off again, thereby the cleaning liquid flows back from the second end to the first end. In this way, the two cycles are completed.

Furthermore, the cleaning device in this embodiment has multiple self-cleaning phases during self-cleaning, such as a rolling brush soaking phase, a rolling brush washing phase, and a drying phase. Among the multiple phases, some phases may not include washing the recycling channel, and some other phases may include washing the recycling channel. In the phases which include washing the recycling channel some phases may require the ON-OFF cycle of the main motor, and some other phases may not have a cycle requirement. Therefore, the method provided by this embodiment may also include the following steps:
104: determining a current self-cleaning phase of the cleaning device; and
105: determining whether the current self-cleaning phase has a cycle requirement.

When it is determined that there is a cycle requirement, the cycle requirement may be obtained, and then the execution of step 103 is triggered.

Alternatively, in other implementable embodiments, the cycle requirement may be determined based on the dirtiness of the cleaning device. For example, the cleaning device is provided with a sensor for detecting the dirtiness of the recycling pipeline. The control apparatus determines the dirtiness level of the recycling pipeline based on the detection result of the sensor. Different levels correspond to different cycle requirements. Assuming that there are three dirtiness levels: light, moderate, and severe, wherein the light-level corresponds to the need for one or two cleaning cycles, the moderate-level corresponds to the need for more than two but less than five cleaning cycles, and the severe-level corresponds to the need for more than five but less than ten cleaning cycles.

Further, washing the recycling pipeline in the method provided by this embodiment may also include the following step:
106: determining at least one main motor control parameter based on the current self-cleaning phase of the cleaning device.

The at least one main motor control parameter includes: an ON time, a power, an OFF time, and a cycle requirement.

The cleaning liquid suctioned by the main motor after being turned on in this embodiment may be the liquid accumulated in the liquid accumulation area mentioned above. In other words, the method provided by this embodiment also includes:
107: controlling the liquid transportation apparatus to operate to output the cleaning liquid;
108: determining whether a liquid satisfying a set requirement is accumulated; and
109: triggering the step of washing the recycling pipeline (namely, steps 101 and 102, or steps 101-103) if the liquid satisfying the set requirement is accumulated.

Here, the set requirement includes at least one of the following: a cleaning liquid output time of the liquid transportation apparatus reaches a preset time, and a liquid accumulation depth reaches a threshold.

In step 107, in some embodiments, when the cleaning liquid output time of the liquid transportation apparatus reaches a preset time (such as any time from 10 to 20 seconds), it may be considered that the liquid has been accumulated, thereby triggering the step of turning on the main motor to operate. The preset time may be flexibly set according to the actual situation. For example, the preset time may be 10s, 15s, or the like. Specifically, the preset time may be but is not limited to any value from 10 to 20s, such as 14.65s. However, considering that in the case where the liquid transportation apparatus outputs the cleaning liquid to the rolling brush, if there is no liquid accumulation in the liquid accumulation area on the base or the amount of liquid accumulation is very small, the main motor is turned on to operate, which will cause that the cleaning liquid cannot be suctioned into the recycling pipeline or only a very small amount of cleaning liquid can flow into the recycling pipeline. This is undoubtedly an ineffective cleaning of the recycling pipeline and a waste of energy consumption of the cleaning device. In view of the above problems, in some other embodiments, it is also possible to consider that the preset condition is satisfied when the depth of the cleaning liquid that is output by the liquid transportation apparatus and forms accumulated liquid reaches a threshold. In other words, whether the accumulated liquid is formed may be determined in at least one of the following manners: determining whether a cleaning liquid output time of the liquid transportation apparatus reaches a preset time, and determining whether a liquid accumulation depth reaches a threshold.

The recycling bucket is a container in the cleaning device for storing wastewater generated after washing. When the cleaning device is a handheld floor scrubber, the recycling bucket is mounted in the cleaning device. And when the cleaning device is an intelligent scrubbing system with a base station, the recycling bucket may be a recycling bucket mounted in the base station. The recycling pipeline is a recycling pipeline connected between a suction port of the cleaning device and the recycling bucket.

In a specific implementable technical solution, the cleaning device in this embodiment further includes a rolling brush. The cleaning device has a rolling brush soaking phase during self-cleaning. The rolling brush soaking phase includes a wetting preparation section, a soaking washing section, and a final section. Accordingly, the method provided by this embodiment may also include:
110: obtaining liquid transportation apparatus control parameters and main motor control parameters corresponding to the respective sections in the rolling brush soaking phase.
111: triggering, in the wetting preparation section, the step of controlling the liquid transportation apparatus to operate according to the liquid transportation apparatus control parameter corresponding to the wetting preparation section to wet the rolling brush and form accumulated liquid.

In other words, in the wetting preparation section, step 107 is triggered to wet the rolling brush and form the accumulated liquid. In this embodiment, when step 107 is performed, the liquid transportation apparatus is controlled to operate according to the liquid transportation apparatus control parameter corresponding to the wetting preparation section.

112: triggering, in the soaking washing section, the step of controlling the liquid transportation apparatus to operate according to the liquid transportation apparatus control parameter corresponding to the soaking washing section, and triggering the step of washing the recycling pipeline according to the main motor control parameter corresponding to the soaking washing section, wherein, the main motor control parameter corresponding to the soaking washing section may include a main motor ON-OFF cycle requirement, an ON time, and an OFF time.

In other words, in the soaking washing section, step 107 is triggered to soak the rolling brush and form the accumulated liquid. In this embodiment, when step 107 is performed, the liquid transportation apparatus is controlled to operate according to the liquid transportation apparatus control parameter corresponding to the soaking washing section. In the soaking washing section, steps 101 and 102 are also triggered. In this embodiment, when steps 101 and 102 are performed, the main motor is controlled to turn on and off according to the main motor control parameter corresponding to the soaking washing section.

For example, the main motor control parameter corresponding to the soaking washing section includes an ON time, an OFF time, and a power. After the main motor is turned off, the time required for the cleaning liquid in the recycling pipeline to flow back from the second end of the recycling pipeline to the first end without external assistance is greater than the time required for the main motor to suction the cleaning liquid from the first end to the second end with the suction force. Therefore, the ON time is less than the OFF time.

113: triggering the step of controlling, in the final section, the liquid transportation apparatus to operate according to the liquid transportation apparatus control parameter corresponding to the final section, and turning on the main motor to operate at the first power according to the main motor control parameter corresponding to the final section.

In other words, in the final section, step 107 is triggered to soak the rolling brush and form the accumulated liquid. In this embodiment, when step 107 is performed, the liquid transportation apparatus is controlled to operate according to the liquid transportation apparatus control parameter corresponding to the final section. In the final section, step 101 is also triggered. In this embodiment, when step 101 is performed, the main motor is controlled to operate according to the main motor control parameter corresponding to the final section.

Further, the cleaning device in this embodiment also has a rolling brush washing phase during the self-cleaning process. The rolling brush washing phase includes: a pre-washing section, a mid-washing section, and a recycling section. Accordingly, the method provided by this embodiment may also include the following steps:
114: obtaining main motor control parameters corresponding to the respective sections in the rolling brush washing phase.

Here, the main motor control parameters corresponding to the respective sections may include at least one of an ON time, an OFF time, a power, a cycle requirement, and the like.

115: turning on the rolling brush motor to operate in the pre-washing section to drive the rotation of the rolling brush, and turning off the main motor according to the main motor control parameter corresponding to the pre-washing section, thereby liquid accumulated in the final section, which is suctioned to the second end, flows back to the first end.

In other words, the rolling brush motor is turned on to operate in the pre-washing section to drive the rotation of the rolling brush. Step 102 may also be triggered to only turn off the main motor according to the main motor control parameter corresponding to the pre-washing section in this step. The main motor control parameters corresponding to the pre-washing section include an OFF time and a power.

In an implementable example, the OFF time corresponding to the pre-washing section in this step may be greater than the OFF time in the main motor control parameter corresponding to the soaking washing section.

116: turning on the rolling brush motor to operate in the mid-washing section to drive the rotation of the rolling brush, and triggering the step of washing the recycling pipeline according to the main motor control parameter corresponding to the mid-washing section, wherein the main motor control parameters corresponding to the mid-washing section include an ON-OFF cycle requirement for the main motor , an ON time, and an OFF time.

In other words, the rolling brush is controlled to rotate in the mid-washing section, and steps 101 and 102 are also triggered. Only in this step, steps 101 and 102 are performed according to the main motor control parameters corresponding to the mid-washing section. The main motor control parameters corresponding to the mid-washing section may include an ON time, an OFF time, and a power. Further, the main motor control parameters corresponding to the mid-washing section may also include a cycle requirement, such as two cycles and three cycles of steps 101 and 102.

In this embodiment, the ON time corresponding to the mid-washing section may be less than the ON time in the main motor control parameters corresponding to the soaking washing section. The OFF time corresponding to the mid-washing section may be greater than the OFF time in the main motor control parameters corresponding to the soaking washing section.

Alternatively, the sum of the ON time and the OFF time corresponding to the mid-washing section is equal to the sum of the ON time and the OFF time corresponding to the soaking washing section.

117: turning on the rolling brush motor to operate in the recycling section to drive the rotation of the rolling brush, and turning on the main motor to operate at a second power according to the main motor control parameters corresponding to the recycling section, for suctioning at least part of the accumulated liquid to the recycling bucket, wherein the second power is greater than or equal to the recycling power.

In other words, the rolling brush is controlled to rotate in the recycling section, and step 101 is also triggered. Only in this step, step 101 is performed according to the main motor control parameter corresponding to the recycling section.

In this embodiment, the main motor control parameters corresponding to the recycling section includes an ON time and a power. The ON time corresponding to the recycling section is greater than the OFF time in the main motor control parameter corresponding to the soaking washing section. Alternatively, the ON time corresponding to the recycling section is greater than the OFF time corresponding to the mid-washing section. Since at least part of the accumulated liquid needs to be recycled to the recycling bucket in the recycling section, the power of the main motor in the recycling section is greater than the power in the main motor control parameters corresponding to the mid-washing section.

After the rolling brush soaking phase, sufficient cleaning liquid has been accumulated on the rolling brush. After entering the rolling brush washing phase, the rolling brush rotates under the drive of the driving apparatus, and then a scraping apparatus acting on the surface of the rolling brush can scrape off most of the cleaning liquid accumulated on the rolling brush. In the process of scraping off the cleaning liquid, the dirt on the rolling brush is also scraped off with the cleaning liquid, and the scraped attachments (dirt) and liquid are contained in the liquid accumulation area and enter the accumulated liquid. In addition to being scraped off by the scraping apparatus, the attachments on the rolling brush and the cleaning liquid may be separated from the rolling brush more quickly under the centrifugal force of the rotation of the rolling brush, and the rolling brush may be cleaned more completely. At this moment, the liquid accumulated in the liquid accumulation area reaches a peak. If there is a deep cleaning phase later, in order to avoid splashing, spilling, and the like caused by excessive accumulated liquid, step 117 is added in this embodiment to recycle at least part of the accumulated liquid. If there is no subsequent deep cleaning phase, the main motor may be turned on to operate when performing step 117, so as to recycle all the accumulated liquid to the recycling bucket and dry the rolling brush.

In view of the steps above, a step of recycling the pipeline washing may be added in both the rolling brush soaking phase and the rolling brush washing phase, thus shortening the self-cleaning time. The recycling pipeline washing may indeed be added in one of the above two phases. This embodiment is not limited thereto.

Since the purpose of this step is to suction away a part of the cleaning liquid in the liquid accumulation area to prevent too much cleaning liquid from accumulating in the liquid accumulation area and thus affecting the implementation of the subsequent phases, the ON time corresponding to the recycling section does not need to be too long. For example, the ON time may be set to be, but not limited to, 5s (seconds). In order to ensure that the cleaning liquid is successfully suctioned into the recycling bucket, the main motor may operate at a relatively high level power. For example, the operation power of the main motor may be, but not limited to, 90W.

Further, the self-cleaning method provided by this embodiment may also include the following steps:
118: triggering a deep cleaning phase at the end of the recycling section to sequentially implement the wetting preparation section, the soaking washing section, the final section, the pre-washing section, and the mid-washing section;
119: triggering to implement a drying phase at the end of the mid-washing section in the deep cleaning phase; and
120: turning on the rolling brush motor to operate to drive the rotation of the rolling brush in the drying phase, and turning on the main motor to operate at the second power according to the main motor control parameters corresponding to the drying phase, so as to recycle the accumulated liquid into the recycling bucket and dry the rolling brush.

In step 118, the deep cleaning phase may be understood as: sequentially re-implementing the wetting preparation section, the soaking washing section, the final section, the pre-washing section, and the mid-washing section once to achieve the purpose of improving the cleaning effect. The specific implementation of each phase may be referred to the content above, and will not be described again herein.

In steps 119 and 120, the drying phase is similar to the recycling section in the rolling brush washing phase, but differs from the recycling section only in that, the drying phase needs to recycle all the accumulated liquid to the recycling bucket and to dry the accumulated liquid. If the rolling brush washing phase is not followed by the deep cleaning phase, the recycling section in the rolling brush washing phase may be replaced with the drying phase in this embodiment.

Specifically, the main motor parameters corresponding to the drying phase include an ON time and a power. The ON time corresponding to the drying phase is greater than the ON time corresponding to the recycling section. The power corresponding to the drying phase is equal to the power corresponding to the recycling section. In a specific implementation, the ON time corresponding to the drying phase may be greater than or equal to 1 min.

In the rolling brush soaking phase and the rolling brush washing phase, the sterilizing liquid production in the cleaning device may be stopped or continued. This embodiment is not limited thereto. In the drying phase, the main motor needs to be controlled to operate, so as to ensure that the suction airflow generated by the operation of the main motor can be used as a dry airflow for drying the base (liquid accumulation area), the rolling brush, the rolling brush chamber, the recycling pipeline, and the like in addition to recycling all the accumulated liquid to the recycling bucket. In addition to the suction airflow of the main motor, the rotation of the rolling brush may also speed up the process of drying the rolling brush, specifically, the drying process will be accelerated by centrifuging the liquid and generating a disturbed airflow.

After the drying process is completed, the self-cleaning process of the cleaning device is completed. Finally, the sterilizing liquid may be sprayed onto the rolling brush to achieve the purpose of anti-bacteria. In addition, in order to make the sterilizing liquid have better sterilizing effect and sterilizing time, the sterilizing liquid sprayed at this moment has a higher concentration. The concentration of the sterilizing liquid can be increased by prolonging the production time of the sterilizing liquid. The sterilizing liquid may be liquid produced by the sterilizing liquid production apparatus, or a sterilizing liquid obtained by adding a certain agent with a sterilizing function to clear water by the user.

Further, the technical solution provided by this embodiment may also have the functions of phase prompting, execution time prompting of each phase, and display of a residual time of the current phase. In other words, the method provided by this embodiment may also include the following steps:
121: obtaining a current self-cleaning phase of the cleaning device;
122: determining a residual time based on the current self-cleaning phase of the cleaning device; and
123: displaying or broadcasting the current self-cleaning phase of the cleaning device and the residual time.

Furthermore, a phase time corresponding to the current self-cleaning phase of the cleaning device may be obtained, a current self-cleaning time of the cleaning device may also be obtained, and the obtained phase time and/or self-cleaning time may be displayed or broadcast.

In a feasible implementation, the process of the recycling pipeline washing in the method according to this embodiment may be performed in the rolling brush soaking phase, in the rolling brush washing phase, or, in both phases indeed.

In other words, the method provided by this embodiment also includes:
- soaking the rolling brush;
- washing the rolling brush; and
- drying the rolling brush.

The recycling pipeline is washed during at least one of the periods of soaking the rolling brush and washing the rolling brush.

A sterilizing liquid is produced during at least one of the periods of soaking the rolling brush soaking, washing the rolling brush, and drying the rolling brush, thereby a cleaning liquid used for soaking or washing is the sterilizing liquid.

The step of soaking the rolling brush may correspond to the rolling brush soaking phase described above, and the step of washing the rolling brush may correspond to the rolling brush washing phase described above. The step of drying the rolling brush may correspond to the drying phase described above.

In a feasible embodiment, the sterilizing liquid production module is kept on from the rolling brush soaking phase to the drying phase, or throughout the process from the rolling brush soaking phase to the drying phase, and the sterilizing liquid is continuously produced. The purpose of this design is that a contact object of the rolling brush and a humid environment in which the contact object is located will cause the rolling brush to retain and breed a large number of bacteria. The diameter of most bacteria is between 0.5um and 5um, and the diameter of water molecule is about 0.4nm. In the drying process of the rolling brush, the bacteria cannot be taken away by the water molecules, and cannot be recycled into the recycling bucket with the dirty liquid, resulting in the bacteria still remaining on the rolling brush. Herein, at the beginning of self-cleaning, the sterilizing liquid is produced first, or preferably, the sterilizing production module is always in an on state in the entire self-cleaning process. In this way, the sterilizing liquid is used in the entire self-cleaning process, and the sterilization is maintained in the entire self-cleaning process.

Further, the method provided by this embodiment may also include the following steps:
125: obtaining a plurality of preset voice broadcast moments and voice broadcast contents corresponding to these moments;
126: determining a self-cleaning execution time of the cleaning device.
127: broadcasting, when the self-cleaning execution time matches with a target moment among the plurality of preset voice broadcast moments, the voice broadcast content corresponding to the target moment.

The contents of steps 125 to 127 will be described below with reference to specific implementations.

Another embodiment of the present disclosure also provides a self-cleaning method for a cleaning device. The specific procedure of the cleaning method is shown in a flow diagram shown in FIG. 25. The cleaning device has a rolling brush soaking phase and a rolling brush washing phase during self-cleaning. The self-cleaning method includes the following steps:
201: starting to wash the recycling pipeline in at least one of the rolling brush soaking phase and the rolling brush washing phase.

The phase of washing the recycling pipeline includes:
2011: turning on the main motor to operate at a first power for suctioning a cleaning liquid via the suction nozzle and suctioning the cleaning liquid from the first end to the second end, where the first power is less than a recycling power, and the main motor operates at the recycling power to implement the suction of the cleaning liquid into the recycling bucket.
2012: turning off the main motor, thereby the cleaning liquid in the recycling pipeline flows back from the second end to the first end to wash the recycling pipeline by the reciprocating flowing cleaning liquid.

Steps 2011 and 2012 may be cycled repeatedly. For example, in the rolling brush soaking phase, there is a cycle requirement for washing the recycling pipeline, and two cycles are required. Therefore, in the rolling brush soaking phase, steps 2011 and 2012 may be cycled twice. For another example, if there is no cycle requirement for washing the pipeline in the rolling brush washing phase, steps 2011 and 2012 may only be performed once in the rolling brush washing phase.

Further, the cleaning device in this embodiment also includes a liquid transportation apparatus. The rolling brush soaking phase includes a wetting preparation section, a soaking washing section, and a final section. Accordingly, in this embodiment, step 201 of starting to wash the recycling pipeline in the rolling brush soaking phase may include:
S11: controlling, in the wetting preparation section, the liquid transportation apparatus to operate to output a cleaning liquid to wet the rolling brush and form accumulated liquid.

Here, the liquid transportation apparatus may be controlled to output the cleaning liquid according to a specified flow rate, and the output time of the liquid transportation apparatus may also be controlled. When the output time reaches a preset time (such as 14s or 15s), the liquid transportation apparatus is controlled to be turned off. Alternatively, the liquid transportation apparatus is controlled to output the cleaning liquid according to the specified flow rate, and a liquid accumulation depth information fed back by the detection apparatus is received. When the liquid accumulation depth reaches a threshold, the liquid transportation apparatus is controlled to be turned off. It will be noted herein that the settings of the arrangement position, type and depth threshold of the detection apparatus in this embodiment are not specifically limited, and may be determined according to actual design requirements.

S12: controlling the liquid transportation apparatus to operate to continue outputting the cleaning liquid in the soaking washing section, and start to wash the recycling pipeline.

In the soaking washing section, the liquid transportation flow rate for the liquid transportation apparatus may be the same as or different from that in the wetting preparation section in step S11. For example, in the soaking washing section, the liquid transportation flow rate for the liquid transportation apparatus may be reduced. In other words, the liquid transportation flow rate for the liquid transportation apparatus in the soaking washing section is less than the liquid transportation flow rate for the liquid transportation apparatus in the wetting preparation section.

S13: controlling the liquid transportation apparatus to operate to continue outputting the cleaning liquid in the final section, and turning on the main motor to operate for suctioning the cleaning liquid via the suction nozzle and suctioning the cleaning liquid from the first end to the second end.

Here, the liquid transportation flow rate for the liquid transportation apparatus in the final section may be the same as the liquid transportation flow rate for the liquid transportation apparatus in the soaking washing section.

Further, the rolling brush washing phase includes: an pre-washing section, a mid-washing section, and a recycling section. Accordingly, in this embodiment, step 201 of starting to wash the recycling pipeline in the rolling brush washing phase includes:
S21: turning on the rolling brush motor to operate in the pre-washing section to drive the rotation of the rolling brush, and turning off the main motor, thereby liquid accumulated in the final section, which is suctioned to the second end, flows back to the first end.
S22: turning on the rolling brush motor to operate to drive the rotation of the rolling brush in the mid-washing section, and starting to wash the recycling pipeline.
S23: turning on the rolling brush motor to operate in the recycling section to drive the rotation of the rolling brush, and turning on the main motor to operate for suctioning at least part of the cleaning liquid to the recycling bucket.

In steps S21 to S23, the rotation speed of the rolling brush may be the same or different. In different cases, for example, the rotation speed of the rolling brush in the pre-washing section and the rotation speed of the rolling brush in the mid-washing section are both lower than the rotation speed of the rolling brush in the recycling section. The purpose of this design is that, in the recycling section, the recycling of the cleaning liquid may be accelerated with the help of a high-speed rotating rolling brush.

It will be noted herein that a more detailed description of each step in this embodiment (such as S11 to S13 and S21 to S23) may be referred to the corresponding contents above. The contents of this embodiment and the above-mentioned embodiments may be referred to each other.

Further, the method provided by this embodiment may also include the following steps:
202: entering a deep cleaning phase at the end of the recycling section to sequentially implement the wetting preparation section, the soaking washing section, the final section, the pre-washing section, and the mid-washing section;
203: triggering to enter a drying phase at the end of the deep cleaning phase; and
204: turning on the rolling brush motor to operate to drive the rotation of the rolling brush in the drying phase, and turning on the main motor to operate to recycle the cleaning liquid into the recycling bucket and dry the rolling brush.

Furthermore, after the step 204, the dried rolling brush may be sprayed with the sterilizing liquid.

It will be noted herein that the contents of steps 202 to 204 may be referred to the description above, and will not be described again herein.

Based on the contents above, the present disclosure also provides the following specific implementations. Implementation 1: the self-cleaning method for a cleaning device is roughly divided into the following phases: a sterilizing liquid production phase, a rolling brush soaking phase, and a rolling brush washing phase. The specific cleaning process may be referred to Table 5 below.

**Table 5 Implementation 1**

| Phase | | | Main motor | Rollin g brush motor | Liquid transp ortatio n appara tus | Produc tion of steriliz ing liquid | Notes |
|---|---|---|---|---|---|---|---|
| Sterilizing liquid production phase | | | OFF | OFF | OFF | ON/O FF | 30S |
| Rolling brush soaking phase | Soakin g prepar ation sectio n | A1 (14.65s) | OFF | OFF | ON | ON/O FF | The liquid transportation apparatus is turned on to accumulate water, and the rolling brush is soaked with the sterilizing liquid; the main motor is intermittently turned on and off to simulate a water flow continuously flushing back and forth to clean the recycling pipeline (during which the cleaning liquid will not flow into the recycling bucket) |
| | Soakin 9 washi ng sectio n | A2 (0.35s) | ON (20W) | OFF | ON | ON/O FF | |
| | | A3 (4.65s) | OFF | OFF | ON | ON/O FF | |
| | | A2 (0.35s) | ON (20W) | OFF | ON | ON/O FF | |
| | | A3 (4.65s) | OFF | OFF | ON | ON/O FF | |
| | | ... | | | | | |
| | Final sectio n | A4 (0.35s) | ON (20W) | OFF | ON | ON/O FF | |
| Rolling brush washin g phase | pre-wa shing sectio n | B1 (5s) | OFF | ON | OFF | ON/O FF | The liquid transportation apparatus is turned off, and the rolling brush motor is turned on to rotate the rolling brush; the main motor is intermittently turned on and off, and the simulated water flow continuously flushes back and forth to clean the recycling pipeline (during which the cleaning liquid will not flow into the recycling bucket) |
| | mid-w ashing sectio n | B2 (0.3s) | ON (20W) | ON | OFF | ON/O FF | |
| | | B3 (4.7s) | OFF | ON | OFF | ON/O FF | |
| | recycli ng sectio n | B4 (5s) | ON (90W) | ON | OFF | ON/O FF | The rolling brush motor is turned on to rotate the rolling brush; the main motor is turned on to recycle a part of the cleaning liquid |
| | | B5 (65s) | ON (90W) | ON | OFF | ON/O FF | The rolling brush motor is turned on to rotate the rolling brush; the main motor is turned on to recycle and dry the cleaning liquid |

In the above table, sections A2+A3 may be cycled repeatedly. The number of cycles may be determined according to a preset cycle requirement. In addition, the "sterilizing liquid production phase" in the table may be carried out before the rolling brush soaking phase, and may also last for all the phases. In other words, both the rolling brush soaking phase and the rolling brush washing phase continue to produce the sterilizing liquid. The sterilizing liquid may also be produced in some phases (or in some sections of these phases). For example, after the cleaning device starts the self-cleaning procedure, the sterilizing liquid production apparatus first starts to produce the sterilizing liquid, other self-cleaning steps are started after the sterilizing liquid reached a certain amount, and the sterilizing production apparatus is always turned on in the subsequent self-cleaning steps. Alternatively, after the cleaning device starts the self-cleaning procedure, the sterilizing liquid production apparatus first starts to produce the sterilizing liquid, when the sterilizing liquid reaches a certain amount, the sterilizing liquid production apparatus is turned off, and then other self-cleaning steps are started, and the like, without limitation herein.

After the self-cleaning procedure is started, the sterilizing liquid is first produced: the main motor in the cleaning device is turned off, the rolling brush motor is turned off, the liquid transportation apparatus is turned off, the sterilizing liquid production apparatus is turned on, and this phase lasts for 30 seconds to make the amount of the sterilizing liquid meet the usage requirements. In the subsequent self-cleaning steps, it is assumed that the sterilizing liquid production apparatus is turned off.

Then, the rolling brush soaking phase is entered. In the soaking preparation section of the rolling brush soaking phase, the liquid transportation apparatus is first controlled to transport liquid for 14.65s to form accumulated liquid to be suctioned by the main motor. Then, in the soaking washing section, the sections A2+A3 (namely the sub-sections of the soaking washing section) may be cycled. In the soaking washing section, the rolling brush is still in wetting and soaking. In section A2, the power of the main motor may be 20W, the ON time may be 0.35s, and the OFF time may be 4.65s. After several cycles of sections A2+A3, the final section is entered. In the final section, the power of the main motor may be 20W, and the ON time may be 0.35s. From section A1 to section A4, the liquid transportation apparatus is always on, and the cleaning liquid is continuously output. The liquid transportation flow rate for the liquid transportation apparatus at each section may be unchanged or changed. For example, in section A1, the liquid transportation flow rate for the liquid transportation apparatus is enough large to shorten the time. In sections A2 to A4, the liquid transportation flow rate for the liquid transportation apparatus may be small. In other words, the liquid transportation flow rate for the liquid transportation apparatus in section A1 is greater than the liquid transportation flow rate for the liquid transportation apparatus in any one of sections A2 to A4. Alternatively, the liquid transportation flow rates for the liquid transportation apparatus from sections A1 to A4 are reduced gradually.

Then, the rolling brush washing phase is entered. In the pre-washing section (namely section B1) of the rolling brush washing phase, the main purpose is for the back flowing of the cleaning liquid that is suctioned to the second end in the final section to the first end. In section B1, the OFF time of the main motor may be 5s. After the rolling brush passes through the rolling brush soaking phase, a large amount of cleaning liquid is absorbed, the rotation of the rolling brush is controlled, and the scraping apparatus scrapes off the attachments on the rolling brush and squeezes the cleaning liquid. The rolling brush absorbs the cleaning liquid from the accumulated liquid, and the scraping apparatus scrapes and squeezes, so as to achieve the purpose of washing. After entering the mid-washing section (namely sections B2+B3), the purpose of washing the recycling pipeline is achieved by turning on and off the main motor. In section B2, the ON time of the main motor may be 0.3s, and the power of the main motor may be 20W. In section B3, the OFF time of the main motor may be 4.7s. In a specific implementation, sections B2+B3 in this phase is similar to sections A2+A3 in the previous phase. But differently, in the rolling brush washing phase, the ON time of the main motor in section B2 is less than that in section A2. The reason is that the squeezed liquid will enter the accumulated liquid when the rolling brush rotates in the rolling brush washing phase. In other words, the amount of the accumulated liquid in this phase is greater than that in section A2. If the ON time in section B2 is equal to that in A2, a part of the cleaning liquid will be suctioned into the recycling bucket with high probability. In order to avoid or reduce the amount of liquid suctioned into the recycling bucket, the ON time of the main motor in section B2 is shortened in this embodiment. In addition, the OFF time of the main motor in section B3 is also greater than that of the main motor in section A3. The reason is that with the rolling brush washing in the rolling brush washing phase, the OFF time of the main motor increases, allowing the cleaning liquid in the recycling pipeline to flow back to the liquid accumulation area. In other words, in the process of sections B2+B3: the rolling brush absorbs the accumulated liquid; the scraping apparatus squeezes the liquid; the squeezed liquid is suctioned into the recycling pipeline to the second end; the liquid flows back to the liquid accumulation area for a longer time than that in the section A3; and then the liquid flows back to the rolling brush for absorption and squeezing, and so on. In section A3, the rolling brush does not move, the cleaning liquid in the recycling channel is less than that in section B2, and only the cleaning liquid needs to flow back and forth between the first and second ends of the recycling pipeline.

In a specific embodiment, the sum of the ON time of the main motor in section B2 and the OFF time in section B3 is indeed equal to the sum of the ON time of the main motor in section A2 and the OFF time in section A3 in this embodiment. Alternatively, the sum of the ON time of the main motor in section B2 and the OFF time in section B3 is greater than the sum of the ON time of the main motor in section A2 and the OFF time in section A3.

If the rolling brush washing phase is followed by a deep cleaning phase, the power of the main motor may be 90W in section B4 of the rolling brush washing phase, and the ON time of the main motor may not be too long and may, for example, be 5s. A part of the cleaning liquid is suctioned into the recycling bucket, thus avoiding excessive liquid accumulation in the subsequent deep cleaning phase. In section B4, the rolling brush also continues rotating to centrifuge away the excessive water. If the rolling brush washing phase is not followed by a deep cleaning phase, section B4 of the rolling brush washing phase may be replaced with section B5 in the above table. The power of the main motor is 90W, and the ON time needs to be prolonged to, for example, 65s or longer. The purpose is to recycle all the cleaning liquid to the recycling bucket, and to dry the rolling brush, the rolling brush chamber, and the recycling bucket to reduce the growth of bacteria.

It will be noted herein that the time, power and the like of each phase shown in the above table are only special examples. In essence, the above-mentioned time, power and the like can also be adjusted by a certain amount up and down based on actual conditions (such as the structure and size of the recycling pipeline). This embodiment is not specifically limited thereto. In the rolling brush washing phase, the liquid transportation apparatus always keeps off, and the rolling brush motor always keeps on, thereby the rolling brush continuously rotates.

If the rolling brush washing phase is followed by a deep cleaning phase, each phase shown in the table below may also be included after section B4 of the rolling brush washing phase. In other words, in Implementation 2 provided by the present disclosure, the self-cleaning method for a cleaning device is roughly divided into the following phases, as shown in Table 5:

**Table 5 Implementation 2**

| Phase | | | Main motor | Rollin g brush motor | Liquid transp ortatio n appara tus | Produc tion of steriliz ing liquid | Notes |
|---|---|---|---|---|---|---|---|
| Rolling brush soaking phase | Soaking prepar ation sectio n | A1 (14.65s) | OFF | OFF | ON | ON/O FF | The liquid transportation apparatus is turned on to accumulate water, and the rolling brush is soaked with the sterilizing liquid; the main motor is intermittently turned on and off to simulate a water flow continuously flushing back and forth to clean the recycling pipeline (during which the cleaning liquid will not flow into the recycling bucket) |
| | Soakin g washi ng sectio n | A2 (0.35s) | ON (20W) | OFF | ON | ON/O FF | |
| | | A3 (4.65s) | OFF | OFF | ON | ON/O FF | |
| | | A2 (0.35s) | ON (20W) | OFF | ON | ON/O FF | |
| | | A3 (4.65s) | OFF | OFF | ON | ON/O FF | |
| | | ... | | | | | |
| | Final sectio n | A4 (0.35s) | ON (20W) | OFF | ON | ON/O FF | |
| Rolling brush washin g phase | pre-wa shing sectio n | B1 (5s) | OFF | ON | OFF | ON/O FF | The liquid transportation apparatus is turned off, and the rolling brush motor is turned on to rotate the rolling brush; the main motor is intermittently turned on and off to simulate a water flow continuously flushing back and forth to clean the recycling pipeline (during which the cleaning liquid will not flow into the recycling bucket) |
| | mid-w ashing sectio n | B2 (0.3s) | ON (20W) | ON | OFF | ON/O FF | |
| | | B3 (4.7s) | OFF | ON | OFF | ON/O FF | |
| Drying phase | | B5 (65s) | ON (90W) | ON | OFF | ON/O FF | The rolling brush motor is turned on to rotate the rolling brush; the main motor is turned on to recycle and dry the cleaning liquid |
| Self-cleaning completion | | | OFF | OFF | OFF | OFF | |

As can be seen from the above table, the deep cleaning phase may be understood as a repeated washing process. In other words, the soaking preparation section, the soaking washing section, the final section, the pre-washing section, and the mid-washing section are sequentially implemented once, and then the drying phase namely section B5 is entered.

Implementation 3: The self-cleaning method for a cleaning device is roughly divided into the following phases: a sterilizing liquid production phase, a rolling brush soaking phase, a rolling brush washing phase, and a rolling brush drying phase. The specific cleaning process may be referred to Table 3 below.

**Table 6 Implementation 3**

| Phase | Electrolyti c module | Wate r pump | Floor brus h | Suctio n motor | Battery pack state | Notes | | Voice |
|---|---|---|---|---|---|---|---|---|
| The sterilizing liquid is produced for 30s | ON | OFF | OFF | OFF | Charging | Electrolytic production of the sterilizing liquid, non-skippable | | Self-cleaning starts, and the sterilizing liquid is being produced |
| A1 (0-15s) | ON | ON | OFF | OFF | Charging | Soaking of the rolling brush | | The rolling brush is being sterilized and soaked at the 3rd second |
| A2 (15-16s) | ON | ON | ON | 20w On | Dischargin g | | Flushing the pipeline | |
| A3 (16-17s) | ON | ON | OFF | OFF | | | | |
| B1 (17-27s) | ON | OFF | ON | OFF | | Rolling brush flushing | | The pipeline is being washed at the 20^{th} second |
| B2 (27-92s) | ON | OFF | ON | ON | | Rolling brush drying | | The rolling brush is being dried at the 25^{th} second |
| Self-cleaning completion | OFF | OFF | OFF | OFF | Charging | | | |

In actual self-cleaning, sections A2+A3 in Table 3 may be cycled 5-6 times, sections A1-B2 may be cycled 2 times, and wherein the sections A1-B2 cycled for the second time may be referred to as deep cleaning. Implementation 4 shown in Table 7 below is obtained:

**Table 7 Implementation 4**

| Phase | Electrolyti c module | Wate r pump | Floor brus h | Suctio n motor | Battery pack state | Notes | | Voice |
|---|---|---|---|---|---|---|---|---|
| The sterilizing liquid is produced for 30s | ON | OFF | OFF | OFF | Charging | Electrolytic production of the sterilizing liquid, non-skippable | | Self-cleaning starts, and the sterilizing liquid is being produced |
| A1 (0-15s) | ON | ON | OFF | OFF | Charging | Soaking the rolling brush | | The rolling brush is being sterilized and soaked at the 3^{rd} second |
| A2 (15-16s) | ON | ON | ON | 20w On | Dischargin g | | Flushing the pipeline | The rolling brush is being washed at the 13^{th} second |
| A3 (16-17s) | ON | ON | OFF | OFF | | | | |
| A2 (17-18s) | ON | ON | ON | 20w On | | | | |
| A3 (18-19s) | ON | ON | OFF | OFF | | | | |
| A2 (19-20s) | ON | ON | ON | 20w On | | | | |
| A3 (20-21s) | ON | ON | OFF | OFF | | | | |
| A2 (21-22s) | ON | ON | ON | 20w On | | | | |
| A3 (22-23s) | ON | ON | OFF | OFF | | | | |
| A2 (23-24s) | ON | ON | ON | 20w On | | | | |
| A3 (24-25s) | ON | ON | OFF | OFF | | | | |
| B1 (25-35s) | ON | OFF | ON | OFF | | Flushing the rolling brush | | The pipeline being washed at the 33^{rd} second |
| B2 (35-40s) | ON | OFF | ON | ON | | Drying the rolling brush | | |
| A1 (40-55s) | ON | ON | OFF | OFF | Charging | | | |
| A2 (55-56s) | ON | ON | ON | 20w On | Dischargin g | | Flushing the pipeline | Being deeply cleaned at the 53th second |
| A3 (56-57s) | ON | ON | OFF | OFF | | | | |
| A2 (57-58s) | ON | ON | ON | 20w On | | Soaking the rolling brush | | |
| A3 (58-59s) | ON | ON | OFF | OFF | | | | |
| A2 (59-60s) | ON | ON | ON | 20w On | | | | |
| A3 (60-61s) | ON | ON | OFF | OFF | | | | |
| A2 (61-62s) | ON | ON | ON | 20w On | | | | |
| A3 (62-63s) | ON | ON | OFF | OFF | | | | |
| A2 (63-64s) | ON | ON | ON | 20w On | | | | |
| A3 (64-65s) | ON | ON | OFF | OFF | | | | |
| B1 (65-75s) | ON | OFF | ON | OFF | | Flushing the rolling brush | | |
| B2 (75-140s) | ON | OFF | ON | ON | | Drying the rolling brush | | The rolling brush is being dried at the 73th second |
| Self-cleanin g completion | OFF | OFF | OFF | OFF | Charging | | | |

In both implementations 3 and 4, the voice broadcast function is added. It can be seen from Tables 6 and 7 that each voice broadcast moment and the corresponding voice contents to be broadcast at each voice broadcast moment are pre-configured. For example, a self-cleaning start moment (namely, 0s) of the cleaning device corresponds to the broadcast content "the sterilizing liquid is being produced". When the self-cleaning execution time of the cleaning device reaches 3s, a preset voice broadcast moment at the 3^{rd} second may be matched, and the content "the rolling brush is being sterilized and soaked" corresponding to this voice broadcast moment at the 3^{rd} second is broadcast. Sequentially, when the self-cleaning execution time of the cleaning device reaches 13s, it is broadcast that "the rolling brush is being sterilized and washed". When the self-cleaning execution time of the cleaning device reaches 33s, it is broadcast that "the pipeline is being washed". When the self-cleaning execution time of the cleaning device reaches 73s, it is broadcast that "the rolling brush is being dried".

In contrast to the foregoing solution, in Implementation 3 and Implementation 4 (namely, Tables 3 and 4 above), in phase A2, the floor brush is turned on, and in phase A3, the floor brush is turned off. This design facilitates the flow of the cleaning liquid in a water storage tank of the base and facilitates suctioning the cleaning liquid to a sewage suction pipeline. In addition, this design improves the sound quality in this step. If the floor brush is turned off in phase A2, the water will be stored in space surrounded by the rolling brush and the base, and is not conducive to flowing to other places. Moreover, the sound is harsh. After a floor brush motor is turned on, the water flows through the entire cavity under the drive of the rotation of the rolling brush, and the sound presented as a whole is softer.

Secondly, in Implementation 3 and Implementation 4, the time of phases A2 and A3 is changed to 1s. First, phase A2 lasts for 1s, and the operation power of the suction motor is 20w. Under such operation power and time of the main motor, at least part of the suctioned sewage should fall back (a small part of the suctioned sewage is allowed to enter the recycling bucket, as long as most of the suctioned sewage can fall back, thus achieving the purpose of flushing the recycling pipeline). Under the operation power of the main motor of 20w, the time of phase A2 may be in the range of 300ms to 1.5s. The time of phase A3 is not less than the time of phase A2, and it is necessary to ensure that the suctioned sewage has enough time to fall back to the base.

Furthermore, in Implementation 3 and Implementation 4, the rolling brush drying step in the first cycle lasts for 5 seconds. Here, because it is not the last drying phase, the time is relatively short, and the main purpose is to suction at least part of the water in the base into a sewage bucket. Also, the rolling brush is slightly fluffed to avoid water spilling after water spraying during deep cleaning process. Section B2 in the last cycle lasts 65s, mainly to enable the rolling brush to meet the drying requirements, and the time range is typically more than 1 min.

Also, in Implementation 3 and Implementation 4, in the self-cleaning sterilizing liquid production phase and phase A1, the battery is charged. In other phases, the battery is discharged.

Further, in Implementation 3 and Implementation 4, the initial step of self-cleaning is sterilizing the liquid production, and during the entire self-cleaning process, it is kept on to maintain sufficient sterilizing capacity. In addition, an ultraviolet lamp may be attached to the floor brush or base station, and the ultraviolet lamp faces the rolling brush to provide additional sterilizing capacity.

Furthermore, in Implementation 3 and Implementation 4, when self-cleaning starts, a voice "self-cleaning starts, and the sterilizing liquid is being produced" is played. At the 3^{rd} second of phase A1, a voice "the rolling brush is being sterilized and soaked" is played. The delayed playing at the 3^{rd} second (namely in phase A1) is to prevent the voice playing from causing the sound of the water pump to be abrupt. At the end of phase A1 (namely, just before the start of phase A2 in the first cycle), such as at the 13th second, a voice "the rolling brush is being sterilized and washed" is played to avoid the voice playing sound from being drowned out by the operating sound of the main motor. After entering phase B1 in the first cycle, a voice "the pipeline is being washed" is delayed, just like in phase A1, to prevent the operating sound of the floor brush motor from being abrupt when the voice is played. At the end of phase A1 in the second cycle (just before the start of phase A2), a voice "being deeply washed" is played to prevent the voice playing sound from being drowned out by the operating sound of the main motor. At the end of phase B1 for final rolling brush flushing (just before the start of B2), a voice "the rolling brush is being dried" is played to prevent the voice playing sound from being drowned out by the operating sound of the main motor.

In order to facilitate the understanding of the technical solutions of the present disclosure, specific application scenarios are provided below to describe in detail a self-cleaning method for a cleaning device according to the present disclosure.

### Application Scenario 1:

After the cleaning device has been operating for a period of time, the user finds that the cleaning device is dirty, and the user may manually trigger a self-cleaning control on the cleaning device. When the cleaning device is turned on, a sterilizing liquid is produced first, and after the production amount of the sterilizing liquid meets the demand, the process proceeds to a next phase or the sterilizing liquid is used while produced. After entering the next phase, the liquid transportation apparatus outputs the sterilizing liquid, and the main motor operates intermittently to generate a first intermittent suction force of a magnitude which does not cause the sterilizing liquid to flow into the recycling bucket. Under the action of the first suction force, the sterilizing liquid may be suctioned to the end of the recycling pipeline (as shown in FIG. 11a, the second end 220b communicating with the recycling bucket). After the first suction force is eliminated, the sterilizing liquid flows back from the end of the recycling pipeline to the bottom end of the recycling pipeline (as shown in FIG. 11a, the first end 220a communicating with the suction nozzle 40). By cyclically simulating a water flow that flushes the recycling pipeline back and forth, the cleaning effect on the recycling pipeline of the cleaning device can be effectively improved.

While the recycling pipeline is flushed in the above manner, the liquid transportation apparatus may output the sterilizing liquid to wet the rolling brush, and liquid is accumulated at the rolling brush. Then, the output of the sterilizing liquid is stopped, the rolling brush motor is turned on, the rolling brush rotates, and the scraping apparatus on the rolling brush quickly scrapes off dirt on the rolling brush. In this way, in the process of flushing the recycling pipeline, when the sterilizing liquid flows back to the bottom of the recycling pipeline, a cleaning effect of flushing the rolling brush can be achieved.

### Application Scenario 2

In the self-cleaning process of the cleaning device, in order to ensure the self-cleaning effect, the recycling pipeline may be deeply cleaned at least once by cycling the main motor to generate a first suction force, so as to ensure that the recycling pipeline is cleaned more completely and thoroughly.

From the description of the above implementations, those skilled in the art can clearly understand that each implementation may be implemented by means of software plus a necessary general hardware platform, and indeed by means of hardware. Based on this understanding, the technical solutions, in essence or in part contributing to the prior art, may be embodied in the form of a software product that may be stored in a computer readable storage medium, such as a ROM/RAM, a disk, and an optical disk, including a number of instructions for causing a computer apparatus (which may be a personal computer, server, or network apparatus, etc.) to perform the methods described in various embodiments or parts of embodiments.

Finally, it will be explained that the above embodiments are only used to illustrate the technical solutions of the present disclosure without limitation. Although the present disclosure has been described in detail with reference to the aforementioned embodiments, it will be appreciated by those of ordinary skill in the art that the technical solutions recorded in the aforementioned embodiments may still be modified, or some technical features may be equivalently substituted. However, these modifications or substitutions do not make the essence of the corresponding technical solutions deviate from the spirit and scope of the technical solutions of the embodiments of the present disclosure.

## Claims

1. A charging and discharging method for a cleaning device, comprising:
operating in a self-cleaning mode to clean a self-cleaning object of the cleaning device; and
supplying at least part of a current from a charging power supply to a workload in the self-cleaning mode.

2. The method according to claim 1, wherein the supplying at least part of a current from a charging power supply to a workload in the self-cleaning mode comprises:
obtaining a state information of the cleaning device;
supplying the current from the charging power supply and a current output by a battery of the cleaning device to the workload when the state information meets a first preset condition; or
supplying a part of the current from the charging power supply to the workload and supplying a residual current from the charging power supply to charge the battery of the cleaning device when the state information meets a second preset condition.

3. The method according to claim 2, wherein the state information comprises: a first current corresponding to the workload in the self-cleaning mode; and
the method further comprises:
obtaining a total current from the charging power supply;
determining that the first preset condition is met if the first current exceeds the total current; or
determining that the second preset condition is met if the first current is less than or equal to the total current.

4. The method according to claim 1, wherein supplying at least part of a current from a charging power supply to a workload in the self-cleaning mode comprises:
obtaining a phase information of a phase in which the cleaning device is in the self-cleaning mode; and
supplying a part of the current from the charging power supply to the workload and supplying a residual current from the charging power supply to charge the battery of the cleaning device when the phase information meets a third preset condition; or
discharging the battery of the cleaning device to supply electrical energy to the workload when the phase information meets a fourth preset condition.

5. The method according to claim 4, wherein the self-cleaning mode comprises a preparation phase and a washing phase, the preparation phase comprising: producing a sterilizing liquid, accumulating the sterilizing liquid, and soaking the self-cleaning object in the sterilizing liquid; and
the method further comprises:
determining that the third preset condition is met if the phase information relates to the preparation phase; or
determining that the fourth preset condition is met if the phase information relates to the washing phase.

6. The method according to claim 1, further comprising:
detecting a remaining charge level of the battery of the cleaning device;
discharging the battery of the cleaning device to supply power to the workload in the self-cleaning mode when the remaining charge level is greater than or equal to a set threshold; and
triggering the step of supplying at least part of the current from the charging power supply to the workload in the self-cleaning mode when the remaining charge level is less than the set threshold.

7. A charging and discharging method for a cleaning device, comprising:
operating in a self-cleaning mode to clean a self-cleaning object of the cleaning device, wherein the self-cleaning mode comprises multiple phases; and
charging a battery of the cleaning device with a current from a charging power supply in at least part of phases among the multiple phases.

8. The method according to claim 7, wherein the multiple phases comprise a preparation phase and a washing phase; and
charging a battery of the cleaning device with a current from a charging power supply in at least part of phases among the multiple phases comprises:
obtaining a phase information of a phase in which the cleaning device is in the self-cleaning mode; and
supplying a part of the current from the charging power supply to a workload and supplying a residual current from the charging power supply to charge the battery of the cleaning device when the phase information relates to the preparation phase.

9. The method according to claim 7 or 8, further comprising:
supplying the current from the charging power supply and a current output by the battery of the cleaning device to the workload when the phase information relates to the washing phase; or
discharging the battery of the cleaning device to supply power to the workload in the self-cleaning mode when the phase information relates to the washing phase.

10. A charging and discharging method for a cleaning device, comprising:
operating in a self-cleaning mode to clean a self-cleaning object of the cleaning device, wherein the self-cleaning mode comprises multiple phases;
determining, in at least part of phases among the multiple phases, at least one load operating in a current phase of the cleaning device; and
selecting corresponding power supplies for the at least one load from a plurality of power supplies,
wherein the plurality of power supplies comprise a power supply from the charging power supply and a battery of the cleaning device.

11. The method according to claim 10, wherein selecting corresponding power supplies for the at least one load from a plurality of power supplies comprises:
obtaining energy consumption attributes of the at least one load; and
selecting power supplies adapted to the respective energy consumption attributes for the at least one load from the plurality of power supplies.

12. The method according to claim 10, wherein loads operating in the same phase comprise at least a first load and a second load; and
selecting corresponding power supplies for the at least one load from a plurality of power supplies comprises:
selecting different power supplies for the first load and the second load from the plurality of power supplies.

13. The method according to claim 10, wherein the multiple phases comprise at least a first phase and a second phase; a power supply corresponding to the first phase is different from a power supply corresponding to the second phase; and
selecting corresponding power supplies for the at least one load from a plurality of power supplies comprises:
determining, from the plurality of power supplies, a power supply corresponding to a current phase of the cleaning device; and
selecting the power supply corresponding to the current phase of the cleaning device for the at least one load.

14. A cleaning system, comprising:
a base equipped with a first electrical connection port, which is electrically connectable to a charging power supply via an electrical connector; and
a cleaning device equipped with a controller and a second electrical connection port, the controller being electrically connected to the second electrical connection port, and the second electrical connection port being electrically connected to the first electrical connection port when the cleaning device is docked on the base;
wherein the controller is configured to perform the steps of the method according to any one of claims 1 to 6, or the steps of the method according to any one of claims 7 to 9, or the steps of the method according to any one of claims 10 to 13.

15. A self-cleaning method for a cleaning device, applicable to a control apparatus for the cleaning device, the cleaning device further comprising: a liquid transportation apparatus, a main motor, and a self-cleaning object, and the method comprising:
controlling the liquid transportation apparatus to operate to output a cleaning liquid; and
controlling the main motor to operate to generate a dynamically-changed suction force, thereby the cleaning liquid flows under the action of the dynamically-changed suction force to wash the self-cleaning object.

16. The method according to claim 15, wherein the self-cleaning object comprises a rolling brush, and the cleaning device further comprises a driving apparatus; and
controlling the liquid transportation apparatus to operate to output a cleaning liquid comprises:
a rolling brush wetting phase: controlling the liquid transportation apparatus to output the cleaning liquid to the rolling brush to wet the rolling brush;
a liquid transportation stopping and rolling brush rotating phase: controlling the liquid transportation apparatus to stop operating, and controlling the driving apparatus to operate to drive the rotation of the rolling brush, thereby attachments and liquid on the rolling brush are scraped off to a liquid accumulation area by a scraping apparatus on the cleaning device; and
cycling, in the presence of a cycle requirement, the rolling brush wetting phase and the liquid transportation stopping and rolling brush rotating phase according to the cycle requirement.

17. The method according to claim 15 or 16, wherein the self-cleaning object further comprises a recycling pipeline, and
the method further comprises:
controlling the main motor to generate a continuous suction force for suctioning the cleaning liquid, thereby the flowing cleaning liquid flushes the recycling pipeline through which the cleaning liquid flows, and flows into a recycling bucket of the cleaning device; and
controlling a cleaning liquid transportation amount of the liquid transportation apparatus, and triggering the step of controlling the main motor to operate to generate a dynamically-changed suction force, thereby the cleaning liquid flows under the action of the dynamically-changed suction force to wash the recycling pipeline.

18. The method according to claim 15, wherein generating a dynamically-changed suction force comprises at least one of the following:
controlling the main motor to switch between at least two powers to generate a suction force with a changed magnitude;
controlling the main motor to intermittently turn on and off to generate an intermittent suction force; and
controlling a fan in the main motor to switch between forward rotation and reverse rotation to generate a changed force by the action of the suction and reverse blow.

19. The method according to any one of claims 15 to 18, wherein the cleaning device further comprises a sterilizing liquid production apparatus; and the method comprises:
controlling the sterilizing liquid production apparatus to operate to produce a sterilizing liquid, and using the sterilizing liquid as a cleaning liquid or spraying the sterilizing liquid to the self-cleaning object after the self-cleaning object has been cleaned.

20. The method according to claim 19, further comprising:
controlling the liquid transportation apparatus to stop outputting the cleaning liquid after the self-cleaning object has been cleaned;
controlling the cleaning device to generate a dry airflow to dry the self-cleaning object; and
controlling the liquid transportation apparatus to spray the sterilizing liquid to the self-cleaning object.

21. The method according to claim 20, further comprising:
detecting the cleanliness of the self-cleaning object, and determining that the self-cleaning object has been cleaned if the cleanliness meets a set requirement; or
determining that the self-cleaning object has been cleaned when the cleaning time reaches a preset self-cleaning time.

22. The method according to claim 21, further comprising:
monitoring the dirtiness of the self-cleaning object when the cleaning time reaches a first time; and
adjusting at least one of an output amount of the cleaning liquid, a dynamically changed control schedule of the suction force, a time corresponding to the rolling brush wetting phase, and a time corresponding to the liquid transportation stopping and rolling brush rotating phase if the dirtiness is greater than a first preset value,
wherein the first time is less than the preset self-cleaning time.

23. The method according to claim 22, further comprising:
detecting the dirtiness of the self-cleaning object;
obtaining a length of time from the end of a previous self-cleaning process of the self-cleaning object to the current moment; and
determining a self-cleaning parameter according to at least one of the dirtiness and the length of time,
wherein the self-cleaning parameter comprises at least one of a production amount of the sterilizing liquid, an output amount of the sterilizing liquid to be output, a self-cleaning time, and a dynamically changed control schedule of the suction force.

24. A self-cleaning method for a cleaning device, applicable to a control apparatus for the cleaning device, the cleaning device further comprising a liquid transportation apparatus, a driving apparatus, and a rolling brush, and the method comprising:
a rolling brush wetting phase: controlling the liquid transportation apparatus to output a cleaning liquid to the rolling brush to wet it; and
a liquid transportation stopping and rolling brush rotating phase: controlling the liquid transportation apparatus to stop operating, and controlling the driving apparatus to operate to drive the rotation of the rolling brush, thereby attachments and liquid on the rolling brush are scraped off to a liquid accumulation area by a scraping apparatus on the cleaning device.

25. The method according to claim 24, wherein the cleaning device further comprises a main motor, a recycling bucket, and a recycling pipeline, and the method further comprises:
a recycling pipeline washing phase: after the liquid transportation stopping and rolling brush rotating phase, controlling the liquid transportation apparatus to output the cleaning liquid, controlling the main motor and the driving apparatus to operate, so that the liquid accumulated in the liquid accumulation area can be suctioned into the recycling bucket; and
a rolling brush dewatering phase: controlling the liquid transportation apparatus to stop operating and the main motor and the driving apparatus to continue operating, so that the rolling brush is dewatered.

26. The method according to claim 24, wherein the cleaning device further comprises a main motor, a recycling bucket, and a recycling pipeline, and the method further comprises:
a rolling brush dewatering and recycling phase: after the liquid transportation stopping and rolling brush rotating phase, controlling the main motor and the driving apparatus to operate, so that the rolling brush is dewatered and the accumulated liquid is recycled to the recycling bucket via the recycling pipeline.

27. The method according to any one of claims 24 to 26, wherein before the rolling brush wetting phase, the method further comprises:
a sterilizing liquid production phase: controlling a sterilizing liquid production apparatus to operate to generate a sterilizing liquid; and
keeping the sterilizing liquid production apparatus operating in at least one phase after the sterilizing liquid production phase.

28. The method according to claim 24, further comprising:
detecting the dirtiness of the rolling brush; and
determining at least one self-cleaning parameter according to the dirtiness,
wherein the self-cleaning parameter comprises at least one of an output amount of the cleaning liquid, a operating time of the liquid transportation apparatus, a rotation speed of the rolling brush, and the number of cycles of the rolling brush wetting phase and the liquid transportation stopping and rolling brush rotating phase.

29. The method according to claim 25 or 26, further comprising:
controlling the main motor to generate a dynamically-changed suction force, thereby the cleaning liquid flows under the action of the dynamically-changed suction force, to simulate a water flow cleaning the recycling pipeline.

30. A cleaning device, comprising:
a liquid transportation apparatus configured to output a cleaning liquid;
a main motor configured to generate a suction force;
a cleaning assembly configured to serve as a self-cleaning object when the cleaning device operates in a self-cleaning mode and as a cleaning executer when the cleaning device operates in an external cleaning mode; and
a control apparatus electrically connected to the liquid transportation apparatus and the main motor, and configured to perform the self-cleaning method according to any one of claims 15 to 29.

31. A self-cleaning method for a cleaning device, the cleaning device comprising a suction nozzle, a main motor, a recycling bucket, and a recycling pipeline, wherein a first end of the recycling pipeline is communicated with the suction nozzle, and a second end of the recycling pipeline is communicated with the recycling bucket; and the method comprises washing the recycling pipeline;
washing the recycling pipeline comprises:
turning on the main motor to operate at a first power for suctioning a cleaning liquid via the suction nozzle and suctioning at least part of the cleaning liquid from the first end to the second end, the first power being less than a recycling power, and the main motor operating at the recycling power to implement the suction of the cleaning liquid into the recycling bucket; and
turning off the main motor, thereby the cleaning liquid in the recycling pipeline flows back from the second end to the first end to wash the recycling pipeline with the reciprocating flowing cleaning liquid.

32. The method according to claim 31, wherein washing the recycling pipeline further comprises:
cyclically turning on and off the main motor according to a cycle requirement, thereby the cleaning liquid reciprocates in the recycling pipeline repeatedly.

33. The method according to claim 31 or 32, wherein the cleaning device has a plurality of self-cleaning phases during the self-cleaning process; and
washing the recycling pipeline further comprises:
determining at least one main motor control parameter based on the current self-cleaning phase of the cleaning device,
the at least one main motor control parameter comprises: an ON time, a power, an OFF time, and a cycle requirement.

34. The method according to claim 31 or 32, wherein the cleaning device further comprises a liquid transportation apparatus; and
the method further comprises:
controlling the liquid transportation apparatus to operate to output the cleaning liquid;
determining whether a liquid satisfying a set requirement is accumulated; and
triggering the step of washing the recycling pipeline if the liquid satisfying the set requirement is accumulated,
wherein the set requirement comprises at least one of the following: a cleaning liquid output time of the liquid transportation apparatus reaches a preset time, and a liquid accumulation depth reaches a threshold.

35. The method according to claim 31, wherein the cleaning device further comprises
a rolling brush; the cleaning device has a rolling brush soaking phase during the self-cleaning process, and the rolling brush soaking phase comprises a wetting preparation section, a soaking washing section, and a final section; and
the method further comprises:
obtaining liquid transportation apparatus control parameters and main motor control parameters corresponding to the respective sections in the rolling brush soaking phase;
controlling, in the wetting preparation section, the liquid transportation apparatus to operate according to the liquid transportation apparatus control parameters corresponding to the wetting preparation section to wet the rolling brush and form the accumulated liquid;
controlling, in the soaking washing section, the liquid transportation apparatus to operate according to the liquid transportation apparatus control parameters corresponding to the soaking washing section, and triggering the step of washing the recycling pipeline according to the main motor control parameters corresponding to the soaking washing section, wherein the main motor control parameters corresponding to the soaking washing section comprise a main motor ON-OFF cycle requirement, an ON time, and an OFF time; and
controlling, in the final section, the liquid transportation apparatus to operate according to the liquid transportation apparatus control parameters corresponding to the final section, and turning on the main motor to operate at the first power according to the main motor control parameters corresponding to the final section.

36. The method according to claim 35, wherein the ON time in the main motor control parameter corresponding to the soaking washing section is less than the OFF time.

37. The method according to claim 35, wherein the cleaning device further comprises a rolling brush motor, the cleaning device further has a rolling brush washing phase during the self-cleaning process, the rolling brush washing phase comprises an pre-washing section, a mid-washing section, and a recycling section; and
the method further comprises:
obtaining main motor control parameters corresponding to the respective sections in the rolling brush washing phase;
turning on the rolling brush motor to operate in the pre-washing section to drive the rotation of the rolling brush, and turning off the main motor according to the main motor control parameters corresponding to the pre-washing section, thereby the accumulated liquid in the final section, which is suctioned to the second end, flows back to the first end;
turning on the rolling brush motor to operate in the mid-washing section to drive the rotation of the rolling brush, and triggering the step of washing the recycling pipeline according to the main motor control parameters corresponding to the mid-washing section, wherein the main motor control parameters corresponding to the mid-washing section comprises a main motor ON-OFF cycle requirement, an ON time, and an OFF time; and
turning on the rolling brush motor to operate in the recycling section to drive the rotation of the rolling brush, and turning on the main motor to operate at a second power according to the main motor control parameters corresponding to the recycling section, for suctioning at least part of the accumulated liquid to the recycling bucket, the second power being greater than or equal to the recycling power.

38. The method according to claim 37, wherein the main motor control parameters corresponding to the pre-washing section comprise an OFF time; and
the OFF time corresponding to the pre-washing section is greater than the OFF time included in the main motor control parameters corresponding to the soaking washing section.

39. The method according to claim 37, wherein the main motor control parameters corresponding to the mid-washing section comprise an ON time and an OFF time;
the ON time corresponding to the mid-washing section is less than the ON time included in the main motor control parameters corresponding to the soaking washing section; and
the sum of the ON time and the OFF time corresponding to the mid-washing section is equal to the sum of the ON time and the OFF time corresponding to the soaking washing section.

40. The method according to claim 37, wherein the main motor control parameters corresponding to the recycling section comprise an ON time;
the ON time corresponding to the recycling section is greater than the OFF time included in the main motor control parameters corresponding to the soaking washing section; or
the ON time corresponding to the recycling section is greater than the OFF time corresponding to the mid-washing section.

41. The method according to any one of claims 37 to 40, further comprising:
triggering a deep cleaning phase at the end of the recycling section to sequentially implement the wetting preparation section, the soaking washing section, the final section, the pre-washing section, and the mid-washing section;
triggering to implement a drying phase at the end of the mid-washing section in the deep cleaning phase; and
turning on the rolling brush motor to operate to drive the rotation of the rolling brush in the drying phase, and turning on the main motor to operate at the second power according to the main motor control parameters corresponding to the drying phase, so as to recycle the accumulated liquid into the recycling bucket and dry the rolling brush.

42. The method according to claim 41, wherein the main motor parameters corresponding to the drying phase comprise an ON time; and
the ON time corresponding to the drying phase is greater than the ON time corresponding to the recycling section.

43. The method according to claim 42, wherein the ON time corresponding to the drying phase is greater than or equal to 1 min.

44. The method according to claim 31, further comprising:
obtaining a plurality of preset voice broadcast moments and voice broadcast contents corresponding to these moments;
determining a self-cleaning execution time of the cleaning device; and
broadcasting, when the self-cleaning execution time matches with a target moment among the plurality of preset voice broadcast moments, the voice broadcast content corresponding to the target moment.

45. The method according to claim 31, wherein the cleaning device has a rolling brush soaking phase during the self-cleaning process; and
washing the recycling pipeline comprises:
washing the recycling pipeline in the rolling brush soaking phase.

46. The method according to claim 31, wherein the cleaning device further comprises a rolling brush, and the method further comprises:
soaking the rolling brush;
washing the rolling brush; and
drying the rolling brush,
wherein the recycling pipeline is washed within at least one of the periods of soaking the rolling brush and washing the rolling brush; and
a sterilizing liquid is produced within at least one of the periods of soaking the rolling brush, washing the rolling brush, and drying the rolling brush, thereby a cleaning liquid used for soaking or washing is the sterilizing liquid.

47. The method according to claim 31, further comprising:
turning on a rolling brush motor of the cleaning device to operate, during the period of turning on the main motor to operate at the first power, so as to drive the rotation of a rolling brush.

48. The method according to claim 31, further comprising:
turning on a rolling brush motor of the cleaning device to operate, during the period of turning off the main motor, so as to drive the rotation of a rolling brush.

49. The method according to claim 31, further comprising: washing the rolling brush; and drying the rolling brush,
wherein washing the rolling brush comprises: turning on a rolling brush motor to operate to drive the rotation of the rolling brush; and
drying the rolling brush comprises: turning on the rolling brush motor to operate to drive the rotation of the rolling brush, and turning on the main motor to operate at a second power.

50. A cleaning device, comprising:
a floor brush with a suction nozzle;
a recycling bucket communicated with the suction nozzle via a recycling pipeline, wherein a first end of the recycling pipeline is communicated with the suction nozzle, and a second end of the recycling pipeline is communicated with the recycling bucket;
a main motor configured to generate a suction force; and
a control apparatus electrically connected to the main motor, and configured to perform the steps of the self-cleaning method according to any one of claims 31 to 49.
